(19) Europäisches Patentamt
European Patent Office
Office européen des brevets

(11) **EP 3 131 253 A1**

(12) **EUROPEAN PATENT APPLICATION**
published in accordance with Art. 153(4) EPC

(43) Date of publication:
**15.02.2017 Bulletin 2017/07**

(21) Application number: **15776559.5**

(22) Date of filing: **08.04.2015**

(51) Int Cl.:
**H04L 29/06** *(2006.01)*    **H04L 7/00** *(2006.01)*

(86) International application number:
**PCT/KR2015/003537**

(87) International publication number:
**WO 2015/156607 (15.10.2015 Gazette 2015/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **09.04.2014 US 201461977584 P**

(71) Applicant: **LG Electronics Inc.**
**Yeongdeungpo-gu**
**Seoul 07336 (KR)**

(72) Inventors:
• **OH, Sejin**
**Seoul 137-893 (KR)**

• **KO, Woosuk**
**Seoul 137-893 (KR)**
• **KWON, Woosuk**
**Seoul 137-893 (KR)**
• **LEE, Jangwon**
**Seoul 137-893 (KR)**
• **HONG, Sungryong**
**Seoul 137-893 (KR)**
• **MOON, Kyoungsoo**
**Seoul 137-893 (KR)**

(74) Representative: **Cabinet Plasseraud**
**66 rue de la Chaussée d'Antin**
**75440 Paris Cedex 09 (FR)**

(54) **METHOD AND APPARATUS FOR TRANSMITTING/RECEIVING BROADCAST SIGNAL**

(57)    A transmitter, according to one embodiment of the present invention, comprises: a data encoder for generating a segment which transmits a portion of data included in a media; a packet encoder for generating a packet which divides the segment into one or more data units, and includes a payload which comprises a header and all or a portion of the data of the data unit; and a broadcast signal transmitting unit for generating a broadcast signal which includes the packet, and transmitting the broadcast signal, wherein the header includes a transport object identifier (TOI) element, and the TOI c elementomprises a data unit identification element which identifies the data unit, and a segment identification element which identifies the segment including the data transmitted in the payload.

FIG. 40

**Description**

[Technical Field]

The present invention relates to a method and apparatus for transmitting and receiving a media signal, and more particularly, to a method and apparatus for processing data of media transmitted in a broadband and broadcast in a broadcast system with a combination of a broadband and broadcast.

[Background Art]

In a digital broadcast system, transmission and reception of IP-based broadcast signals have been extended. In particular, in mobile digital broadcast such as DVB-NGH of European broadcast standards or ATSC-MH of North American standards, importance of an environment for transmission and reception of IP-based broadcast signals has been emphasized. In addition, in a next-generation broadcast system, it is predicted that a service with interaction between a broadcast network and the Internet, that is, a so-called hybrid broadcast system will be established.
A hybrid broadcast system uses both a method of transmitting data through a typical broadcast network and a method of transmitting data through a broadband network and, thus, there is a problem in that a method for processing these data is different from a typical broadcast receiver.
In addition, the hybrid broadcast system generates one media using both the data transmitted through the broadcast network and the data transmitted through the broadband network. In this procedure, there is a problem in that the data transmitted through the broadcast network and the data transmitted through the broadband network may have different timings and may not be synchronized with each other.

[Disclosure]

[Technical Problem]

An object of the present invention devised to solve the problem lies in a method and apparatus for appropriately processing data because a hybrid broadcast system uses a both a method of transmitting data through a typical broadcast network and a method of transmitting data through a broadband network.
An object of the present invention devised to solve the problem lies in a method and apparatus for appropriately matching timing and synchronization between data transmitted through a broadcast network and data transmitted through a broadband network while a hybrid broadcast system generates one media using both the data transmitted through the broadcast network and the data transmitted through the broadband network.

[Technical Solution]

The object of the present invention can be achieved by providing a transmitting apparatus including a data encoder configured to generate a segment for transmitting a portion of data included in media, a packet encoder configured to divide the segment into one or more data units and to generate a packet including a header and a payload including all or some data of the data unit, and a broadcast signal transmitter configured to generate a broadcast signal including the packet and to transmit the broadcast signal, wherein the header includes a transport object identifier (TOI) element and the TOI element includes a segment identification element for identifying the segment including data transmitted in the payload and a data unit identification element for identifying the data unit.
The data encoder may correspond to a dynamic adaptive streaming over hypertext transfer protocol (HTTP) (DASH) encoder and generates media presentation description (MPD), and the transmitting apparatus may further include one or more of a network time protocol (NTP) server configured to generate NTP information using information on reference time of a broadcast transmitter and to generate an NTP packet including the NTP information, a timeline packet configured to generate a timeline packet including information on synchronization of media or synchronization of reference time between a broadcast system and a broadcast receiver, an HTTP server configured to process a response to a request for MPD or process a response to data about media such as a segment, a wall clock processor configured to process and provide the information on the reference time of the broadcast transmitter, and a signaling encoder configured to generate signaling information.
The data unit may correspond to a chunk, the segment may correspond to an ISO base media file format (ISO BMFF) file, and the packet may correspond to an ALC/LCT+ packet.
The header may further include a priority element indicating priority of data included in the packet.
The header of the payload may further include an EXT_OBJ_OFFSET element indicating offset of a time point in which the data unit is transmitted in the segment from a start portion of the segment.

The header may further include a transport session identifier (TSI) element and the TSI element identifies a track to which the segment belongs.

The header may further include an EXT_OBJ_PTS element indicating presentation timestamp (PTS) of the data unit and an EXT_OBJ_LOCATION element for identifying a location of the data unit.

In another aspect of the present invention, provided herein is a receiving apparatus including a tuner configured to receive a broadcast signal including one or more packets, an ALC/LCT+ client configured to parse the one or more packet, the packet including a header and a payload including all or some data of the data unit, a dynamic adaptive streaming over hypertext transfer protocol (HTTP) (DASH) client configured to extract one or more data units from the one or more packets and to transmit a portion of data included in media, and a media encoder configured to decode media using the segment, wherein the header includes a transport object identifier (TOI) element and the TOI element includes a segment identification element for identifying the segment including data transmitted in the payload and a data unit identification element for identifying the data unit.

The receiving apparatus may further include an HTTP access client configured to process a request of the DASH client, to transmit the request to an HTTP server, to receive a response to the request from the HTTP server, and to transmit the response to the DASH client, wherein the DASH client may synchronize a segment included in the response with the generated segment.

The data unit may correspond to a chunk, the segment may correspond to an ISO base media file format (ISO BMFF) file, and the packet may correspond to an ALC/LCT+ packet.

The header may further include a priority element indicating priority of data included in the packet.

The header of the payload may further include an EXT_OBJ_OFFSET element indicating offset of a time point in which the data unit is transmitted in the segment from a start portion of the segment.

The header may further include a transport session identifier (TSI) element and the TSI element identifies a track to which the segment belongs.

The header may further include an EXT_OBJ_PTS element indicating presentation timestamp (PTS) of the data unit and an EXT_OBJ_LOCATION element for identifying a location of the data unit.

[Advantageous Effects]

According to the present invention, in a hybrid broadcast system, data transmitted in a typical broadcast network and data transmitted through a broadband network may be effectively processed together.

According to the present invention, timing and synchronization between data transmitted in a broadcast network and data transmitted through a broadband network may be effectively matched.

[Description of Drawings]

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates a structure of an apparatus for transmitting broadcast signals for future broadcast services according to an embodiment of the present invention.

FIG. 2 illustrates an input formatting block according to one embodiment of the present invention.

FIG. 3 illustrates an input formatting block according to another embodiment of the present invention.

FIG. 4 illustrates a BICM block according to an embodiment of the present invention.

FIG. 5 illustrates a BICM block according to another embodiment of the present invention.

FIG. 6 illustrates a frame building block according to one embodiment of the present invention.

FIG. 7 illustrates an OFDM generation block according to an embodiment of the present invention.

FIG. 8 illustrates a structure of an apparatus for receiving broadcast signals for future broadcast services according to an embodiment of the present invention.

FIG. 9 illustrates a frame structure according to an embodiment of the present invention.

FIG. 10 illustrates a signaling hierarchy structure of the frame according to an embodiment of the present invention.

FIG. 11 illustrates preamble signaling data according to an embodiment of the present invention.

FIG. 12 illustrates PLS1 data according to an embodiment of the present invention.

FIG. 13 illustrates PLS2 data according to an embodiment of the present invention.

FIG. 14 illustrates PLS2 data according to another embodiment of the present invention.

FIG. 15 illustrates a logical structure of a frame according to an embodiment of the present invention.

FIG. 16 illustrates PLS mapping according to an embodiment of the present invention.

FIG. 17 illustrates EAC mapping according to an embodiment of the present invention.

FIG. 18 illustrates FIC mapping according to an embodiment of the present invention.

FIG. 19 illustrates an FEC structure according to an embodiment of the present invention.

FIG. 20 illustrates a time interleaving according to an embodiment of the present invention.

FIG. 21 illustrates the basic operation of a twisted row-column block interleaver according to an embodiment of the present invention.

FIG. 22 illustrates an operation of a twisted row-column block interleaver according to another embodiment of the present invention.

FIG. 23 illustrates a diagonal-wise reading pattern of a twisted row-column block interleaver according to an embodiment of the present invention.

FIG. 24 illustrates interlaved XFECBLOCKs from each interleaving array according to an embodiment of the present invention.

FIG. 25 is a diagram illustrating a hybrid broadcast receiver according to an embodiment of the present invention.

FIG. 26 is a diagram illustrating an operation of service scanning by a hybrid broadcast receiver according to an embodiment of the present invention.

FIG. 27 is a diagram illustrating a service selection operation by a hybrid broadcast receiver according to an embodiment of the present invention.

FIG. 28 is a diagram illustrating a service selection operation by a hybrid broadcast receiver according to an embodiment of the present invention.

FIG. 29 is a diagram illustrating a service selection operation by a hybrid broadcast receiver according to another embodiment of the present invention.

FIG. 30 is a block diagram of a hybrid broadcast receiver according to an embodiment of the present invention.

FIG. 31 is a diagram illustrating a service selection operation by a hybrid broadcast receiver according to another embodiment of the present invention.

FIG. 32 is a diagram illustrating a service selection operation by a hybrid broadcast receiver according to another embodiment of the present invention.

FIG. 33 is a diagram illustrating an operation of service selection operation by a hybrid broadcast receiver according to another embodiment of the present invention.

FIG. 34 is a diagram illustrating a service selection operation by a hybrid broadcast receiver according to another embodiment of the present invention.

FIG. 35 illustrates a diagram illustrating an operation of an ALC/LCT+ client according to an embodiment of the present invention.

FIG. 36 is a diagram illustrating an ISO BMFF file according to an embodiment of the present invention.

FIG. 37 is a diagram illustrating an application layer transmission protocol packet according to an embodiment of the present invention.

FIG. 38 is a diagram illustrating an application layer transmission protocol packet when a TSI is mapped to one track and a TOI is mapped to one chunk, according to an embodiment of the present invention.

FIG. 39 is a diagram illustrating setting of characteristics of boxes in an ISO BMFF file in an application layer transmission protocol packet when a TSI is mapped to one track and a TOI is mapped to one chunk, according to an embodiment of the present invention.

FIG. 40 is a diagram illustrating transmission and reception of an application layer transmission protocol packet according to an embodiment of the present invention.

FIG. 41 is a diagram illustrating a structure of an application layer transmission protocol packet according to an embodiment of the present invention.

FIG. 42 is a diagram illustrating processing of an application layer transmission protocol packet according to an embodiment of the present invention.

FIG. 43 is a diagram illustrating a broadcast system according to an embodiment of the present invention.

FIG. 44 is a diagram illustrating timing of processing of a segment in a broadcast system according to an embodiment of the present invention.

FIG. 45 is a diagram illustrating an operation of a broadcast system when MPD is used both in a broadband and broadcast according to an embodiment of the present invention.

FIG. 46 is a timing diagram of processing of a segment in a broadcast system according to another embodiment of the present invention.

FIG. 47 is a diagram illustrating a broadcast system when MPD is used only in a broadband according to another embodiment of the present invention.

FIG. 48 is a diagram illustrating timing of processing of a segment in a broadcast system according to another embodiment of the present invention.

FIG. 49 is a diagram illustrating a broadcast system when MPD is used only in a broadband according to another embodiment of the present invention.

FIG. 50 is a diagram illustrating timing of processing of a segment in a broadcast system according to another embodiment of the present invention.

FIG. 51 is a flowchart illustrating a sequence for transmitting and processing a broadcast signal and a sequence for receiving and processing a broadcast signal according to an embodiment of the present invention.

FIG. 52 is a diagram illustrating a transmitter and a receiver according to an embodiment of the present invention.

[Best Mode]

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention.

Although most terms of elements in this specification have been selected from general ones widely used in the art taking into consideration functions thereof in this specification, the terms may be changed depending on the intention or convention of those skilled in the art or the introduction of new technology. Some terms have been arbitrarily selected by the applicant and their meanings are explained in the following description as needed. Thus, the terms used in this specification should be construed based on the overall content of this specification together with the actual meanings of the terms rather than their simple names or meanings.

The term "signaling" in the present invention may indicate that service information (SI) that is transmitted and received from a broadcast system, an Internet system, and/or a broadcast/Internet convergence system. The service information (SI) may include broadcast service information (e.g., ATSC-SI and/or DVB-SI) received from the existing broadcast systems.

The term "broadcast signal" may conceptually include not only signals and/or data received from a terrestrial broadcast, a cable broadcast, a satellite broadcast, and/or a mobile broadcast, but also signals and/or data received from bidirectional broadcast systems such as an Internet broadcast, a broadband broadcast, a communication broadcast, a data broadcast, and/or VOD (Video On Demand).

The term "PLP" may indicate a predetermined unit for transmitting data contained in a physical layer. Therefore, the term "PLP" may also be replaced with the terms 'data unit' or 'data pipe' as necessary.

A hybrid broadcast service configured to interwork with the broadcast network and/or the Internet network may be used as a representative application to be used in a digital television (DTV) service. The hybrid broadcast service transmits, in real time, enhancement data related to broadcast A/V (Audio/Video) contents transmitted through the terrestrial broadcast network over the Internet, or transmits, in real time, some parts of the broadcast A/V contents over the Internet, such that users can experience a variety of contents.

The present invention provides apparatuses and methods for transmitting and receiving broadcast signals for future broadcast services. Future broadcast services according to an embodiment of the present invention include a terrestrial broadcast service, a mobile broadcast service, a UHDTV service, etc. The present invention may process broadcast signals for the future broadcast services through non-MIMO (Multiple Input Multiple Output) or MIMO according to one embodiment. A non-MIMO scheme according to an embodiment of the present invention may include a MISO (Multiple Input Single Output) scheme, a SISO (Single Input Single Output) scheme, etc.

While MISO or MIMO uses two antennas in the following for convenience of description, the present invention is applicable to systems using two or more antennas. The present invention may defines three physical layer (PL) profiles - base, handheld and advanced profiles-each optimized to minimize receiver complexity while attaining the performance required for a particular use case. The physical layer (PHY) profiles are subsets of all configurations that a corresponding receiver should implement.

The three PHY profiles share most of the functional blocks but differ slightly in specific blocks and/or parameters. Additional PHY profiles can be defined in the future. For the system evolution, future profiles can also be multiplexed with the existing profiles in a single RF channel through a future extension frame (FEF). The details of each PHY profile are described below.

1. Base profile

The base profile represents a main use case for fixed receiving devices that are usually connected to a roof-top antenna. The base profile also includes portable devices that could be transported to a place but belong to a relatively stationary reception category. Use of the base profile could be extended to handheld devices or even vehicular by some improved implementations, but those use cases are not expected for the base profile receiver operation.

Target SNR range of reception is from approximately 10 to 20dB, which includes the 15dB SNR reception capability of the existing broadcast system (e.g. ATSC A/53). The receiver complexity and power consumption is not as critical as in the battery-operated handheld devices, which will use the handheld profile. Key system parameters for the base profile are listed in below table 1.

[Table 1]

| LDPC codeword length | 16K, 64K bits |
|---|---|
| Constellation size | 4~10 bpcu (bits per channel use) |
| Time de-interleaving memory size | $\leq 2^{19}$ data cells |
| Pilot patterns | Pilot pattern for fixed reception |
| FFT size | 16K, 32K points |

2. Handheld profile

The handheld profile is designed for use in handheld and vehicular devices that operate with battery power. The devices can be moving with pedestrian or vehicle speed. The power consumption as well as the receiver complexity is very important for the implementation of the devices of the handheld profile. The target SNR range of the handheld profile is approximately 0 to 10dB, but can be configured to reach below 0dB when intended for deeper indoor reception.
In addition to low SNR capability, resilience to the Doppler Effect caused by receiver mobility is the most important performance attribute of the handheld profile. Key system parameters for the handheld profile are listed in the below table 2.

[Table 2]

| LDPC codeword length | 16K bits |
|---|---|
| Constellation size | 2~8 bpcu |
| Time de-interleaving memory size | $\leq 2^{18}$ data cells |
| Pilot patterns | Pilot patterns for mobile and indoor reception |
| FFT size | 8K, 16K points |

3. Advanced profile

The advanced profile provides highest channel capacity at the cost of more implementation complexity. This profile requires using MIMO transmission and reception, and UHDTV service is a target use case for which this profile is specifically designed. The increased capacity can also be used to allow an increased number of services in a given bandwidth, e.g., multiple SDTV or HDTV services.
The target SNR range of the advanced profile is approximately 20 to 30dB. MIMO transmission may initially use existing elliptically-polarized transmission equipment, with extension to full-power cross-polarized transmission in the future. Key system parameters for the advanced profile are listed in below table 3.

[Table 3]

| LDPC codeword length | 16K, 64K bits |
|---|---|
| Constellation size | 8~12 bpcu |
| Time de-interleaving memory size | $\leq 2^{19}$ data cells |
| Pilot patterns | Pilot pattern for fixed reception |
| FFT size | 16K, 32K points |

In this case, the base profile can be used as a profile for both the terrestrial broadcast service and the mobile broadcast service. That is, the base profile can be used to define a concept of a profile which includes the mobile profile. Also, the advanced profile can be divided advanced profile for a base profile with MIMO and advanced profile for a handheld profile with MIMO. Moreover, the three profiles can be changed according to intention of the designer.
The following terms and definitions may apply to the present invention. The following terms and definitions can be changed according to design.
auxiliary stream: sequence of cells carrying data of as yet undefined modulation and coding, which may be used for future extensions or as required by broadcasters or network operators

base data pipe: data pipe that carries service signaling data

baseband frame (or BBFRAME): set of Kbch bits which form the input to one FEC encoding process (BCH and LDPC encoding)

cell: modulation value that is carried by one carrier of the OFDM transmission

coded block: LDPC-encoded block of PLS1 data or one of the LDPC-encoded blocks of PLS2 data

data pipe: logical channel in the physical layer that carries service data or related metadata, which may carry one or multiple service(s) or service component(s).

data pipe unit: a basic unit for allocating data cells to a DP in a frame.

data symbol: OFDM symbol in a frame which is not a preamble symbol (the frame signaling symbol and frame edge symbol is included in the data symbol)

DP_ID: this 8-bit field identifies uniquely a DP within the system identified by the SYSTEM_ID

dummy cell: cell carrying a pseudo-random value used to fill the remaining capacity not used for PLS signaling, DPs or auxiliary streams

emergency alert channel: part of a frame that carries EAS information data

frame: physical layer time slot that starts with a preamble and ends with a frame edge symbol

frame repetition unit: a set of frames belonging to same or different physical layer profile including a FEF, which is repeated eight times in a super-frame

fast information channel: a logical channel in a frame that carries the mapping information between a service and the corresponding base DP

FECBLOCK: set of LDPC-encoded bits of a DP data

FFT size: nominal FFT size used for a particular mode, equal to the active symbol period Ts expressed in cycles of the elementary period T

frame signaling symbol: OFDM symbol with higher pilot density used at the start of a frame in certain combinations of FFT size, guard interval and scattered pilot pattern, which carries a part of the PLS data

frame edge symbol: OFDM symbol with higher pilot density used at the end of a frame in certain combinations of FFT size, guard interval and scattered pilot pattern

frame-group: the set of all the frames having the same PHY profile type in a super-frame.

future extension frame: physical layer time slot within the super-frame that could be used for future extension, which starts with a preamble

Futurecast UTB system: proposed physical layer broadcasting system, of which the input is one or more MPEG2-TS or IP or general stream(s) and of which the output is an RF signal

input stream: A stream of data for an ensemble of services delivered to the end users by the system.

normal data symbol: data symbol excluding the frame signaling symbol and the frame edge symbol

PHY profile: subset of all configurations that a corresponding receiver should implement

PLS: physical layer signaling data consisting of PLS1 and PLS2

PLS1: a first set of PLS data carried in the FSS symbols having a fixed size, coding and modulation, which carries basic information about the system as well as the parameters needed to decode the PLS2

NOTE: PLS1 data remains constant for the duration of a frame-group.

PLS2: a second set of PLS data transmitted in the FSS symbol, which carries more detailed PLS data about the system and the DPs

PLS2 dynamic data: PLS2 data that may dynamically change frame-by-frame

PLS2 static data: PLS2 data that remains static for the duration of a frame-group

preamble signaling data: signaling data carried by the preamble symbol and used to identify the basic mode of the system

preamble symbol: fixed-length pilot symbol that carries basic PLS data and is located in the beginning of a frame

NOTE: The preamble symbol is mainly used for fast initial band scan to detect the system signal, its timing, frequency offset, and FFT-size.

reserved for future use: not defined by the present document but may be defined in future

super-frame: set of eight frame repetition units

time interleaving block (TI block): set of cells within which time interleaving is carried out, corresponding to one use of the time interleaver memory

TI group: unit over which dynamic capacity allocation for a particular DP is carried out, made up of an integer, dynamically varying number of XFECBLOCKs

NOTE: The TI group may be mapped directly to one frame or may be mapped to multiple frames. It may contain one or more TI blocks.

Type 1 DP: DP of a frame where all DPs are mapped into the frame in TDM fashion

Type 2 DP: DP of a frame where all DPs are mapped into the frame in FDM fashion

XFECBLOCK: set of Ncells cells carrying all the bits of one LDPC FECBLOCK

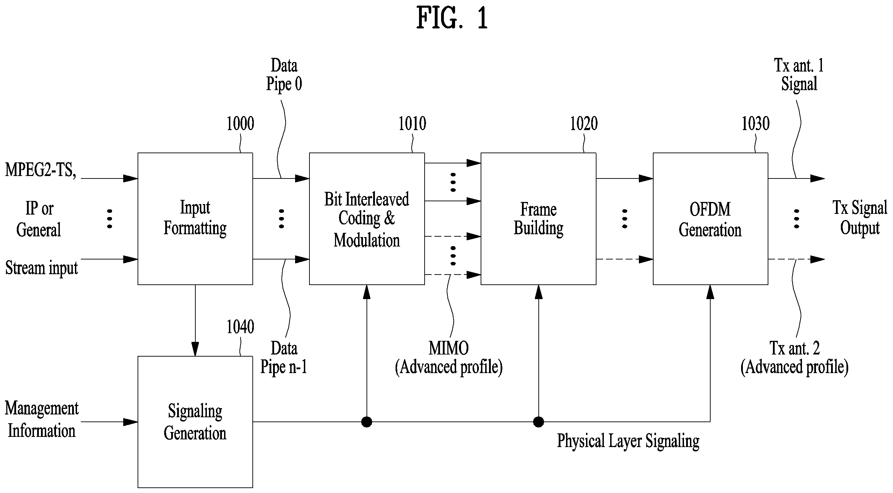

FIG. 1 illustrates a structure of an apparatus for transmitting broadcast signals for future broadcast services according to an embodiment of the present invention.

The apparatus for transmitting broadcast signals for future broadcast services according to an embodiment of the present invention can include an input formatting block 1000, a BICM (Bit interleaved coding & modulation) block 1010, a frame building block 1020, an OFDM (Orthogonal Frequency Division Multiplexing) generation block 1030 and a signaling generation block 1040. A description will be given of the operation of each module of the apparatus for transmitting broadcast signals.

IP stream/packets and MPEG2-TS are the main input formats, other stream types are handled as General Streams. In addition to these data inputs, Management Information is input to control the scheduling and allocation of the corresponding bandwidth for each input stream. One or multiple TS stream(s), IP stream(s) and/or General Stream(s) inputs are simultaneously allowed.

The input formatting block 1000 can demultiplex each input stream into one or multiple data pipe(s), to each of which an independent coding and modulation is applied. The data pipe (DP) is the basic unit for robustness control, thereby affecting quality-of-service (QoS). One or multiple service(s) or service component(s) can be carried by a single DP. Details of operations of the input formatting block 1000 will be described later.

The data pipe is a logical channel in the physical layer that carries service data or related metadata, which may carry one or multiple service(s) or service component(s).

Also, the data pipe unit: a basic unit for allocating data cells to a DP in a frame.

In the BICM block 1010, parity data is added for error correction and the encoded bit streams are mapped to complex-value constellation symbols. The symbols are interleaved across a specific interleaving depth that is used for the corresponding DP. For the advanced profile, MIMO encoding is performed in the BICM block 1010 and the additional data path is added at the output for MIMO transmission. Details of operations of the BICM block 1010 will be described later.

The Frame Building block 1020 can map the data cells of the input DPs into the OFDM symbols within a frame. After mapping, the frequency interleaving is used for frequency-domain diversity, especially to combat frequency-selective fading channels. Details of operations of the Frame Building block 1020 will be described later.

After inserting a preamble at the beginning of each frame, the OFDM Generation block 1030 can apply conventional OFDM modulation having a cyclic prefix as guard interval. For antenna space diversity, a distributed MISO scheme is applied across the transmitters. In addition, a Peak-to-Average Power Reduction (PAPR) scheme is performed in the time domain. For flexible network planning, this proposal provides a set of various FFT sizes, guard interval lengths and corresponding pilot patterns. Details of operations of the OFDM Generation block 1030 will be described later.

The Signaling Generation block 1040 can create physical layer signaling information used for the operation of each functional block. This signaling information is also transmitted so that the services of interest are properly recovered at the receiver side. Details of operations of the Signaling Generation block 1040 will be described later.

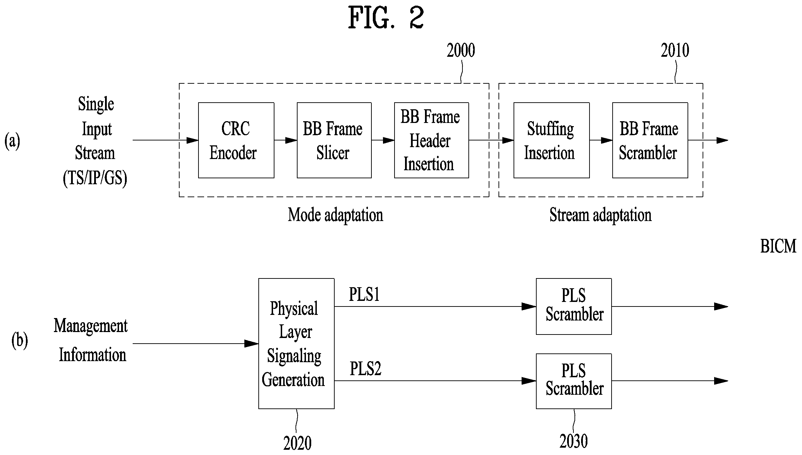

FIGS. 2, 3 and 4 illustrate the input formatting block 1000 according to embodiments of the present invention. A description will be given of each figure.

FIG. 2 illustrates an input formatting block according to one embodiment of the present invention. FIG. 2 shows an input formatting module when the input signal is a single input stream.

The input formatting block illustrated in FIG. 2 corresponds to an embodiment of the input formatting block 1000 described with reference to FIG. 1.

The input to the physical layer may be composed of one or multiple data streams. Each data stream is carried by one DP. The mode adaptation modules slice the incoming data stream into data fields of the baseband frame (BBF). The system supports three types of input data streams: MPEG2-TS, Internet protocol (IP) and Generic stream (GS). MPEG2-TS is characterized by fixed length (188 byte) packets with the first byte being a sync-byte (0x47). An IP stream is composed of variable length IP datagram packets, as signaled within IP packet headers. The system supports both IPv4 and IPv6 for the IP stream. GS may be composed of variable length packets or constant length packets, signaled within encapsulation packet headers.

(a) shows a mode adaptation block 2000 and a stream adaptation 2010 for signal DP and (b) shows a PLS generation block 2020 and a PLS scrambler 2030 for generating and processing PLS data. A description will be given of the operation of each block.

The Input Stream Splitter splits the input TS, IP, GS streams into multiple service or service component (audio, video, etc.) streams. The mode adaptation module 2010 is comprised of a CRC Encoder, BB (baseband) Frame Slicer, and BB Frame Header Insertion block.

The CRC Encoder provides three kinds of CRC encoding for error detection at the user packet (UP) level, i.e., CRC-8, CRC-16, and CRC-32. The computed CRC bytes are appended after the UP. CRC-8 is used for TS stream and CRC-32 for IP stream. If the GS stream doesn't provide the CRC encoding, the proposed CRC encoding should be applied.

BB Frame Slicer maps the input into an internal logical-bit format. The first received bit is defined to be the MSB. The BB Frame Slicer allocates a number of input bits equal to the available data field capacity. To allocate a number of input bits equal to the BBF payload, the UP packet stream is sliced to fit the data field of BBF.

BB Frame Header Insertion block can insert fixed length BBF header of 2 bytes is inserted in front of the BB Frame. The BBF header is composed of STUFFI (1 bit), SYNCD (13 bits), and RFU (2 bits). In addition to the fixed 2-Byte BBF header, BBF can have an extension field (1 or 3 bytes) at the end of the 2-byte BBF header.

The stream adaptation 2010 is comprised of stuffing insertion block and BB scrambler. The stuffing insertion block can insert stuffing field into a payload of a BB frame. If the input data to the stream adaptation is sufficient to fill a BB-Frame, STUFFI is set to '0' and the BBF has no stuffing field. Otherwise STUFFI is set to '1' and the stuffing field is inserted immediately after the BBF header. The stuffing field comprises two bytes of the stuffing field header and a variable size of stuffing data.

The BB scrambler scrambles complete BBF for energy dispersal. The scrambling sequence is synchronous with the BBF. The scrambling sequence is generated by the feed-back shift register.

The PLS generation block 2020 can generate physical layer signaling (PLS) data. The PLS provides the receiver with a means to access physical layer DPs. The PLS data consists of PLS 1 data and PLS2 data.

The PLS1 data is a first set of PLS data carried in the FSS symbols in the frame having a fixed size, coding and modulation, which carries basic information about the system as well as the parameters needed to decode the PLS2 data. The PLS1 data provides basic transmission parameters including parameters required to enable the reception and decoding of the PLS2 data. Also, the PLS1 data remains constant for the duration of a frame-group.

The PLS2 data is a second set of PLS data transmitted in the FSS symbol, which carries more detailed PLS data about the system and the DPs. The PLS2 contains parameters that provide sufficient information for the receiver to decode the desired DP. The PLS2 signaling further consists of two types of parameters, PLS2 Static data (PLS2-STAT data) and PLS2 dynamic data (PLS2-DYN data). The PLS2 Static data is PLS2 data that remains static for the duration of a frame-group and the PLS2 dynamic data is PLS2 data that may dynamically change frame-by-frame.

Details of the PLS data will be described later.

The PLS scrambler 2030 can scramble the generated PLS data for energy dispersal.

The above-described blocks may be omitted or replaced by blocks having similar or identical functions.

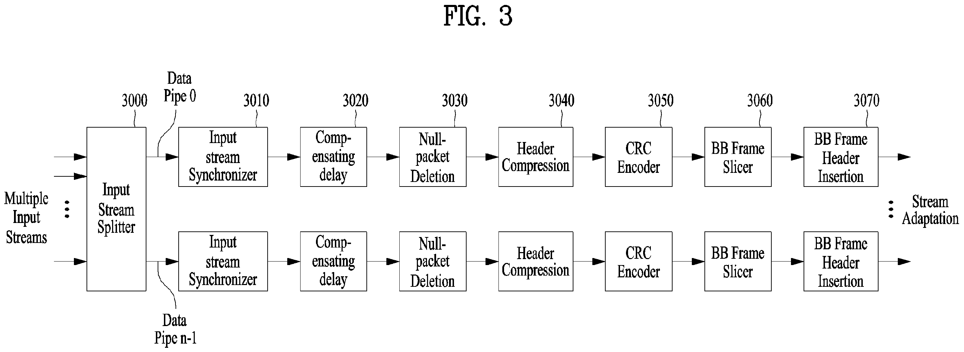

FIG. 3 illustrates an input formatting block according to another embodiment of the present invention.

The input formatting block illustrated in FIG. 3 corresponds to an embodiment of the input formatting block 1000 described with reference to FIG. 1.

FIG. 3 shows a mode adaptation block of the input formatting block when the input signal corresponds to multiple input streams.

The mode adaptation block of the input formatting block for processing the multiple input streams can independently process the multiple input streams.

Referring to FIG. 3, the mode adaptation block for respectively processing the multiple input streams can include an input stream splitter 3000, an input stream synchronizer 3010, a compensating delay block 3020, a null packet deletion block 3030, a head compression block 3040, a CRC encoder 3050, a BB frame slicer 3060 and a BB header insertion block 3070. Description will be given of each block of the mode adaptation block.

Operations of the CRC encoder 3050, BB frame slicer 3060 and BB header insertion block 3070 correspond to those of the CRC encoder, BB frame slicer and BB header insertion block described with reference to FIG. 2 and thus description thereof is omitted.

The input stream splitter 3000 can split the input TS, IP, GS streams into multiple service or service component (audio, video, etc.) streams.

The input stream synchronizer 3010 may be referred as ISSY. The ISSY can provide suitable means to guarantee Constant Bit Rate (CBR) and constant end-to-end transmission delay for any input data format. The ISSY is always used for the case of multiple DPs carrying TS, and optionally used for multiple DPs carrying GS streams.

The compensating delay block 3020 can delay the split TS packet stream following the insertion of ISSY information to allow a TS packet recombining mechanism without requiring additional memory in the receiver.

The null packet deletion block 3030, is used only for the TS input stream case. Some TS input streams or split TS streams may have a large number of null-packets present in order to accommodate VBR (variable bit-rate) services in a CBR TS stream. In this case, in order to avoid unnecessary transmission overhead, null-packets can be identified and not transmitted. In the receiver, removed null-packets can be re-inserted in the exact place where they were originally by reference to a deleted null-packet (DNP) counter that is inserted in the transmission, thus guaranteeing constant bit-rate and avoiding the need for time-stamp (PCR) updating.

The head compression block 3040 can provide packet header compression to increase transmission efficiency for TS or IP input streams. Because the receiver can have a priori information on certain parts of the header, this known information can be deleted in the transmitter.

For Transport Stream, the receiver has a-priori information about the sync-byte configuration (0x47) and the packet length (188 Byte). If the input TS stream carries content that has only one PID, i.e., for only one service component (video, audio, etc.) or service sub-component (SVC base layer, SVC enhancement layer, MVC base view or MVC dependent views), TS packet header compression can be applied (optionally) to the Transport Stream. IP packet header compression is used optionally if the input steam is an IP stream.

The above-described blocks may be omitted or replaced by blocks having similar or identical functions.

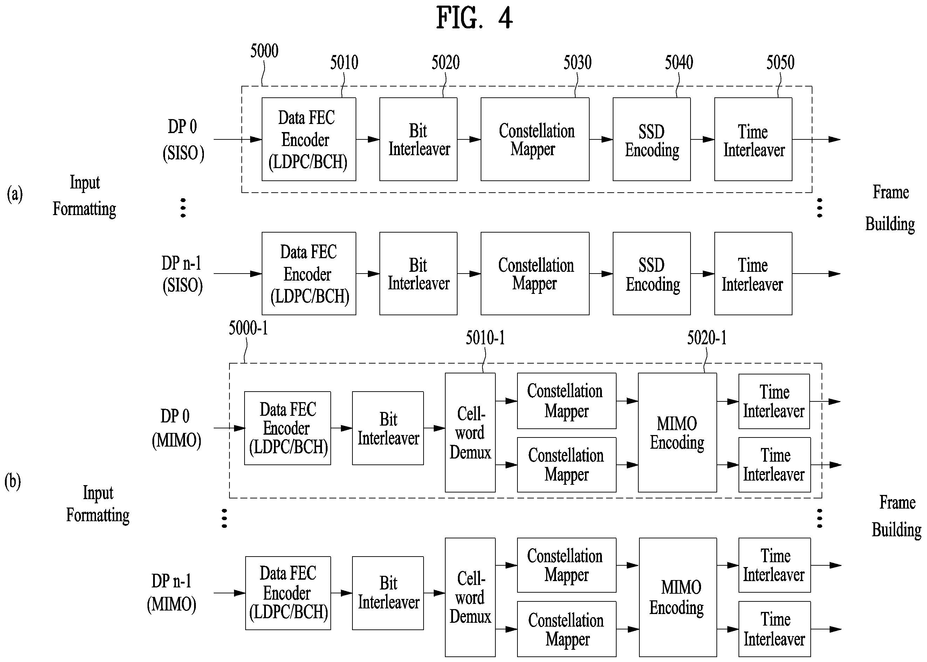

FIG. 4 illustrates a BICM block according to an embodiment of the present invention.

The BICM block illustrated in FIG. 4 corresponds to an embodiment of the BICM block 1010 described with reference to FIG. 1.

As described above, the apparatus for transmitting broadcast signals for future broadcast services according to an embodiment of the present invention can provide a terrestrial broadcast service, mobile broadcast service, UHDTV service, etc.

Since QoS (quality of service) depends on characteristics of a service provided by the apparatus for transmitting broadcast signals for future broadcast services according to an embodiment of the present invention, data corresponding to respective services needs to be processed through different schemes. Accordingly, the a BICM block according to an embodiment of the present invention can independently process DPs input thereto by independently applying SISO, MISO and MIMO schemes to the data pipes respectively corresponding to data paths. Consequently, the apparatus for transmitting broadcast signals for future broadcast services according to an embodiment of the present invention can control QoS for each service or service component transmitted through each DP.

(a) shows the BICM block shared by the base profile and the handheld profile and (b) shows the BICM block of the advanced profile.

The BICM block shared by the base profile and the handheld profile and the BICM block of the advanced profile can include plural processing blocks for processing each DP.

A description will be given of each processing block of the BICM block for the base profile and the handheld profile and the BICM block for the advanced profile.

A processing block 5000 of the BICM block for the base profile and the handheld profile can include a Data FEC encoder 5010, a bit interleaver 5020, a constellation mapper 5030, an SSD (Signal Space Diversity) encoding block 5040 and a time interleaver 5050.

The Data FEC encoder 5010 can perform the FEC encoding on the input BBF to generate FECBLOCK procedure using outer coding (BCH), and inner coding (LDPC). The outer coding (BCH) is optional coding method. Details of operations of the Data FEC encoder 5010 will be described later.

The bit interleaver 5020 can interleave outputs of the Data FEC encoder 5010 to achieve optimized performance with combination of the LDPC codes and modulation scheme while providing an efficiently implementable structure. Details of operations of the bit interleaver 5020 will be described later.

The constellation mapper 5030 can modulate each cell word from the bit interleaver 5020 in the base and the handheld profiles, or cell word from the Cell-word demultiplexer 5010-1 in the advanced profile using either QPSK, QAM-16, non-uniform QAM (NUQ-64, NUQ-256, NUQ-1024) or non-uniform constellation (NUC-16, NUC-64, NUC-256, NUC-1024) to give a power-normalized constellation point, el. This constellation mapping is applied only for DPs. Observe that QAM-16 and NUQs are square shaped, while NUCs have arbitrary shape. When each constellation is rotated by any multiple of 90 degrees, the rotated constellation exactly overlaps with its original one. This "rotation-sense" symmetric property makes the capacities and the average powers of the real and imaginary components equal to each other. Both NUQs and NUCs are defined specifically for each code rate and the particular one used is signaled by the parameter DP_MOD filed in PLS2 data.

The time interleaver 5050 can operates at the DP level. The parameters of time interleaving (TI) may be set differently for each DP. Details of operations of the time interleaver 5050 will be described later.

A processing block 5000-1 of the BICM block for the advanced profile can include the Data FEC encoder, bit interleaver, constellation mapper, and time interleaver. However, the processing block 5000-1 is distinguished from the processing block 5000 further includes a cell-word demultiplexer 5010-1 and a MIMO encoding block 5020-1.

Also, the operations of the Data FEC encoder, bit interleaver, constellation mapper, and time interleaver in the processing block 5000-1 correspond to those of the Data FEC encoder 5010, bit interleaver 5020, constellation mapper 5030, and time interleaver 5050 described and thus description thereof is omitted.

The cell-word demultiplexer 5010-1 is used for the DP of the advanced profile to divide the single cell-word stream into dual cell-word streams for MIMO processing. Details of operations of the cell-word demultiplexer 5010-1 will be described later.

The MIMO encoding block 5020-1 can processing the output of the cell-word demultiplexer 5010-1 using MIMO encoding scheme. The MIMO encoding scheme was optimized for broadcasting signal transmission. The MIMO technology is a promising way to get a capacity increase but it depends on channel characteristics. Especially for broadcasting, the strong LOS component of the channel or a difference in the received signal power between two antennas caused by different signal propagation characteristics makes it difficult to get capacity gain from MIMO. The proposed MIMO encoding scheme overcomes this problem using a rotation-based pre-coding and phase randomization of one of the MIMO output signals.

MIMO encoding is intended for a 2x2 MIMO system requiring at least two antennas at both the transmitter and the receiver. Two MIMO encoding modes are defined in this proposal; full-rate spatial multiplexing (FR-SM) and full-rate full-diversity spatial multiplexing (FRFD-SM). The FR-SM encoding provides capacity increase with relatively small complexity increase at the receiver side while the FRFD-SM encoding provides capacity increase and additional diversity gain with a great complexity increase at the receiver side. The proposed MIMO encoding scheme has no restriction on the antenna polarity configuration.

MIMO processing is required for the advanced profile frame, which means all DPs in the advanced profile frame are processed by the MIMO encoder. MIMO processing is applied at DP level. Pairs of the Constellation Mapper outputs NUQ (e1,i and e2,i) are fed to the input of the MIMO Encoder. Paired MIMO Encoder output (g1,i and g2,i) is transmitted by the same carrier k and OFDM symbol 1 of their respective TX antennas.

The above-described blocks may be omitted or replaced by blocks having similar or identical functions.

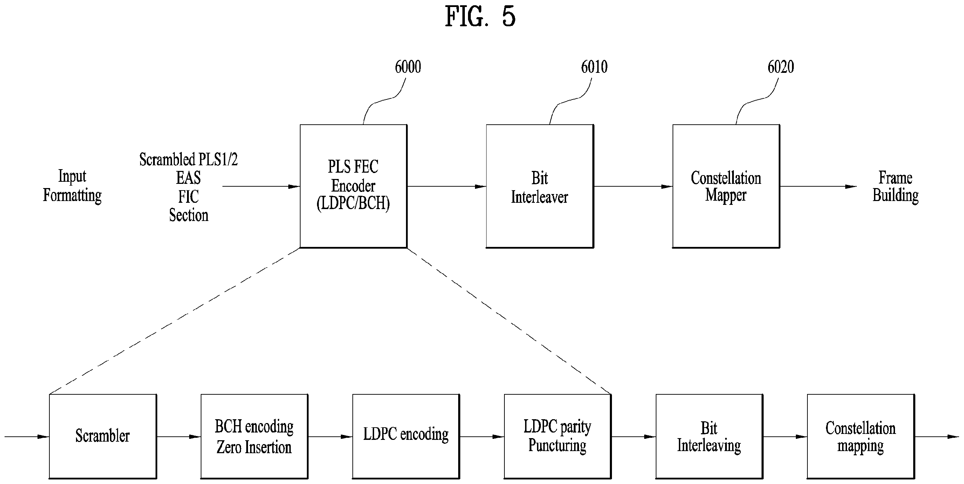

FIG. 5 illustrates a BICM block according to another embodiment of the present invention.

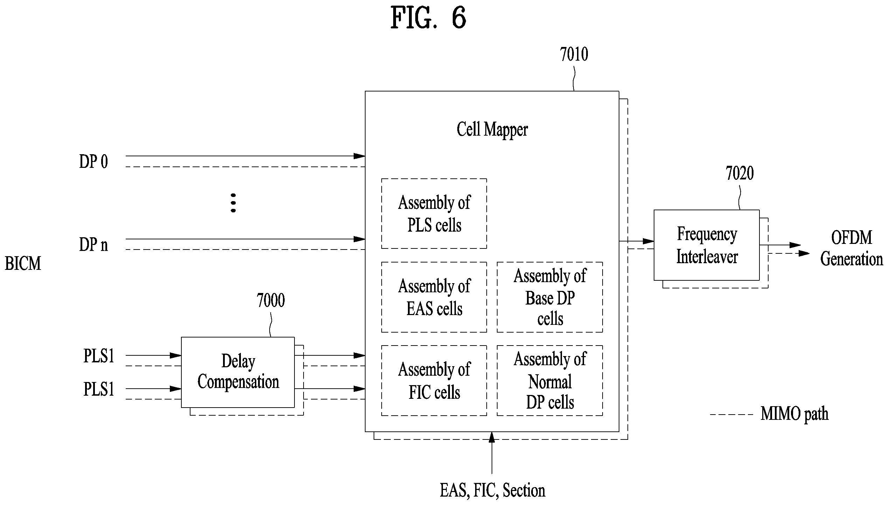

The BICM block illustrated in FIG. 6 corresponds to an embodiment of the BICM block 1010 described with reference to FIG. 1.

FIG. 5 illustrates a BICM block for protection of physical layer signaling (PLS), emergency alert channel (EAC) and fast information channel (FIC). EAC is a part of a frame that carries EAS information data and FIC is a logical channel in a frame that carries the mapping information between a service and the corresponding base DP. Details of the EAC and FIC will be described later.

Referring to FIG. 6, the BICM block for protection of PLS, EAC and FIC can include a PLS FEC encoder 6000, a bit interleaver 6010 and a constellation mapper 6020.

Also, the PLS FEC encoder 6000 can include a scrambler, BCH encoding/zero insertion block, LDPC encoding block and LDPC parity puncturing block. Description will be given of each block of the BICM block.

The PLS FEC encoder 6000 can encode the scrambled PLS 1/2 data, EAC and FIC section.

The scrambler can scramble PLS1 data and PLS2 data before BCH encoding and shortened and punctured LDPC encoding.

The BCH encoding/zero insertion block can perform outer encoding on the scrambled PLS 1/2 data using the shortened BCH code for PLS protection and insert zero bits after the BCH encoding. For PLS 1 data only, the output bits of the zero insertion may be permutted before LDPC encoding.

The LDPC encoding block can encode the output of the BCH encoding/zero insertion block using LDPC code. To generate a complete coded block, Cldpc, parity bits, Pldpc are encoded systematically from each zero-inserted PLS information block, Ildpc and appended after it.

【Equation 1】

$$\mathbf{C}_{ldpc} = [\,\mathbf{I}_{ldpc} \quad \mathbf{P}_{ldpc}\,] = [\,i_0, i_1, ..., i_{K_{ldpc}-1},\ p_0, p_1, ..., p_{N_{ldpc}-K_{ldpc}-1}\,]$$

The LDPC code parameters for PLS1 and PLS2 are as following table 4.

[Table 4]

| Signaling Type | $K_{sig}$ | $K_{bch}$ | $N_{bch\_parity}$ | $K_{ldpc}$ (=$N_{bch}$) | $N_{ldpc}$ | $N_{ldpc\_parity}$ | code rate | $Q_{ldpc}$ |
|---|---|---|---|---|---|---|---|---|
| PLS1 | 342 | 1020 | 60 | 1080 | 4320 | 3240 | 1/4 | 36 |
| PLS2 | <1021 | 1020 | 60 | 1080 | 4320 | 3240 | 1/4 | 36 |
| | >1020 | 2100 | | 2160 | 7200 | 5040 | 3/10 | 56 |

The LDPC parity puncturing block can perform puncturing on the PLS1 data and PLS 2 data.

When shortening is applied to the PLS1 data protection, some LDPC parity bits are punctured after LDPC encoding. Also, for the PLS2 data protection, the LDPC parity bits of PLS2 are punctured after LDPC encoding. These punctured bits are not transmitted.

The bit interleaver 6010 can interleave the each shortened and punctured PLS1 data and PLS2 data.

The constellation mapper 6020 can map the bit ineterlaeved PLS1 data and PLS2 data onto constellations.

The above-described blocks may be omitted or replaced by blocks having similar or identical functions.

FIG. 6 illustrates a frame building block according to one embodiment of the present invention.

The frame building block illustrated in FIG. 6 corresponds to an embodiment of the frame building block 1020 described with reference to FIG. 1.

Referring to FIG. 6, the frame building block can include a delay compensation block 7000, a cell mapper 7010 and a frequency interleaver 7020. Description will be given of each block of the frame building block.

The delay compensation block 7000 can adjust the timing between the data pipes and the corresponding PLS data to ensure that they are co-timed at the transmitter end. The PLS data is delayed by the same amount as data pipes are by addressing the delays of data pipes caused by the Input Formatting block and BICM block. The delay of the BICM block is mainly due to the time interleaver 5050. In-band signaling data carries information of the next TI group so that they are carried one frame ahead of the DPs to be signaled. The Delay Compensating block delays in-band signaling data accordingly.

The cell mapper 7010 can map PLS, EAC, FIC, DPs, auxiliary streams and dummy cells into the active carriers of the OFDM symbols in the frame. The basic function of the cell mapper 7010 is to map data cells produced by the TIs for each of the DPs, PLS cells, and EAC/FIC cells, if any, into arrays of active OFDM cells corresponding to each of the OFDM symbols within a frame. Service signaling data (such as PSI(program specific information)/SI) can be separately gathered and sent by a data pipe. The Cell Mapper operates according to the dynamic information produced by the scheduler and the configuration of the frame structure. Details of the frame will be described later.

The frequency interleaver 7020 can randomly interleave data cells received from the cell mapper 7010 to provide frequency diversity. Also, the frequency interleaver 7020 can operate on very OFDM symbol pair comprised of two sequential OFDM symbols using a different interleaving-seed order to get maximum interleaving gain in a single frame.

The above-described blocks may be omitted or replaced by blocks having similar or identical functions.

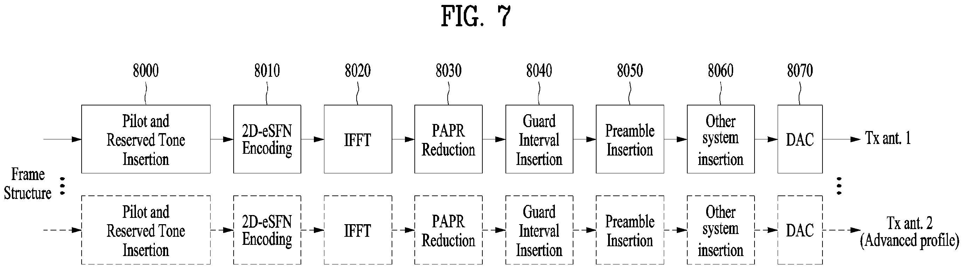

FIG. 7 illustrates an OFDM generation block according to an embodiment of the present invention.

The OFDM generation block illustrated in FIG. 7 corresponds to an embodiment of the OFDM generation block 1030 described with reference to FIG. 1.

The OFDM generation block modulates the OFDM carriers by the cells produced by the Frame Building block, inserts the pilots, and produces the time domain signal for transmission. Also, this block subsequently inserts guard intervals, and applies PAPR (Peak-to-Average Power Radio) reduction processing to produce the final RF signal.

Referring to FIG. 7, the OFDM generation block can include a pilot and reserved tone insertion block 8000, a 2D-eSFN encoding block 8010, an IFFT (Inverse Fast Fourier Transform) block 8020, a PAPR reduction block 8030, a guard interval insertion block 8040, a preamble insertion block 8050, other system insertion block 8060 and a DAC block 8070.

The other system insertion block 8060 can multiplex signals of a plurality of broadcast transmission/reception systems in the time domain such that data of two or more different broadcast transmission/reception systems providing broadcast services can be simultaneously transmitted in the same RF signal bandwidth. In this case, the two or more different broadcast transmission/reception systems refer to systems providing different broadcast services. The different broadcast services may refer to a terrestrial broadcast service, mobile broadcast service, etc.

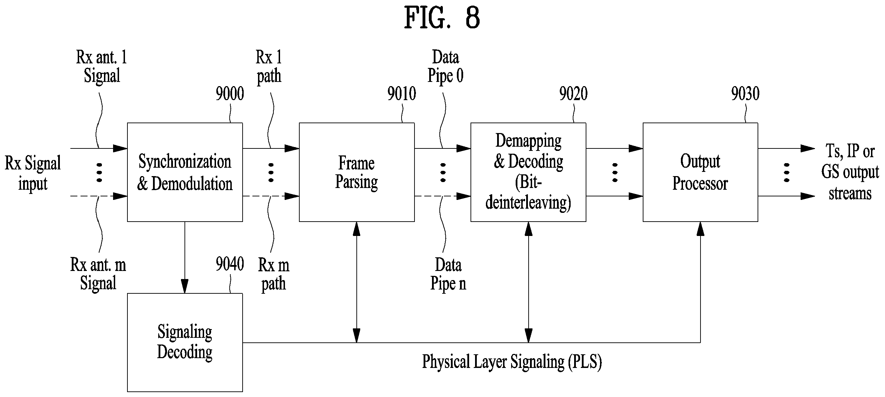

FIG. 8 illustrates a structure of an apparatus for receiving broadcast signals for future broadcast services according to an embodiment of the present invention.

The apparatus for receiving broadcast signals for future broadcast services according to an embodiment of the present invention can correspond to the apparatus for transmitting broadcast signals for future broadcast services, described with reference to FIG. 1.

The apparatus for receiving broadcast signals for future broadcast services according to an embodiment of the present invention can include a synchronization & demodulation module 9000, a frame parsing module 9010, a demapping & decoding module 9020, an output processor 9030 and a signaling decoding module 9040. A description will be given of operation of each module of the apparatus for receiving broadcast signals.

The synchronization & demodulation module 9000 can receive input signals through m Rx antennas, perform signal detection and synchronization with respect to a system corresponding to the apparatus for receiving broadcast signals and carry out demodulation corresponding to a reverse procedure of the procedure performed by the apparatus for transmitting broadcast signals.

The frame parsing module 9010 can parse input signal frames and extract data through which a service selected by a user is transmitted. If the apparatus for transmitting broadcast signals performs interleaving, the frame parsing module 9010 can carry out deinterleaving corresponding to a reverse procedure of interleaving. In this case, the positions of a signal and data that need to be extracted can be obtained by decoding data output from the signaling decoding module 9040 to restore scheduling information generated by the apparatus for transmitting broadcast signals.

The demapping & decoding module 9020 can convert the input signals into bit domain data and then deinterleave the same as necessary. The demapping & decoding module 9020 can perform demapping for mapping applied for transmission efficiency and correct an error generated on a transmission channel through decoding. In this case, the demapping & decoding module 9020 can obtain transmission parameters necessary for demapping and decoding by decoding the data output from the signaling decoding module 9040.

The output processor 9030 can perform reverse procedures of various compression/signal processing procedures which are applied by the apparatus for transmitting broadcast signals to improve transmission efficiency. In this case, the output processor 9030 can acquire necessary control information from data output from the signaling decoding module 9040. The output of the output processor 8300 corresponds to a signal input to the apparatus for transmitting broadcast signals and may be MPEG-TSs, IP streams (v4 or v6) and generic streams.

The signaling decoding module 9040 can obtain PLS information from the signal demodulated by the synchronization & demodulation module 9000. As described above, the frame parsing module 9010, demapping & decoding module 9020 and output processor 9030 can execute functions thereof using the data output from the signaling decoding module 9040.

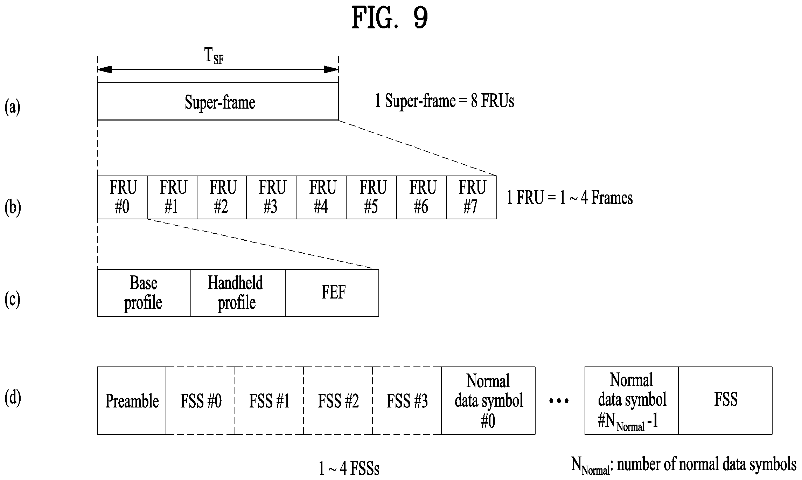

FIG. 9 illustrates a frame structure according to an embodiment of the present invention.

FIG. 9 shows an example configuration of the frame types and FRUs in a super-frame. (a) shows a super frame according to an embodiment of the present invention, (b) shows FRU (Frame Repetition Unit) according to an embodiment of the present invention, (c) shows frames of variable PHY profiles in the FRU and (d) shows a structure of a frame.

A super-frame may be composed of eight FRUs. The FRU is a basic multiplexing unit for TDM of the frames, and is repeated eight times in a super-frame.

Each frame in the FRU belongs to one of the PHY profiles, (base, handheld, advanced) or FEF. The maximum allowed number of the frames in the FRU is four and a given PHY profile can appear any number of times from zero times to four times in the FRU (e.g., base, base, handheld, advanced). PHY profile definitions can be extended using reserved values of the PHY_PROFILE in the preamble, if required.

The FEF part is inserted at the end of the FRU, if included. When the FEF is included in the FRU, the minimum number of FEFs is 8 in a super-frame. It is not recommended that FEF parts be adjacent to each other.

One frame is further divided into a number of OFDM symbols and a preamble. As shown in (d), the frame comprises a preamble, one or more frame signaling symbols (FSS), normal data symbols and a frame edge symbol (FES).

The preamble is a special symbol that enables fast Futurecast UTB system signal detection and provides a set of basic transmission parameters for efficient transmission and reception of the signal. The detailed description of the preamble will be will be described later.

The main purpose of the FSS(s) is to carry the PLS data. For fast synchronization and channel estimation, and hence fast decoding of PLS data, the FSS has more dense pilot pattern than the normal data symbol. The FES has exactly the same pilots as the FSS, which enables frequency-only interpolation within the FES and temporal interpolation, without extrapolation, for symbols immediately preceding the FES.

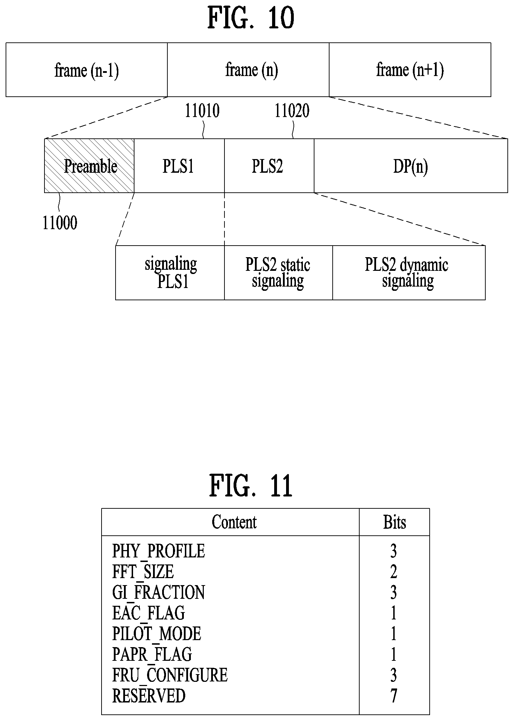

FIG. 10 illustrates a signaling hierarchy structure of the frame according to an embodiment of the present invention.

FIG. 10 illustrates the signaling hierarchy structure, which is split into three main parts: the preamble signaling data 11000, the PLS1 data 11010 and the PLS2 data 11020. The purpose of the preamble, which is carried by the preamble symbol in every frame, is to indicate the transmission type and basic transmission parameters of that frame. The PLS1 enables the receiver to access and decode the PLS2 data, which contains the parameters to access the DP of interest. The PLS2 is carried in every frame and split into two main parts: PLS2-STAT data and PLS2-DYN data. The static and dynamic portion of PLS2 data is followed by padding, if necessary.

FIG. 11 illustrates preamble signaling data according to an embodiment of the present invention.

Preamble signaling data carriES #21 bits of information that are needed to enable the receiver to access PLS data and trace DPs within the frame structure. Details of the preamble signaling data are as follows:

PHY_PROFILE: This 3-bit field indicates the PHY profile type of the current frame. The mapping of different PHY profile types is given in below table 5.

[Table 5]

| Value | PHY profile |
|---|---|
| 000 | Base profile |
| 001 | Handheld profile |
| 010 | Advanced profiled |
| 011~110 | Reserved |
| 111 | FEF |

FFT_SIZE: This 2 bit field indicates the FFT size of the current frame within a frame-group, as described in below table 6.

[Table 6]

| Value | FFT size |
|-------|----------|
| 00 | 8K FFT |
| 01 | 16K FFT |
| 10 | 32K FFT |
| 11 | Reserved |

GI_FRACTION: This 3 bit field indicates the guard interval fraction value in the current super-frame, as described in below table 7.

[Table 7]

| Value | GI FRACTION |
|-------|-------------|
| 000 | 1/5 |
| 001 | 1/10 |
| 010 | 1/20 |
| 011 | 1/40 |
| 100 | 1/80 |
| 101 | 1/160 |
| 110~111 | Reserved |

EAC_FLAG: This 1 bit field indicates whether the EAC is provided in the current frame. If this field is set to '1', emergency alert service (EAS) is provided in the current frame. If this field set to '0', EAS is not carried in the current frame. This field can be switched dynamically within a super-frame.

PILOT_MODE: This 1-bit field indicates whether the pilot mode is mobile mode or fixed mode for the current frame in the current frame-group. If this field is set to '0', mobile pilot mode is used. If the field is set to '1', the fixed pilot mode is used.

PAPR_FLAG: This 1-bit field indicates whether PAPR reduction is used for the current frame in the current frame-group. If this field is set to value '1', tone reservation is used for PAPR reduction. If this field is set to '0', PAPR reduction is not used.

FRU_CONFIGURE: This 3-bit field indicates the PHY profile type configurations of the frame repetition units (FRU) that are present in the current super-frame. All profile types conveyed in the current super-frame are identified in this field in all preambles in the current super-frame. The 3-bit field has a different definition for each profile, as show in below table 8.

[Table 8]

| | Current PHY PROFILE = '000' (base) | Current PHY PROFILE = '001' (handheld) | Current PHY PROFILE = '010' (advanced) | Current PHY PROFILE = '111' (FEF) |
|---|---|---|---|---|
| FRU_CONFIGURE = 000 | Only base profile present | Only handheld profile present | Only advanced profile present | Only FEF present |
| FRU CONFIGURE = 1XX | Handheld profile present | Base profile present | Base profile present | Base profile present |
| FRU CONFIGURE = X1X | Advanced profile present | Advanced profile present | Handheld profile present | Handheld profile present |

(continued)

|  | Current PHY PROFILE = '000' (base) | Current PHY PROFILE = '001' (handheld) | Current PHY PROFILE = '010' (advanced) | Current PHY PROFILE = '111' (FEF) |
|---|---|---|---|---|
| FRU CONFIGURE = XX1 | FEF present | FEF present | FEF present | Advanced profile present |
| RESERVED: This 7-bit field is reserved for future use. | | | | |

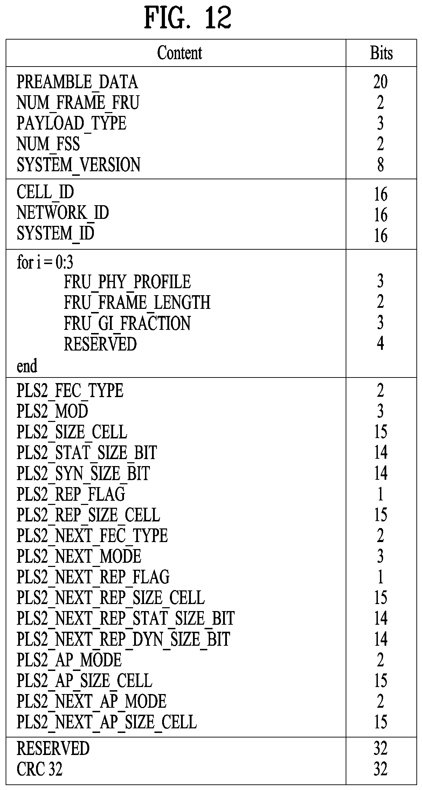

FIG. 12 illustrates PLS1 data according to an embodiment of the present invention.

PLS1 data provides basic transmission parameters including parameters required to enable the reception and decoding of the PLS2. As above mentioned, the PLS1 data remain unchanged for the entire duration of one frame-group. The detailed definition of the signaling fields of the PLS1 data are as follows:

PREAMBLE_DATA: This 20-bit field is a copy of the preamble signaling data excluding the EAC_FLAG.

NUM_FRAME_FRU: This 2-bit field indicates the number of the frames per FRU.

PAYLOAD_TYPE: This 3-bit field indicates the format of the payload data carried in the frame-group. PAYLOAD_TYPE is signaled as shown in table 9.

[Table 9]

| value | Payload type |
|---|---|
| 1XX | TS stream is transmitted |
| X1X | IP stream is transmitted |
| XX1 | GS stream is transmitted |

NUM_FSS: This 2-bit field indicates the number of FSS symbols in the current frame.

SYSTEM_VERSION: This 8-bit field indicates the version of the transmitted signal format. The SYSTEM_VERSION is divided into two 4-bit fields, which are a major version and a minor version.

Major version: The MSB four bits of SYSTEM_VERSION field indicate major version information. A change in the major version field indicates a non-backward-compatible change. The default value is '0000'. For the version described in this standard, the value is set to '0000'.

Minor version: The LSB four bits of SYSTEM_VERSION field indicate minor version information. A change in the minor version field is backward-compatible.

CELL_ID: This is a 16-bit field which uniquely identifies a geographic cell in an ATSC network. An ATSC cell coverage area may consist of one or more frequencies, depending on the number of frequencies used per Futurecast UTB system. If the value of the CELL_ID is not known or unspecified, this field is set to '0'.

NETWORK_ID: This is a 16-bit field which uniquely identifies the current ATSC network.

SYSTEM_ID: This 16-bit field uniquely identifies the Futurecast UTB system within the ATSC network. The Futurecast UTB system is the terrestrial broadcast system whose input is one or more input streams (TS, IP, GS) and whose output is an RF signal. The Futurecast UTB system carries one or more PHY profiles and FEF, if any. The same Futurecast UTB system may carry different input streams and use different RF frequencies in different geographical areas, allowing local service insertion. The frame structure and scheduling is controlled in one place and is identical for all transmissions within a Futurecast UTB system. One or more Futurecast UTB systems may have the same SYSTEM_ID meaning that they all have the same physical layer structure and configuration.

The following loop consists of FRU_PHY_PROFILE, FRU_FRAME_LENGTH, FRU_GI_FRACTION, and RESERVED which are used to indicate the FRU configuration and the length of each frame type. The loop size is fixed so that four PHY profiles (including a FEF) are signaled within the FRU. If NUM_FRAME_FRU is less than 4, the unused fields are filled with zeros.

FRU_PHY_PROFILE: This 3-bit field indicates the PHY profile type of the (i+1)th (i is the loop index) frame of the associated FRU. This field uses the same signaling format as shown in the table 8.

FRU_FRAME_LENGTH: This 2-bit field indicates the length of the (i+1)th frame of the associated FRU. Using FRU_FRAME_LENGTH together with FRU_GI_FRACTION, the exact value of the frame duration can be obtained.

FRU_GI_FRACTION: This 3-bit field indicates the guard interval fraction value of the (i+1)th frame of the associated FRU. FRU_GI_FRACTION is signaled according to the table 7.

RESERVED: This 4-bit field is reserved for future use.

The following fields provide parameters for decoding the PLS2 data.

PLS2_FEC_TYPE: This 2-bit field indicates the FEC type used by the PLS2 protection. The FEC type is signaled according to table 10. The details of the LDPC codes will be described later.

[Table 10]

| Content | PLS2 FEC type |
|---------|---------------|
| 00 | 4K-1/4 and 7K-3/10 LDPC codes |
| 01 ~ 11 | Reserved |

PLS2_MOD: This 3-bit field indicates the modulation type used by the PLS2. The modulation type is signaled according to table 11.

[Table 11]

| Value | PLS2_MODE |
|-------|-----------|
| 000 | BPSK |
| 001 | QPSK |
| 010 | QAM-16 |
| 011 | NUQ-64 |
| 100~111 | Reserved |

PLS2_SIZE_CELL: This 15-bit field indicates Ctotal_partial_block, the size (specified as the number of QAM cells) of the collection of full coded blocks for PLS2 that is carried in the current frame-group. This value is constant during the entire duration of the current frame-group.

PLS2_STAT_SIZE_BIT: This 14-bit field indicates the size, in bits, of the PLS2-STAT for the current frame-group. This value is constant during the entire duration of the current frame-group.

PLS2_DYN_SIZE_BIT: This 14-bit field indicates the size, in bits, of the PLS2-DYN for the current frame-group. This value is constant during the entire duration of the current frame-group.

PLS2_REP_FLAG: This 1-bit flag indicates whether the PLS2 repetition mode is used in the current frame-group. When this field is set to value '1', the PLS2 repetition mode is activated. When this field is set to value '0', the PLS2 repetition mode is deactivated.

PLS2_REP_SIZE_CELL: This 15-bit field indicates Ctotal_partial block, the size (specified as the number of QAM cells) of the collection of partial coded blocks for PLS2 carried in every frame of the current frame-group, when PLS2 repetition is used. If repetition is not used, the value of this field is equal to 0. This value is constant during the entire duration of the current frame-group.

PLS2_NEXT_FEC_TYPE: This 2-bit field indicates the FEC type used for PLS2 that is carried in every frame of the next frame-group. The FEC type is signaled according to the table 10.

PLS2_NEXT_MOD: This 3-bit field indicates the modulation type used for PLS2 that is carried in every frame of the next frame-group. The modulation type is signaled according to the table 11.

PLS2_NEXT_REP_FLAG: This 1-bit flag indicates whether the PLS2 repetition mode is used in the next frame-group. When this field is set to value '1', the PLS2 repetition mode is activated. When this field is set to value '0', the PLS2 repetition mode is deactivated.

PLS2_NEXT_REP_SIZE_CELL: This 15-bit field indicates Ctotal_full_block, The size (specified as the number of QAM cells) of the collection of full coded blocks for PLS2 that is carried in every frame of the next frame-group, when PLS2 repetition is used. If repetition is not used in the next frame-group, the value of this field is equal to 0. This value is constant during the entire duration of the current frame-group.

PLS2_NEXT_REP_STAT_SIZE_BIT: This 14-bit field indicates the size, in bits, of the PLS2-STAT for the next frame-group. This value is constant in the current frame-group.

PLS2_NEXT_REP_DYN_SIZE_BIT: This 14-bit field indicates the size, in bits, of the PLS2-DYN for the next frame-group. This value is constant in the current frame-group.

PLS2_AP_MODE: This 2-bit field indicates whether additional parity is provided for PLS2 in the current frame-group. This value is constant during the entire duration of the current frame-group. The below table 12 gives the values of this field. When this field is set to '00', additional parity is not used for the PLS2 in the current frame-group.

[Table 12]

| Value | PLS2-AP mode |
|---|---|
| 00 | AP is not provided |
| 01 | AP1 mode |
| 10~11 | Reserved |

PLS2_AP_SIZE_CELL: This 15-bit field indicates the size (specified as the number of QAM cells) of the additional parity bits of the PLS2. This value is constant during the entire duration of the current frame-group.

PLS2_NEXT_AP_MODE: This 2-bit field indicates whether additional parity is provided for PLS2 signaling in every frame of next frame-group. This value is constant during the entire duration of the current frame-group. The table 12 defines the values of this field

PLS2_NEXT_AP_SIZE_CELL: This 15-bit field indicates the size (specified as the number of QAM cells) of the additional parity bits of the PLS2 in every frame of the next frame-group. This value is constant during the entire duration of the current frame-group.

RESERVED: This 32-bit field is reserved for future use.

CRC_32: A 32-bit error detection code, which is applied to the entire PLS1 signaling.

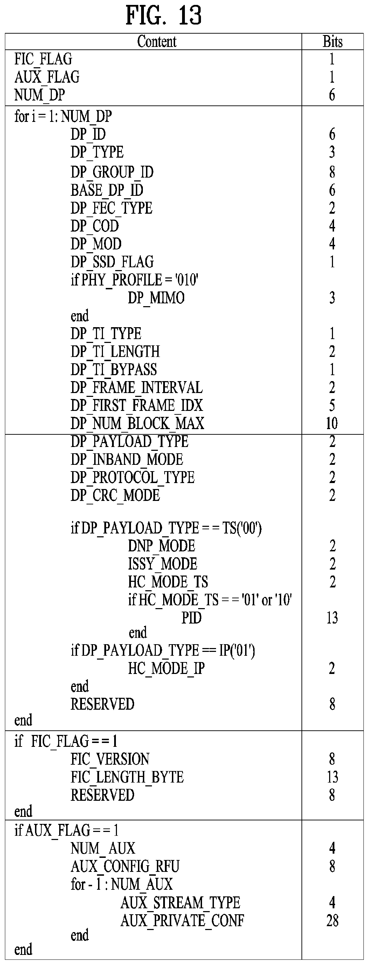

FIG. 13 illustrates PLS2 data according to an embodiment of the present invention.

FIG. 13 illustrates PLS2-STAT data of the PLS2 data. The PLS2-STAT data are the same within a frame-group, while the PLS2-DYN data provide information that is specific for the current frame.

The details of fields of the PLS2-STAT data are as follows:

FIC_FLAG: This 1-bit field indicates whether the FIC is used in the current frame-group. If this field is set to '1', the FIC is provided in the current frame. If this field set to '0', the FIC is not carried in the current frame. This value is constant during the entire duration of the current frame-group.

AUX_FLAG: This 1-bit field indicates whether the auxiliary stream(s) is used in the current frame-group. If this field is set to '1', the auxiliary stream is provided in the current frame. If this field set to '0', the auxiliary stream is not carried in the current frame. This value is constant during the entire duration of current frame-group.

NUM_DP: This 6-bit field indicates the number of DPs carried within the current frame. The value of this field ranges from 1 to 64, and the number of DPs is NUM_DP+1.

DP_ID: This 6-bit field identifies uniquely a DP within a PHY profile.

DP_TYPE: This 3-bit field indicates the type of the DP. This is signaled according to the below table 13.

[Table 13]

| Value | DP Type |
|---|---|
| 000 | DP Type 1 |
| 001 | DP Type 2 |
| 010~111 | reserved |

DP_GROUP_ID: This 8-bit field identifies the DP group with which the current DP is associated. This can be used by a receiver to access the DPs of the service components associated with a particular service, which will have the same DP_GROUP_ID.

BASE_DP_ID: This 6-bit field indicates the DP carrying service signaling data (such as PSI/SI) used in the Management layer. The DP indicated by BASE_DP_ID may be either a normal DP carrying the service signaling data along with the service data or a dedicated DP carrying only the service signaling data

DP_FEC_TYPE: This 2-bit field indicates the FEC type used by the associated DP. The FEC type is signaled according to the below table 14.

[Table 14]

| Value | FEC_TYPE |
|---|---|
| 00 | 16K LDPC |
| 01 | 64K LDPC |

(continued)

| Value | FEC_TYPE |
|-------|----------|
| 10 ~ 11 | Reserved |

DP_COD: This 4-bit field indicates the code rate used by the associated DP. The code rate is signaled according to the below table 15.

[Table 15]

| Value | Code rate |
|-------|-----------|
| 0000 | 5/15 |
| 0001 | 6/15 |
| 0010 | 7/15 |
| 0011 | 8/15 |
| 0100 | 9/15 |
| 0101 | 10/15 |
| 0110 | 11/15 |
| 0111 | 12/15 |
| 1000 | 13/15 |
| 1001 ~ 1111 | Reserved |

DP_MOD: This 4-bit field indicates the modulation used by the associated DP. The modulation is signaled according to the below table 16.

[Table 16]

| Value | Modulation |
|-------|-----------|
| 0000 | QPSK |
| 0001 | QAM-16 |
| 0010 | NUQ-64 |
| 0011 | NUQ-256 |
| 0100 | NUQ-1024 |
| 0101 | NUC-16 |
| 0110 | NUC-64 |
| 0111 | NUC-256 |
| 1000 | NUC-1024 |
| 1001~1111 | reserved |

DP_SSD_FLAG: This 1-bit field indicates whether the SSD mode is used in the associated DP. If this field is set to value '1', SSD is used. If this field is set to value '0', SSD is not used.
The following field appears only if PHY_PROFILE is equal to '010', which indicates the advanced profile:
DP_MIMO: This 3-bit field indicates which type of MIMO encoding process is applied to the associated DP. The type of MIMO encoding process is signaled according to the table 17.

[Table 17]

| Value | MIMO encoding |
|-------|---------------|
| 000 | FR-SM |
| 001 | FRFD-SM |
| 010~111 | reserved |

DP_TI_TYPE: This 1-bit field indicates the type of time-interleaving. A value of '0' indicates that one TI group corresponds to one frame and contains one or more TI-blocks. A value of '1' indicates that one TI group is carried in more than one frame and contains only one TI-block.

DP_TI_LENGTH: The use of this 2-bit field (the allowed values are only 1, 2, 4, 8) is determined by the values set within the DP_TI_TYPE field as follows:

If the DP_TI_TYPE is set to the value '1', this field indicates PI, the number of the frames to which each TI group is mapped, and there is one TI-block per TI group (NTI=1). The allowed PI values with 2-bit field are defined in the below table 18.

If the DP_TI_TYPE is set to the value '0', this field indicates the number of TI-blocks NTI per TI group, and there is one TI group per frame (PI=1). The allowed PI values with 2-bit field are defined in the below table 18.

[Table 18]

| 2-bit field | $P_I$ | $N_{TI}$ |
|-------------|-------|----------|
| 00 | 1 | 1 |
| 01 | 2 | 2 |
| 10 | 4 | 3 |
| 11 | 8 | 4 |

DP_FRAME_INTERVAL: This 2-bit field indicates the frame interval (IJUMP) within the frame-group for the associated DP and the allowed values are 1, 2, 4, 8 (the corresponding 2-bit field is '00', '01', '10', or '11', respectively). For DPs that do not appear every frame of the frame-group, the value of this field is equal to the interval between successive frames. For example, if a DP appears on the frames 1, 5, 9, 13, etc., this field is set to '4'. For DPs that appear in every frame, this field is set to '1'.

DP_TI_BYPASS: This 1-bit field determines the availability of time interleaver 5050. If time interleaving is not used for a DP, it is set to '1'. Whereas if time interleaving is used it is set to '0'.

DP_FIRST_FRAME_IDX: This 5-bit field indicates the index of the first frame of the super-frame in which the current DP occurs. The value of DP_FIRST_FRAME_IDX ranges from 0 to 31

DP_NUM_BLOCK_MAX: This 10-bit field indicates the maximum value of DP_NUM_BLOCKS for this DP. The value of this field has the same range as DP_NUM_BLOCKS.

DP_PAYLOAD_TYPE: This 2-bit field indicates the type of the payload data carried by the given DP. DP_PAYLOAD_TYPE is signaled according to the below table 19.

[Table 19]

| Value | Payload Type |
|-------|--------------|
| 00 | TS. |
| 01 | IP |
| 10 | GS |
| 11 | reserved |

DP_INBAND_MODE: This 2-bit field indicates whether the current DP carries in-band signaling information. The in-band signaling type is signaled according to the below table 20.

[Table 20]

| Value | In-band mode |
|---|---|
| 00 | In-band signaling is not carried. |
| 01 | INBAND-PLS is carried only |
| 10 | INBAND-ISSY is carried only |
| 11 | INBAND-PLS and INBAND-ISSY are carried |

DP_PROTOCOL_TYPE: This 2-bit field indicates the protocol type of the payload carried by the given DP. It is signaled according to the below table 21 when input payload types are selected.

[Table 21]

| Value | If DP PAYLOAD TYPE Is TS | If DP PAYLOAD TYPE Is IP | If DP PAYLOAD TYPE Is GS |
|---|---|---|---|
| 00 | MPEG2-TS | IPv4 | (Note) |
| 01 | Reserved | IPv6 | Reserved |
| 10 | Reserved | Reserved | Reserved |
| 11 | Reserved | Reserved | Reserved |

DP_CRC_MODE: This 2-bit field indicates whether CRC encoding is used in the Input Formatting block. The CRC mode is signaled according to the below table 22.

[Table 22]

| Value | CRC mode |
|---|---|
| 00 | Not used |
| 01 | CRC-8 |
| 10 | CRC-16 |
| 11 | CRC-32 |

DNP_MODE: This 2-bit field indicates the null-packet deletion mode used by the associated DP when DP_PAYLOAD_TYPE is set to TS ('00'). DNP_MODE is signaled according to the below table 23. If DP_PAYLOAD_TYPE is not TS ('00'), DNP_MODE is set to the value '00'.

[Table 23]

| Value | Null-packet deletion mode |
|---|---|
| 00 | Not used |
| 01 | DNP-NORMAL |
| 10 | DNP-OFFSET |
| 11 | reserved |

ISSY_MODE: This 2-bit field indicates the ISSY mode used by the associated DP when DP_PAYLOAD_TYPE is set to TS ('00'). The ISSY_MODE is signaled according to the below table 24 If DP_PAYLOAD_TYPE is not TS ('00'), ISSY_MODE is set to the value '00'.

[Table 24]

| Value | ISSY mode |
|---|---|
| 00 | Not used |

(continued)

| Value | ISSY mode |
|---|---|
| 01 | ISSY-UP |
| 10 | ISSY-BBF |
| 11 | reserved |

HC_MODE_TS: This 2-bit field indicates the TS header compression mode used by the associated DP when DP_PAYLOAD_TYPE is set to TS ('00'). The HC_MODE_TS is signaled according to the below table 25.

[Table 25]

| Value | Header compression mode |
|---|---|
| 00 | HC_MODE_TS 1 |
| 01 | HC_MODE_TS 2 |
| 10 | HC_MODE_TS 3 |
| 11 | HC_MODE_TS 4 |

HC_MODE_IP: This 2-bit field indicates the IP header compression mode when DP_PAYLOAD_TYPE is set to IP ('01'). The HC_MODE_IP is signaled according to the below table 26.

[Table 26]

| Value | Header compression mode |
|---|---|
| 00 | No compression |
| 01 | HC_MODE_IP 1 |
| 10~11 | reserved |

PID : This 13-bit field indicates the PID number for TS header compression when DP_PAYLOAD_TYPE is set to TS ('00') and HC_MODE_TS is set to '01' or '10'.

RESERVED: This 8-bit field is reserved for future use.

The following field appears only if FIC_FLAG is equal to '1':

FIC_VERSION: This 8-bit field indicates the version number of the FIC.

FIC_LENGTH_BYTE: This 13-bit field indicates the length, in bytes, of the FIC.

RESERVED: This 8-bit field is reserved for future use.

The following field appears only if AUX_FLAG is equal to '1':

NUM_AUX: This 4-bit field indicates the number of auxiliary streams. Zero means no auxiliary streams are used.

AUX_CONFIG_RFU: This 8-bit field is reserved for future use.

AUX_STREAM_TYPE: This 4-bit is reserved for future use for indicating the type of the current auxiliary stream.

AUX_PRIVATE_CONFIG: This 28-bit field is reserved for future use for signaling auxiliary streams.

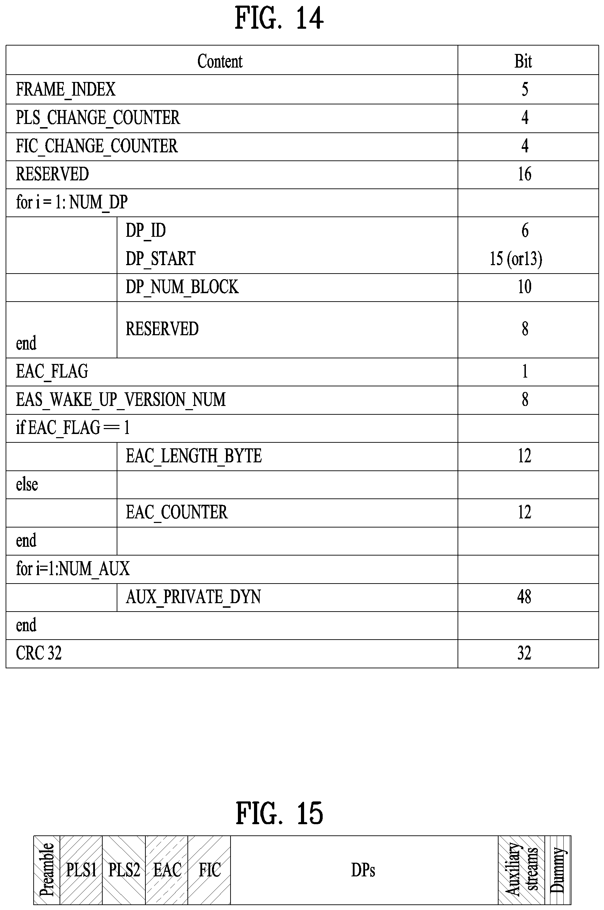

FIG. 14 illustrates PLS2 data according to another embodiment of the present invention.

FIG. 14 illustrates PLS2-DYN data of the PLS2 data. The values of the PLS2-DYN data may change during the duration of one frame-group, while the size of fields remains constant.

The details of fields of the PLS2-DYN data are as follows:

FRAME_INDEX: This 5-bit field indicates the frame index of the current frame within the super-frame. The index of the first frame of the super-frame is set to '0'.

PLS_CHANGE_COUNTER: This 4-bit field indicates the number of super-frames ahead where the configuration will change. The next super-frame with changes in the configuration is indicated by the value signaled within this field. If this field is set to the value '0000', it means that no scheduled change is foreseen: e.g., value '1' indicates that there is a change in the next super-frame.

FIC_CHANGE_COUNTER: This 4-bit field indicates the number of super-frames ahead where the configuration (i.e., the contents of the FIC) will change. The next super-frame with changes in the configuration is indicated by the value signaled within this field. If this field is set to the value '0000', it means that no scheduled change is foreseen: e.g. value '0001' indicates that there is a change in the next super-frame..

RESERVED: This 16-bit field is reserved for future use.

The following fields appear in the loop over NUM_DP, which describe the parameters associated with the DP carried in the current frame.

DP_ID: This 6-bit field indicates uniquely the DP within a PHY profile.

DP_START: This 15-bit (or 13-bit) field indicates the start position of the first of the DPs using the DPU addressing scheme. The DP_START field has differing length according to the PHY profile and FFT size as shown in the below table 27.

[Table 27]

| PHY profile | DP START field size | |
|---|---|---|
| | 64K | 16K |
| Base | 13 bit | 15 bit |
| Handheld | - | 13 bit |
| Advanced | 13 bit | 15 bit |

DP_NUM_BLOCK: This 10-bit field indicates the number of FEC blocks in the current TI group for the current DP. The value of DP_NUM_BLOCK ranges from 0 to 1023

RESERVED: This 8-bit field is reserved for future use.

The following fields indicate the FIC parameters associated with the EAC.

EAC FLAG: This 1-bit field indicates the existence of the EAC in the current frame. This bit is the same value as the EAC_FLAG in the preamble.

EAS_WAKE_UP_VERSION_NUM: This 8-bit field indicates the version number of a wake-up indication.

If the EAC_FLAG field is equal to '1', the following 12 bits are allocated for EAC_LENGTH_BYTE field. If the EAC_FLAG field is equal to '0', the following 12 bits are allocated for EAC_COUNTER.

EAC_LENGTH_BYTE: This 12-bit field indicates the length, in byte, of the EAC..

EAC_COUNTER: This 12-bit field indicates the number of the frames before the frame where the EAC arrives.

The following field appears only if the AUX_FLAG field is equal to '1':

AUX_PRIVATE_DYN: This 48-bit field is reserved for future use for signaling auxiliary streams. The meaning of this field depends on the value of AUX_STREAM_TYPE in the configurable PLS2-STAT.

CRC_32: A 32-bit error detection code, which is applied to the entire PLS2.

FIG. 15 illustrates a logical structure of a frame according to an embodiment of the present invention.

As above mentioned, the PLS, EAC, FIC, DPs, auxiliary streams and dummy cells are mapped into the active carriers of the OFDM symbols in the frame. The PLS1 and PLS2 are first mapped into one or more FSS(s). After that, EAC cells, if any, are mapped immediately following the PLS field, followed next by FIC cells, if any. The DPs are mapped next after the PLS or EAC, FIC, if any. Type 1 DPs follows first, and Type 2 DPs next. The details of a type of the DP will be described later. In some case, DPs may carry some special data for EAS or service signaling data. The auxiliary stream or streams, if any, follow the DPs, which in turn are followed by dummy cells. Mapping them all together in the above mentioned order, i.e. PLS, EAC, FIC, DPs, auxiliary streams and dummy data cells exactly fill the cell capacity in the frame.

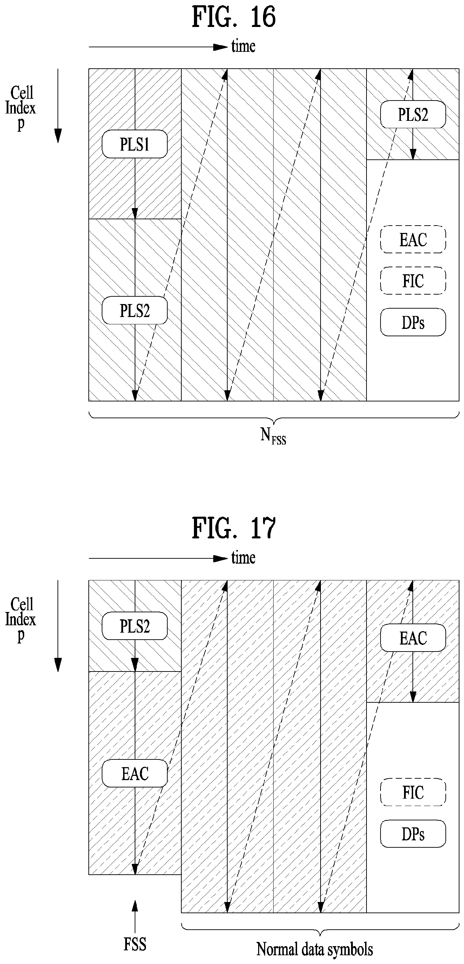

FIG. 16 illustrates PLS mapping according to an embodiment of the present invention.

PLS cells are mapped to the active carriers of FSS(s). Depending on the number of cells occupied by PLS, one or more symbols are designated as FSS(s), and the number of FSS(s) NFSS is signaled by NUM_FSS in PLS1. The FSS is a special symbol for carrying PLS cells. Since robustness and latency are critical issues in the PLS, the FSS(s) has higher density of pilots allowing fast synchronization and frequency-only interpolation within the FSS.

PLS cells are mapped to active carriers of the NFSS FSS(s) in a top-down manner as shown in an example in FIG. 16. The PLS1 cells are mapped first from the first cell of the first FSS in an increasing order of the cell index. The PLS2 cells follow immediately after the last cell of the PLS 1 and mapping continues downward until the last cell index of the first FSS. If the total number of required PLS cells exceeds the number of active carriers of one FSS, mapping proceeds to the next FSS and continues in exactly the same manner as the first FSS.

After PLS mapping is completed, DPs are carried next. If EAC, FIC or both are present in the current frame, they are placed between PLS and "normal" DPs.

FIG. 17 illustrates EAC mapping according to an embodiment of the present invention.

EAC is a dedicated channel for carrying EAS messages and links to the DPs for EAS. EAS support is provided but EAC itself may or may not be present in every frame. EAC, if any, is mapped immediately after the PLS2 cells. EAC is not preceded by any of the FIC, DPs, auxiliary streams or dummy cells other than the PLS cells. The procedure of mapping the EAC cells is exactly the same as that of the PLS.

The EAC cells are mapped from the next cell of the PLS2 in increasing order of the cell index as shown in the example in FIG. 17. Depending on the EAS message size, EAC cells may occupy a few symbols, as shown in FIG. 17.

EAC cells follow immediately after the last cell of the PLS2, and mapping continues downward until the last cell index of the last FSS. If the total number of required EAC cells exceeds the number of remaining active carriers of the last FSS mapping proceeds to the next symbol and continues in exactly the same manner as FSS(s). The next symbol for mapping in this case is the normal data symbol, which has more active carriers than a FSS.

After EAC mapping is completed, the FIC is carried next, if any exists. If FIC is not transmitted (as signaled in the PLS2 field), DPs follow immediately after the last cell of the EAC.

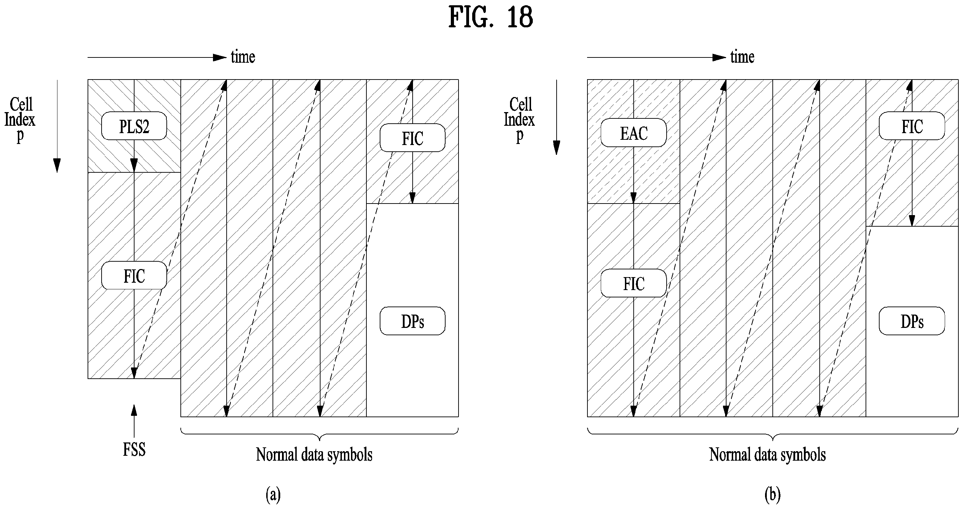

FIG. 18 illustrates FIC mapping according to an embodiment of the present invention.

shows an example mapping of FIC cell without EAC and (b) shows an example mapping of FIC cell with EAC.

FIC is a dedicated channel for carrying cross-layer information to enable fast service acquisition and channel scanning. This information primarily includes channel binding information between DPs and the services of each broadcaster. For fast scan, a receiver can decode FIC and obtain information such as broadcaster ID, number of services, and BASE_DP_ID. For fast service acquisition, in addition to FIC, base DP can be decoded using BASE_DP_ID. Other than the content it carries, a base DP is encoded and mapped to a frame in exactly the same way as a normal DP. Therefore, no additional description is required for a base DP. The FIC data is generated and consumed in the Management Layer. The content of FIC data is as described in the Management Layer specification.

The FIC data is optional and the use of FIC is signaled by the FIC_FLAG parameter in the static part of the PLS2. If FIC is used, FIC_FLAG is set to '1' and the signaling field for FIC is defined in the static part of PLS2. Signaled in this field are FIC_VERSION, and FIC_LENGTH_BYTE. FIC uses the same modulation, coding and time interleaving parameters as PLS2. FIC shares the same signaling parameters such as PLS2_MOD and PLS2_FEC. FIC data, if any, is mapped immediately after PLS2 or EAC if any. FIC is not preceded by any normal DPs, auxiliary streams or dummy cells. The method of mapping FIC cells is exactly the same as that of EAC which is again the same as PLS.

Without EAC after PLS, FIC cells are mapped from the next cell of the PLS2 in an increasing order of the cell index as shown in an example in (a). Depending on the FIC data size, FIC cells may be mapped over a few symbols, as shown in (b).

FIC cells follow immediately after the last cell of the PLS2, and mapping continues downward until the last cell index of the last FSS. If the total number of required FIC cells exceeds the number of remaining active carriers of the last FSS, mapping proceeds to the next symbol and continues in exactly the same manner as FSS(s). The next symbol for mapping in this case is the normal data symbol which has more active carriers than a FSS.

If EAS messages are transmitted in the current frame, EAC precedes FIC, and FIC cells are mapped from the next cell of the EAC in an increasing order of the cell index as shown in (b).

After FIC mapping is completed, one or more DPs are mapped, followed by auxiliary streams, if any, and dummy cells.

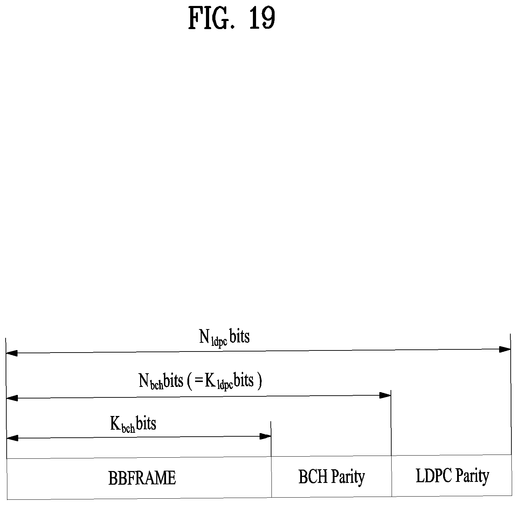

FIG. 19 illustrates an FEC structure according to an embodiment of the present invention.

FIG. 19 illustrates an FEC structure according to an embodiment of the present invention before bit interleaving. As above mentioned, Data FEC encoder may perform the FEC encoding on the input BBF to generate FECBLOCK procedure using outer coding (BCH), and inner coding (LDPC). The illustrated FEC structure corresponds to the FECBLOCK. Also, the FECBLOCK and the FEC structure have same value corresponding to a length of LDPC codeword.

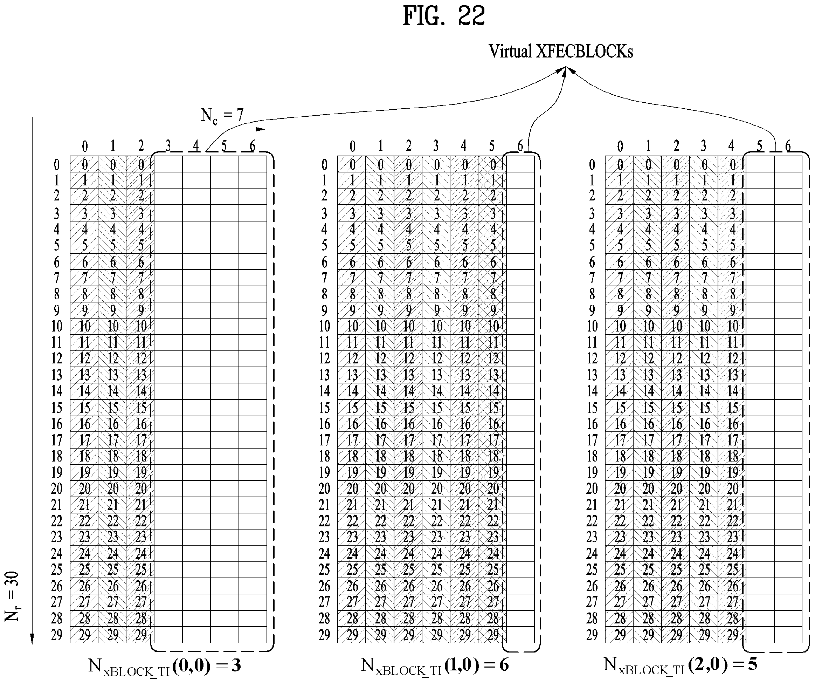

The BCH encoding is applied to each BBF (Kbch bits), and then LDPC encoding is applied to BCH-encoded BBF (Kldpc bits = Nbch bits) as illustrated in FIG. 22.

The value of Nldpc is either 64800 bits (long FECBLOCK) or 16200 bits (short FECBLOCK).

The below table 28 and table 29 show FEC encoding parameters for a long FECBLOCK and a short FECBLOCK, respectively.

[Table 28]

| LDPC Rate | $N_{ldpc}$ | $K_{ldpc}$ | $K_{bch}$ | BCH error correction capability | $N_{bch}$-Kbch |
|---|---|---|---|---|---|
| 5/15 | | 21600 | 21408 | | |
| 6/15 | | 25920 | 25728 | | |
| 7/15 | | 30240 | 30048 | | |
| 8/15 | | 34560 | 34368 | | |

(continued)

| LDPC Rate | N$_{ldpc}$ | K$_{ldpc}$ | K$_{bch}$ | BCH error correction capability | N$_{bch}$-Kbch |
|---|---|---|---|---|---|
| 9/15 | 64800 | 38880 | 38688 | 12 | 192 |
| 10/15 | | 43200 | 43008 | | |
| 11/15 | | 47520 | 47328 | | |
| 12/15 | | 51840 | 51648 | | |
| 13/15 | | 56160 | 55968 | | |

[Table 29]

| LDPC Rate | N$_{ldpc}$ | K$_{ldpc}$ | K$_{bch}$ | BCH error correction capability | N$_{bch}$-K$_{bch}$ |
|---|---|---|---|---|---|
| 5/15 | | 5400 | 5232 | | |
| 6/15 | | 6480 | 6312 | | |
| 7/15 | | 7560 | 7392 | | |
| 8/15 | | 8640 | 8472 | | |
| 9/15 | 16200 | 9720 | 9552 | 12 | 168 |
| 10/15 | | 10800 | 10632 | | |
| 11/15 | | 11880 | 11712 | | |
| 12/15 | | 12960 | 12792 | | |
| 13/15 | | 14040 | 13872 | | |

The details of operations of the BCH encoding and LDPC encoding are as follows:

A 12-error correcting BCH code is used for outer encoding of the BBF. The BCH generator polynomial for short FECBLOCK and long FECBLOCK are obtained by multiplying together all polynomials.

LDPC code is used to encode the output of the outer BCH encoding. To generate a completed Bldpc (FECBLOCK), Pldpc (parity bits) is encoded systematically from each Ildpc (BCH-encoded BBF), and appended to Ildpc. The completed Bldpc (FECBLOCK) are expressed as follow equation.

【Equation2】

$$B_{ldpc} = [\,\mathbf{I}_{ldpc}\ \ \mathbf{P}_{ldpc}\,] = [\,i_0, i_1, ..., i_{K_{ldpc}-1},\ p_0, p_1, ..., p_{N_{ldpc}-K_{ldpc}-1}\,]$$

The parameters for long FECBLOCK and short FECBLOCK are given in the above table 28 and 29, respectively.
The detailed procedure to calculate Nldpc - Kldpc parity bits for long FECBLOCK, is as follows:

1) Initialize the parity bits,

【Equation3】

$$p_0 = p_1 = p_2 = ... = p_{N_{ldpc}-K_{ldpc}-1} = 0$$

2) Accumulate the first information bit - i0, at parity bit addresses specified in the first row of an addresses of parity check matrix. The details of addresses of parity check matrix will be described later. For example, for rate 13/15:

**【Equation 4】**

$$p_{983} = p_{983} \oplus i_0 \qquad p_{2815} = p_{2815} \oplus i_0$$

$$p_{4837} = p_{4837} \oplus i_0 \qquad p_{4989} = p_{4989} \oplus i_0$$

$$p_{6138} = p_{6138} \oplus i_0 \qquad p_{6458} = p_{6458} \oplus i_0$$

$$p_{6921} = p_{6921} \oplus i_0 \qquad p_{6974} = p_{6974} \oplus i_0$$

$$p_{7572} = p_{7572} \oplus i_0 \qquad p_{8260} = p_{8260} \oplus i_0$$

$$p_{8496} = p_{8496} \oplus i_0$$

3) For the next 359 information bits, is, s=1, 2, ..., 359 accumulate is at parity bit addresses using following equation.

**【Equation 5】**

$$\{x + (s \bmod 360) \times Q_{ldpc}\} \bmod (N_{ldpc} - K_{ldpc})$$

where x denotes the address of the parity bit accumulator corresponding to the first bit i0, and Qldpc is a code rate dependent constant specified in the addresses of parity check matrix. Continuing with the example, Qldpc = 24 for rate 13/15, so for information bit i1, the following operations are performed:

**【Equation 6】**

$$p_{1007} = p_{1007} \oplus i_1 \qquad p_{2839} = p_{2839} \oplus i_1$$

$$p_{4861} = p_{4861} \oplus i_1 \qquad p_{5013} = p_{5013} \oplus i_1$$

$$p_{6162} = p_{6162} \oplus i_1 \qquad p_{6482} = p_{6482} \oplus i_1$$

$$p_{6945} = p_{6945} \oplus i_1 \qquad p_{6998} = p_{6998} \oplus i_1$$

$$p_{7596} = p_{7596} \oplus i_1 \qquad p_{8284} = p_{8284} \oplus i_1$$

$$p_{8520} = p_{8520} \oplus i_1$$

4) For the 361st information bit i360, the addresses of the parity bit accumulators are given in the second row of the addresses of parity check matrix. In a similar manner the addresses of the parity bit accumulators for the following 359 information bits is, s= 361, 362, ..., 719 are obtained using the equation 6, where x denotes the address of the parity bit accumulator corresponding to the information bit i360, i.e., the entries in the second row of the addresses of parity check matrix.
5) In a similar manner, for every group of 360 new information bits, a new row from addresses of parity check matrixes used to find the addresses of the parity bit accumulators.

After all of the information bits are exhausted, the final parity bits are obtained as follows:
6) Sequentially perform the following operations starting with i=1

【Equation 7】

$$p_i = p_i \oplus p_{i-1}, \qquad i = 1, 2, ..., N_{ldpc} - K_{ldpc} - 1$$

where final content of pi, i=0,1,...Nldpc - Kldpc - 1 is equal to the parity bit pi.

[Table 30]

| Code Rate | $Q_{ldpc}$ |
|-----------|------------|
| 5/15 | 120 |
| 6/15 | 108 |
| 7/15 | 96 |
| 8/15 | 84 |
| 9/15 | 72 |
| 10/15 | 60 |
| 11/15 | 48 |
| 12/15 | 36 |
| 13/15 | 24 |

This LDPC encoding procedure for a short FECBLOCK is in accordance with the LDPC encoding procedure for the long FECBLOCK, except replacing the table 30 with table 31, and replacing the addresses of parity check matrix for the long FECBLOCK with the addresses of parity check matrix for the short FECBLOCK.

[Table 31]

| Code Rate | $Q_{ldpc}$ |
|-----------|------------|
| 5/15 | 30 |
| 6/15 | 27 |
| 7/15 | 24 |
| 8/15 | 21 |
| 9/15 | 18 |
| 10/15 | 15 |
| 11/15 | 12 |
| 12/15 | 9 |
| 13/15 | 6 |

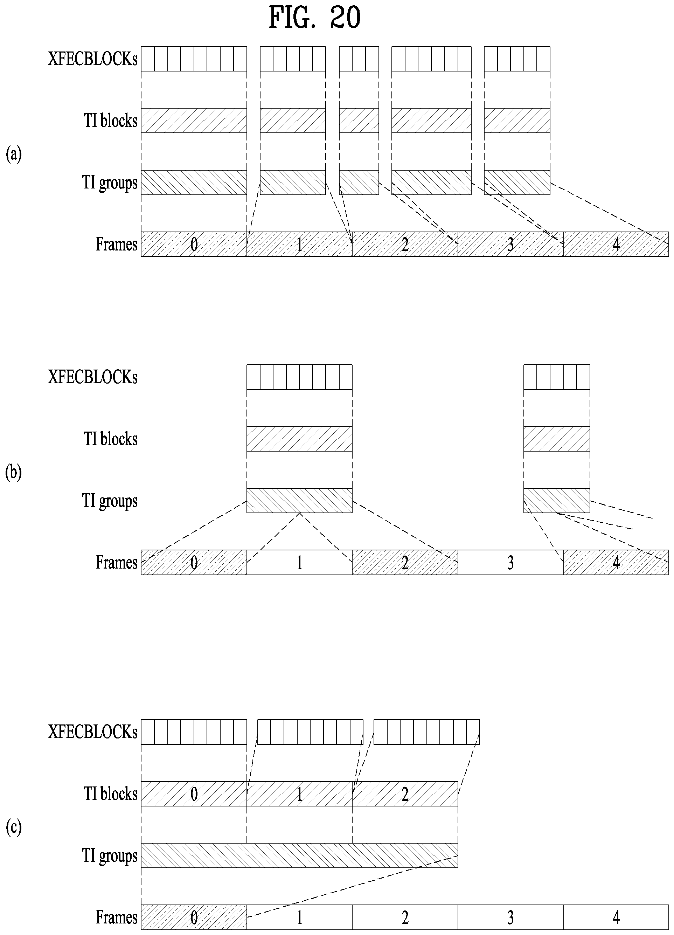

FIG. 20 illustrates a time interleaving according to an embodiment of the present invention.

(a) to (c) show examples of TI mode.

The time interleaver operates at the DP level. The parameters of time interleaving (TI) may be set differently for each DP.
The following parameters, which appear in part of the PLS2-STAT data, configure the TI:

DP_TI_TYPE (allowed values: 0 or 1): Represents the TI mode; '0' indicates the mode with multiple TI blocks (more than one TI block) per TI group. In this case, one TI group is directly mapped to one frame (no inter-frame interleaving). '1' indicates the mode with only one TI block per TI group. In this case, the TI block may be spread over more than one frame (inter-frame interleaving).

DP_TI_LENGTH: If DP_TI_TYPE = '0', this parameter is the number of TI blocks NTI per TI group. For DP_TI_TYPE = '1', this parameter is the number of frames PI spread from one TI group.

DP_NUM_BLOCK_MAX (allowed values: 0 to 1023): Represents the maximum number of XFECBLOCKs per TI group.

DP_FRAME_INTERVAL (allowed values: 1, 2, 4, 8): Represents the number of the frames IJUMP between two successive frames carrying the same DP of a given PHY profile.

DP_TI_BYPASS (allowed values: 0 or 1): If time interleaving is not used for a DP, this parameter is set to '1'. It is set to '0' if time interleaving is used.

Additionally, the parameter DP_NUM_BLOCK from the PLS2-DYN data is used to represent the number of XFECBLOCKs carried by one TI group of the DP.

When time interleaving is not used for a DP, the following TI group, time interleaving operation, and TI mode are not considered. However, the Delay Compensation block for the dynamic configuration information from the scheduler will still be required. In each DP, the XFECBLOCKs received from the SSD/MIMO encoding are grouped into TI groups. That is, each TI group is a set of an integer number of XFECBLOCKs and will contain a dynamically variable number of XFECBLOCKs. The number of XFECBLOCKs in the TI group of index n is denoted by NxBLOCK_Group(n) and is signaled as DP_NUM_BLOCK in the PLS2-DYN data. Note that NxBLOCK_Group(n) may vary from the minimum value of 0 to the maximum value NxBLOCK_Group_MAX (corresponding to DP_NUM_BLOCK_MAX) of which the largest value is 1023.

Each TI group is either mapped directly onto one frame or spread over PI frames. Each TI group is also divided into more than one TI blocks(NTI), where each TI block corresponds to one usage of time interleaver memory. The TI blocks within the TI group may contain slightly different numbers of XFECBLOCKs. If the TI group is divided into multiple TI blocks, it is directly mapped to only one frame. There are three options for time interleaving (except the extra option of skipping the time interleaving) as shown in the below table 32.

[Table 32]

| Modes | Descriptions |
|---|---|
| Option-1 | Each TI group contains one TI block and is mapped directly to one frame as shown in (a). This option is signaled in the PLS2-STAT by DP_TI_TYPE='0' and DP TI LENGTH ='1'($N_{TI}$=1). |
| Option-2 | Each TI group contains one TI block and is mapped to more than one frame. (b) shows an example, where one TI group is mapped to two frames, i.e., DP TI LENGTH ='2' ($P_I$=2) and DP FRAME INTERVAL ($I_{JUMP}$ = 2). This provides greater time diversity for low data-rate services. This option is signaled in the PLS2-STAT by DP_TI_TYPE ='1'. |
| Option-3 | Each TI group is divided into multiple TI blocks and is mapped directly to one frame as shown in (c). Each TI block may use full TI memory, so as to provide the maximum bit-rate for a DP. This option is signaled in the PLS2-STAT signaling by DP_TI_TYPE='0' and DP_TI_LENGTH = $N_{TI}$, while $P_I$=1. |

Typically, the time interleaver will also act as a buffer for DP data prior to the process of frame building. This is achieved by means of two memory banks for each DP. The first TI-block is written to the first bank. The second TI-block is written to the second bank while the first bank is being read from and so on.

The TI is a twisted row-column block interleaver. For the sth TI block of the nth TI group, the number of rows $N_r$ of a TI memory is equal to the number of cells $N_{cells}$, i.e., $N_r = N_{cells}$ while the number of columns $N_c$ is equal to the number $N_{xBLOCK\_TI}(n,s)$.

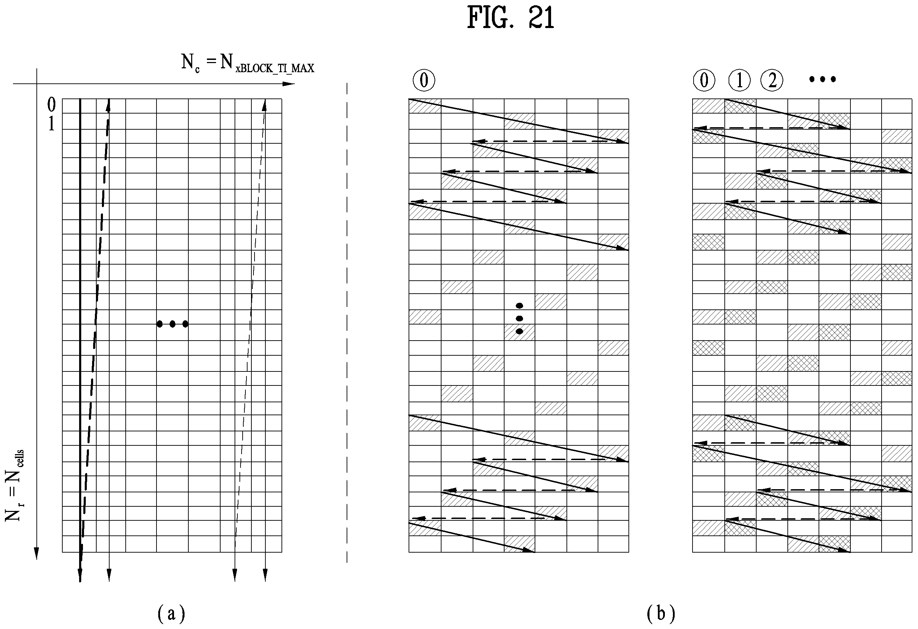

FIG. 21 illustrates the basic operation of a twisted row-column block interleaver according to an embodiment of the present invention.

FIG. 21 (a) shows a writing operation in the time interleaver and FIG. 21(b) shows a reading operation in the time interleaver The first XFECBLOCK is written column-wise into the first column of the TI memory, and the second XFECBLOCK is written into the next column, and so on as shown in (a). Then, in the interleaving array, cells are read out diagonal-wise. During diagonal-wise reading from the first row (rightwards along the row beginning with the left-most column) to the last row, $N_r$ cells are read out as shown in (b). In detail, assuming $Z_{n,s,i}(i=0,...,N_rN_c)$ as the TI memory cell position to be read sequentially, the reading process in such an interleaving array is performed by calculating the row index $R_{n,s,i}$, the column index $C_{n,s,i}$, and the associated twisting parameter $T_{n,s,i}$ as follows equation.

【Equation 8】

$$GENERATE\,(R_{n,s,i}, C_{n,s,i}) =$$

$$\{$$

$$R_{n,s,i} = \mathrm{mod}(i, N_r),$$

$$T_{n,s,i} = \mathrm{mod}(S_{shift} \times R_{n,s,i}, N_c),$$

$$C_{n,s,i} = \mathrm{mod}(T_{n,s,i} + \left\lfloor \frac{i}{N_r} \right\rfloor, N_c)$$

$$\}$$

where $S_{shift}$ is a common shift value for the diagonal-wise reading process regardless of $N_{xBLOCK\_TI}(n,s)$, and it is determined by $N_{xBLOCK\_TI\_MAX}$ given in the PLS2-STAT as follows equation.

【Equation 9】

$$for \begin{cases} N'_{xBLOCK\_TI\_MAX} = N_{xBLOCK\_TI\_MAX} + 1, & if\ N_{xBLOCK\_TI\_MAX}\,\mathrm{mod}2 = 0 \\ N'_{xBLOCK\_TI\_MAX} = N_{xBLOCK\_TI\_MAX}, & if\ N_{xBLOCK\_TI\_MAX}\,\mathrm{mod}2 = 1 \end{cases}$$

$$S_{shift} = \frac{N'_{xBLOCK\_TI\_MAX} - 1}{2}$$

As a result, the cell positions to be read are calculated by a coordinate as $z_{n,s,i} = N_r C_{n,s,i} + R_{n,s,i}$.

FIG. 22 illustrates an operation of a twisted row-column block interleaver according to another embodiment of the present invention.

More specifically, FIG. 22 illustrates the interleaving array in the TI memory for each TI group, including virtual XFECBLOCKs when $N_{xBLOCK\_TI}(0,0)=3$, $N_{xBLOCK\_TI}(1,0)=6$, $N_{xBLOCK\_TI}(2,0)=5$.

The variable number $N_{xBLOCK\_TI}(n,s)=N_r$ will be less than or equal to $N'_{xBLOCK\_TI\_MAX}$. Thus, in order to achieve a single-memory deinterleaving at the receiver side, regardless of $N_{xBLOCK\_TI}(n,s)$, the interleaving array for use in a twisted row-column block interleaver is set to the size of $N_r \times N_c = N_{cells} \times N'_{xBLOCK\_TI\_MAX}$ by inserting the virtual XFECBLOCKs into the TI memory and the reading process is accomplished as follow equation.

【Equation10】

$$p = 0;$$

$$for\ i = 0; i < N_{cells}N'_{xBLOCK\_TI\_MAX}; i = i+1$$

$$\{GENERATE\,(R_{n,s,i}, C_{n,s,i});$$

$$V_i = N_r C_{n,s,j} + R_{n,s,j}$$

$$if\ V_i < N_{cells}N_{xBLOCK\_TI}(n,s)$$

$$\{$$

$$Z_{n,s,p} = V_i;\ p = p+1;$$

$$\}$$

$$\}$$

The number of TI groups is set to 3. The option of time interleaver is signaled in the PLS2-STAT data by DP_TI_TYPE='0', DP_FRAME_INTERVAL='1', and DP_TI_LENGTH='1', i.e.,NTI=1, IJUMP=1, and PI=1. The number of XFECBLOCKs, each of which has Ncells = 30 cells, per TI group is signaled in the PLS2-DYN data by NxBLOCK_TI(0,0)=3, NxBLOCK_TI(1,0)=6, and NxBLOCK_TI(2,0)=5, respectively. The maximum number of XFECBLOCK is signaled in the PLS2-STAT data by NxBLOCK_Group_MAX, which leads to $\lfloor N_{xBLOCK-Group-MAX}/N_{TI}\rfloor = N_{xBLOCK\_TI\_MAX} = 6$.

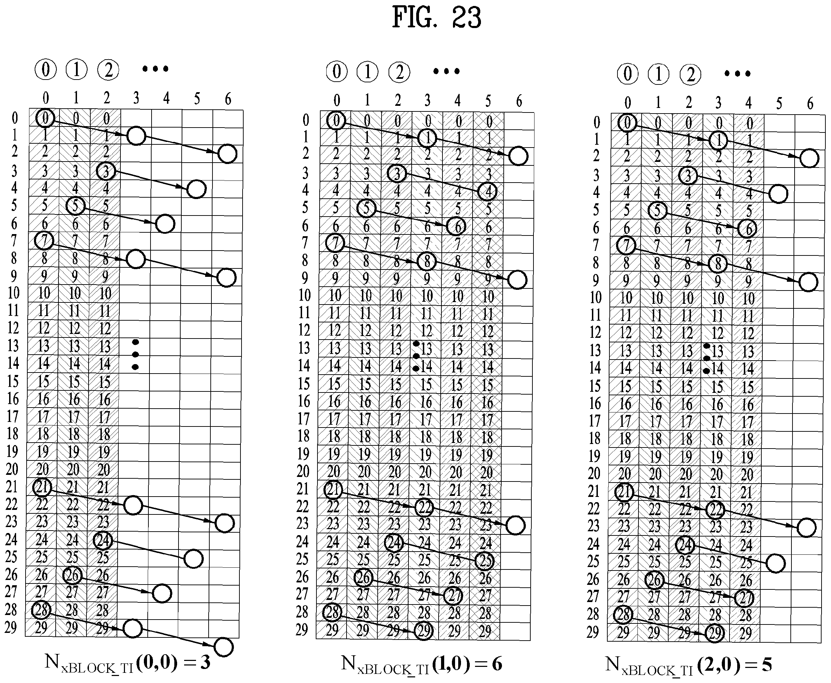

FIG. 23 illustrates a diagonal-wise reading pattern of a twisted row-column block interleaver according to an embodiment of the present invention.

More specifically FIG. 23 shows a diagonal-wise reading pattern from each interleaving array with parameters of $N'_{xBLOCK\_TI\_MAX} = 7$ and Sshift=(7-1)/2=3. Note that in the reading process shown as pseudocode above, if $V_i \geq N_{cells}N_{xBLOCK\_TI}(n,s)$, the value of Vi is skipped and the next calculated value of Vi is used.

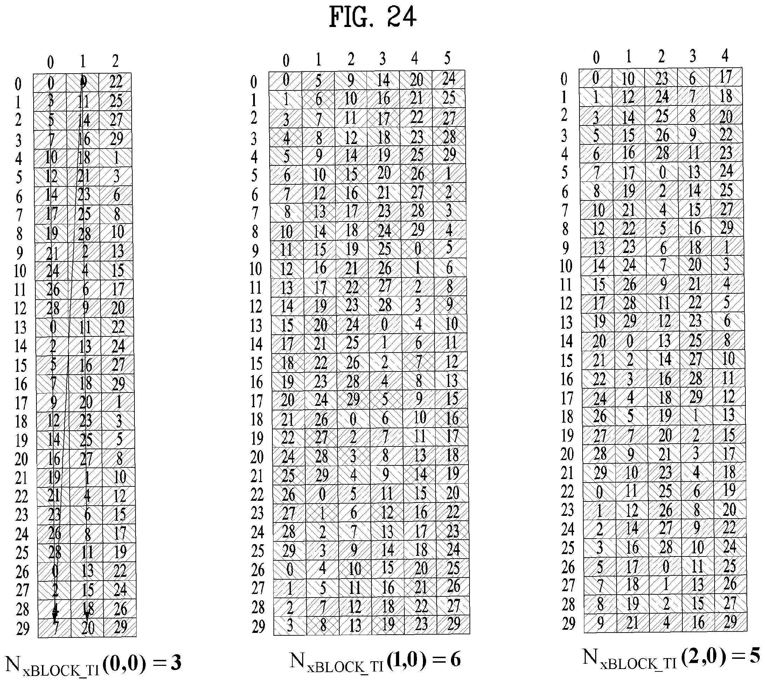

FIG. 24 illustrates interlaved XFECBLOCKs from each interleaving array according to an embodiment of the present invention.

FIG. 24 illustrates the interleaved XFECBLOCKs from each interleaving array with parameters of $N'_{xBLOCK\_TI\_MAX} = 7$ and Sshift=3.

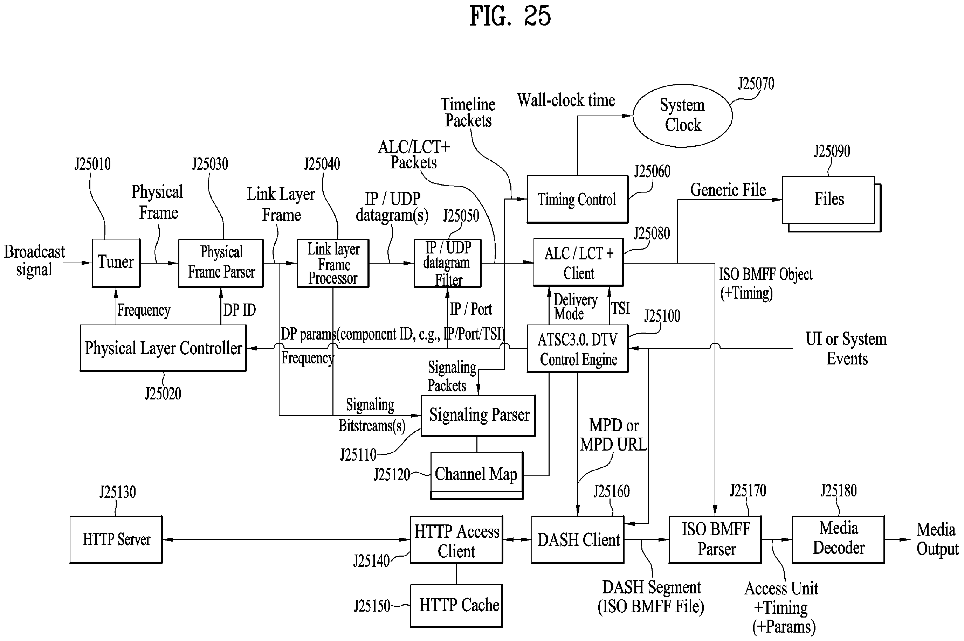

FIG. 25 is a diagram illustrating a hybrid broadcast receiver according to an embodiment of the present invention.

The hybrid broadcast receiver according to an embodiment of the present invention may receive a typical broadcast signal. In addition, the hybrid broadcast receiver may include a network interface for receiving data transmitted in an IP packet.

The hybrid broadcast receiver according to an embodiment of the present invention may include a tuner J25010, a physical layer controller J25020, a physical frame parser J25030, a link layer frame processor J25040, an IP/UDP datagram filter J25050, a timing control J25060, a system clock J25070, an ALC/LCT+ client J25080, files J25090, an ATSC3.0 DTV control engine J25100, a signaling parser J25110, a channel map J25120, an HTTP server J25130, an HTTP access client J25140, an HTTP cache J25150, a DASH client J25160, an ISO BMFF parser J25170, and/or a media decoder J25180.

The tuner J25010 may receive a broadcast signal. The tuner J25010 may tune the broadcast signal to a specific frequency and receive a broadcast signal of the corresponding frequency. The tuner J25010 may extract a physical frame included in the broadcast signal.

The physical layer controller J25020 may perform control related to processing of a broadcast signal at a physical layer. The physical layer controller J25020 may transmit information on a frequency to be tuned in order to acquire a specific broadcast service to the tuner J25010 and control the tuner J25010 to tune to a corresponding frequency based on a transmission parameter or information acquired from signaling data. The physical layer controller J25020 may transmit information (DP ID) for identifying a data pipe (DP) to be accessed/extracted in order to acquire a specific broadcast service or broadcast content to the physical frame parser J25030 and control the physical frame parser J25030 to identify the corresponding ID and to parse the ID based on the transmission parameter or information acquired from the signaling data.

The physical frame parser J25030 may parse a physical frame in the broadcast signal. The physical frame may indicate a unit of data to be processed in a physical layer. The physical frame parser J25030 may parse a physical frame and extract a link layer frame. The physical frame parser J25030 may extract a link layer frame with a corresponding DP ID using a data pipe identifier (DP ID) in order to extract a link layer frame including a specific DP during parsing of the physical frame. The physical frame parser J25030 may extract signaling data. The physical frame parser J25030 may extract a DP (e.g., a base DP) including the signaling data or identify a signaling channel for transmitting signaling data and extract signaling data transmitted on a corresponding channel.

The link layer frame processor J25040 may process a link layer frame. The link layer frame processor J25040 may extract an IP/UDP datagram from the link layer frame. The link layer frame processor J25040 may extract signaling data transmitted in a link layer. The signaling data transmitted in a link layer may include information on data of a higher layer than the link layer. For example, the signaling data transmitted from the link layer may include a type of an IP packet, content of information common in headers of an IP packet, and/or information on header compression when compression is applied to an IP header.

The IP/UDP datagram filter J25050 may identify and extract a specific IP/UDP datagram. The IP/UDP datagram filter J25050 may extract a specific IP packet and, in this procedure, use IP/Port information. The IP/UDP datagram filter J25050 may extract an IP/UDP datagram including a specific packet and transmit a packet in the corresponding datagram to each device of the receiver. The IP/UDP datagram filter J25050 may extract an asynchronous layered coding / layered coding transport (ALC/LCT) + packet for transmitting broadcast data in the IP/UDP datagram, a timeline packet including data for synchronization of a broadcast system, a broadcast receiver, and/or broadcast service/content, and/or a signaling packet for transmitting signaling data.

The timing control J25060 may be used to synchronize transport streams transmitted from one or more sources. Information required to synchronize the transport streams transmitted from one or more sources may be transmitted in the form of a timeline packet. The timing control J25060 may be used to synchronize a received packet or data in the packet with a broadcast system clock. The timing control J25060 may be used to synchronize a clock of the broadcast receiver and a clock of a broadcast system.

The system clock J25070 may receive information on wall-clock time and control a clock of the system.

The ALC/LCT+ client J25080 may process a packet according to a protocol of an application layer. Accordingly, the ALC/LCT+ client J25080 may be referred to as an application layer transmission protocol client. A protocol packet of an application layer may be referred to as various terms according to a protocol applied to a corresponding layer but will be referred to as an application layer transmission protocol packet or a packet in the present invention. The application layer transmission protocol packet may include an ALC/LCT packet, an ALC/LCT+ packet, a ROUTE packet, and/or an MMT packet.

The application layer transmission protocol packet may be parsed or decoded. The ALC/LCT+ client J25080 may extract a file for transmitting general data from the application layer transmission protocol packet or extract ISO base media file format (ISO BMFF) object data. The ALC/LCT+ client J25080 may additionally acquire information related to timing during extraction of the ISO BMFF object data. The ALC/LCT+ client J25080 may use delivery mode and/or transport session identifier (TSI) information during extraction of the general file and/or the ISO BMFF object data.

The files J25090 may store or process files.

The ATSC3.0 DTV control engine J25100 may control a series of operations for processing broadcast data using information on a channel map including information on each broadcast channel. The ATSC3.0 DTV control engine J25100 may receive and process user input via a user interface (UI) or an event in a system. The ATSC3.0 DTV control engine J25100 may control a physical layer controller using the transmission parameter and control the physical layer controller to process a broadcast signal in a physical layer. When the broadcast receiver processes data related to moving picture expert group - dynamic adaptive streaming over HTTP (MPEG-DASH), the ATSC3.0 DTV control engine J25100 may extract media presentation description (MPD) or extract location information (e.g., uniform resource locator (URL) information) for acquisition of the MPD and transmit the location information to an apparatus for processing the data related to MPEG-DASH.

The signaling parser J25110 may receive a signaling packet or a signaling bitstream and parse signaling information. The signaling information may include information required to generate a channel map.

The channel map J25120 may generate and store the channel map using the signaling information.

The HTTP server J25130 may transmit data or a packet using hypertext transfer protocol (HTTP). The HTTP server J25130 may receive a request of the broadcast receiver and transmit response to the request to the broadcast receiver. The HTTP server J25130 may be included outside or inside the broadcast server.

The HTTP access client J25140 may process communication with the HTTP server J25130. The HTTP access client J25140 may transmit a request of the DASH client J25160 to the HTTP server J25130 or transmit a response of the HTTP server J25130 to the DASH client J25160.

The HTTP cache J25150 may cache some or all of data transmitted in the form of HTTP.

The DASH client J25160 may perform a series of operations for processing data related to MPEG-DASH. The DASH client J25160 may request the HTTP server J25130 for MPD, receive a response to the request, or receive the MPD through another path. The DASH client J25160 may extract a DASH segment for specific broadcast services or content using the MPD. The DASH segment extracted from the DASH client J25160 may be an ISO BMFF file. The DASH client J25160 may receive input via a UI or input according to a system event and process data related thereto.

The ISO BMFF parser J25170 may parse the ISO BMFF object data and/or the ISO BMFF file. The ISO BMFF parser J25170 may parse the ISO BMFF object data and/or the ISO BMFF file to extract an access unit, timing information, and/or information required for decoding. The access unit may include data for media.

The media decoder J25180 may decode media (broadcast service, broadcast content, or event) using the access unit, the timing information, and/or the information required for decoding.

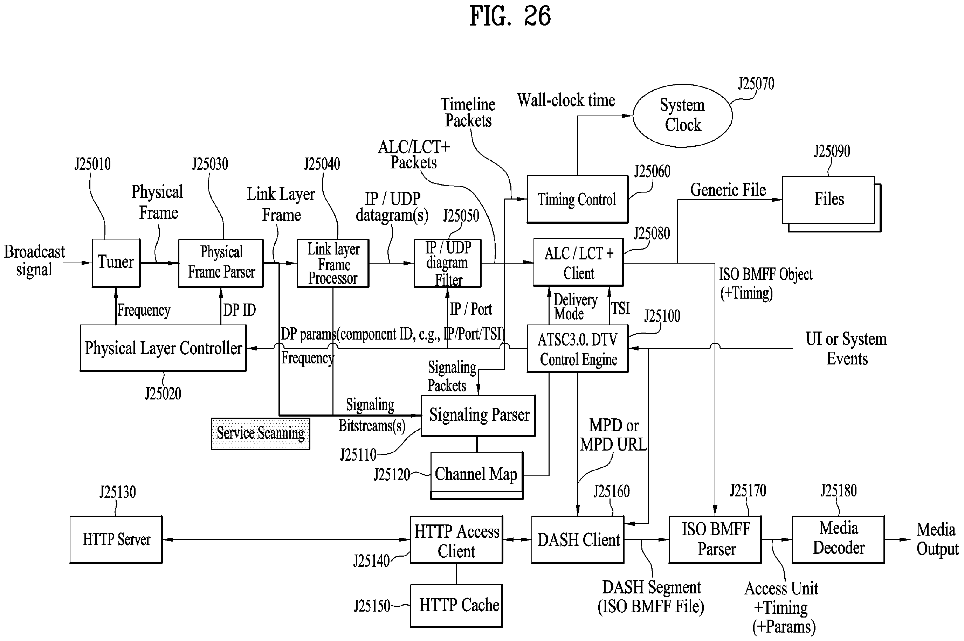

FIG. 26 is a diagram illustrating an operation of service scanning by a hybrid broadcast receiver according to an embodiment of the present invention.

In the service scanning of the broadcast receiver according to an embodiment of the present invention, the physical layer controller J25020 may control the tuner J25010 to scan a channel of each frequency.

The tuner J25010 may receive a broadcast signal in each channel. The tuner J25010 may extract a physical frame from the broadcast signal. The tuner J25010 may transmit the broadcast signal or the physical frame to the physical frame parser J25030.

The physical frame parser J25030 may extract a signaling bitstream for transmitting signaling information. The physical frame parser J25030 may transmit the signaling bitstream to the signaling parser J25110.

The signaling parser J25110 may extract signaling information from the signaling bitstream. The signaling parser J25110 may transmit the signaling information to the channel map J25120.

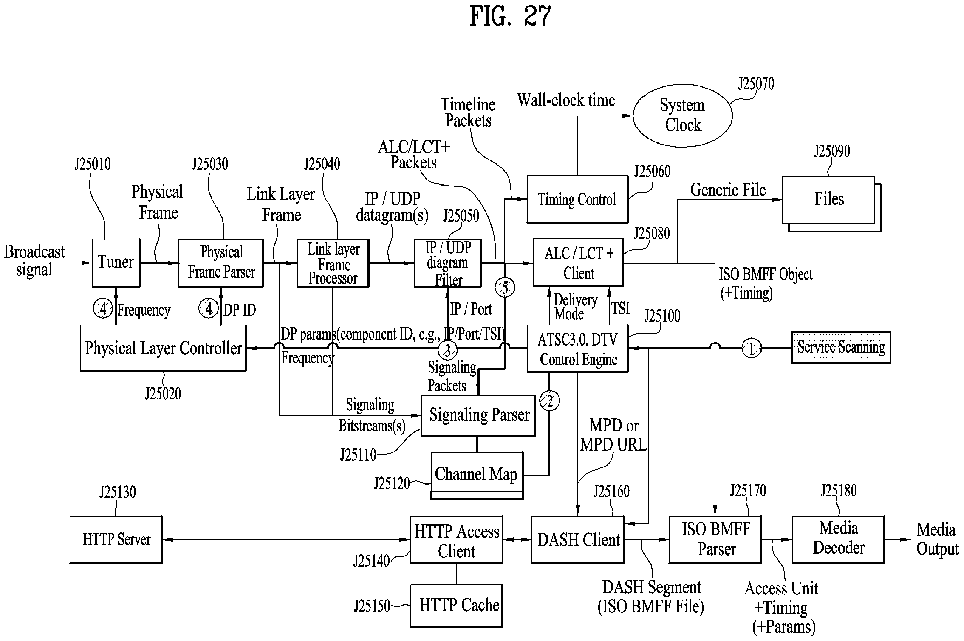

FIG. 27 is a diagram illustrating a service selection operation by a hybrid broadcast receiver according to an embodiment of the present invention.

The ATSC3.0 DTV control engine J25100 may receive a control signal for selection of a service according to a user or a broadcast event. The ATSC3.0 DTV control engine J25100 may extract information on a channel frequency, DP identification information, component identification information, and/or datagram identification information, for transmission of the selected service, from a channel map or signaling information stored in the channel map J25120 or the like and transmit the extracted information to the physical layer controller J25020 and/or the IP/UDP datagram filter J25050.

The physical layer controller J25020 may control the tuner J25010 to tune to a channel for transmission of the selected service using the frequency information and control the physical frame parser J25030 to extract DP for transmission of the selected service using the DP identification information.

The extracted DP may be processed by the link layer frame processor J25040 to extract IP/UDP datagrams.

The IP/UDP datagram filter J25050 may filter specific IP/UDP datagram or a specific IP packet for transmission of a signaling packet using IP/Port information, extract the signaling packet from the corresponding datagram, and transmit the signaling packet to the signaling parser J25110.

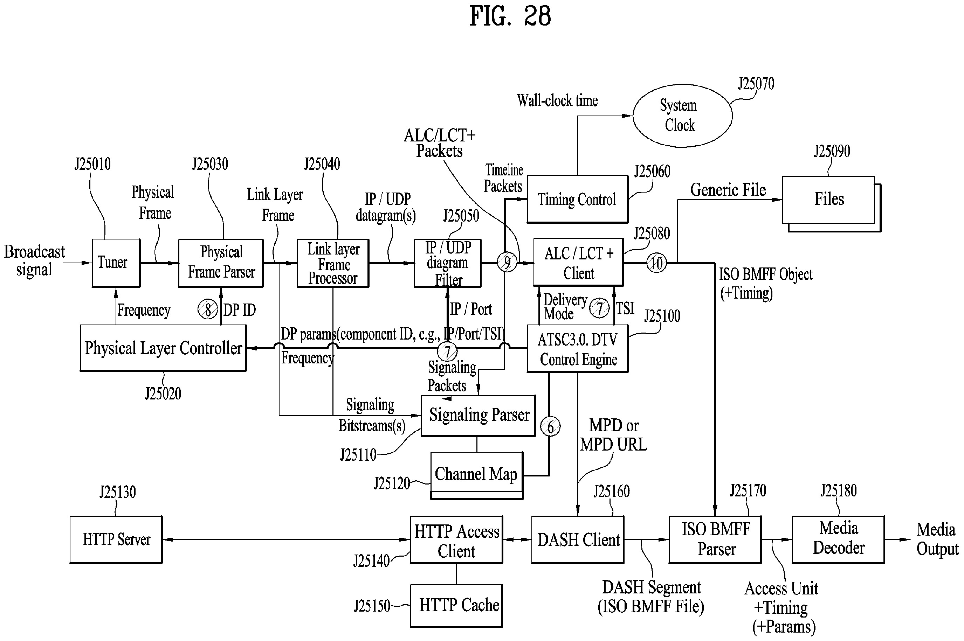

FIG. 28 is a diagram illustrating a service selection operation by a hybrid broadcast receiver according to an embodiment of the present invention.

The drawing illustrates an operation of the broadcast receiver, which is performed subsequent to the aforementioned service selection of the broadcast receiver.

A DTV control engine may acquire information for identifying a DP for transmitting a packet of broadcast content or a broadcast service selected by a user, information for identifying a delivery mode for transmitting a corresponding packet, TSI information on a corresponding packet, and/or IP/Port information of a corresponding packet, according to channel map information.

The DTV control engine may transmit the information for identifying a DP to a physical layer controller. The DTV control engine may transmit the IP/Port information of the corresponding packet to an IP/UDP datagram filter. The DTV control engine may transmit the TSI information on the corresponding packet and/or the information for identifying a delivery mode for transmitting a corresponding packet to an ALC/LCT+ client.

The physical layer controller may transmit a data pipe identifier (DP ID) to a physical frame parser.

The physical frame parser may identify a DP for identifying a packet of broadcast content or broadcast services selected by a user using the DP ID and parse the corresponding DP. The physical frame parser may extract a link layer frame from the DP.

A link layer frame processor may parse IP/UDP datagram in a link layer frame. The link layer frame processor may extract an IP/UDP datagram and/or IP packets related to broadcast content or broadcast services selected by a user.

The IP/UDP datagram filter may extract a packet (e.g., an application layer transmission protocol packet) including data related to broadcast content or broadcast services selected by the user. The IP/UDP datagram filter may extract a timeline packet including information for synchronization with a broadcast system of the broadcast service and/or the broadcast content.

An ALC/LCT+ client may extract ISO BMFF object data and/or timing related information from the received packet and transmit the extracted information to an ISO BMFF parser.

A detailed description of subsequent data processing is substituted with the above description of each device.

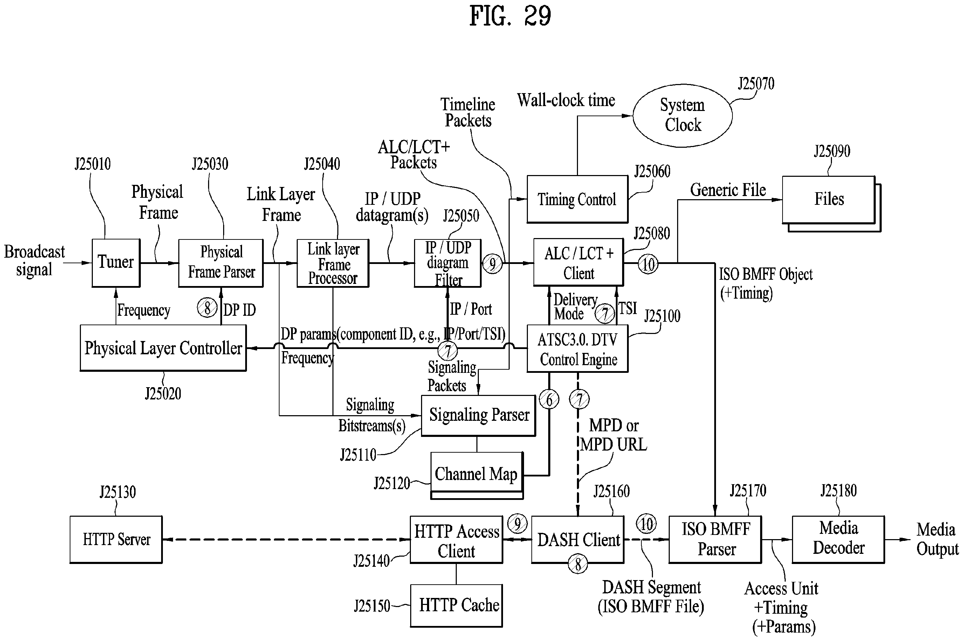

FIG. 29 is a diagram illustrating a service selection operation by a hybrid broadcast receiver according to another embodiment of the present invention.

The drawing illustrates an operation of the broadcast receiver, which is performed subsequent to the service selection of the broadcast receiver described with reference to FIG. 27.

A DTV control engine may acquire MPD including information on broadcast content or broadcast services selected by a user through a channel map or signaling information or acquire location information of a server or a storage for providing the corresponding MPD. The DTV control engine may transmit information on MPD or a location thereof to a DASH client.

The DASH client may acquire MPD and extract information (e.g., segment URL) on a location for providing a segment as data included in media (broadcast service or broadcast content) selected by a user from the MPD. The DASH client may transmit a request for a segment to an HTTP access client.

The HTTP access client may access a server for providing a corresponding segment, acquire the corresponding segment, and transmit the segment to the DASH client using information on location of the segment.

The DASH client may extract a file (e.g., an ISO BMFF file) from the received segment and transmit the file to an ISO BMFF parser.

A detailed description of subsequent data processing is substituted with the above description of each device.

According to the embodiment illustrated in the drawing, media may be received using a communication network using HTTP instead of a broadcast network.

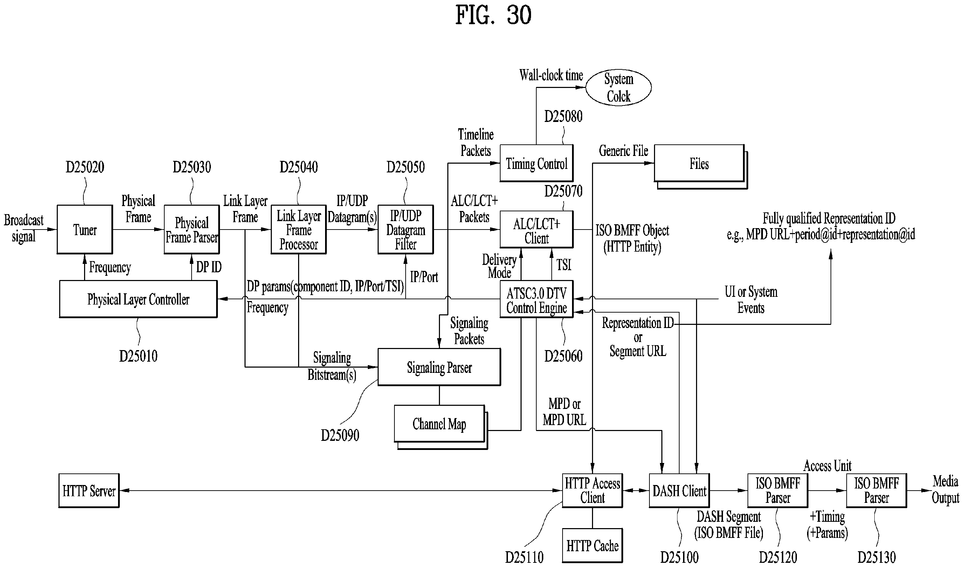

FIG. 30 is a block diagram of a hybrid broadcast receiver according to an embodiment of the present invention.

The hybrid broadcast receiver may receive a hybrid broadcast service for interaction of terrestrial broadcast and broadband in a DTV service of a next-generation broadcast system. The hybrid broadcast receiver may receive audio/video (A/V) content transmitted through terrestrial broadcast and receive some of enhancement data or broadcast A/V content associated with the A/V content in a broadband. In the specification, broadcast audio/video (A/V) content may refer to media content.

The hybrid broadcast receiver may include a physical layer controller D25010, a tuner D25020, a physical frame parser D25030, a link layer frame processor D25040, an IP/UDP datagram filter D25050, an ATSC 3.0 DTV control engine D25060, an ALC/LCT+ client D25070, a timing control D25080, a signaling parser D25090, a dynamic adaptive streaming over HTTP (DASH) client D25100, an HTTP access client D25110, an ISO base media file format (BMFF) parser D25120, and/or a media decoder D25130.

The physical layer controller D25010 may control operations of the tuner D25020, the physical frame parser D25030, and so on using radio frequency (RF) information, etc. of a terrestrial broadcast channel to be received by the hybrid broadcast receiver.

The tuner D25020 may receive and process a broadcast related signal through the terrestrial broadcast channel and convert the signal in an appropriate form. For example, the tuner D25020 may convert the received terrestrial broadcast signal into a physical frame.

The physical frame parser D25030 may parse the received physical frame and acquire a link layer frame through processing related to the physical frame.

The link layer frame processor D25040 may perform related calculation for acquisition of link layer signaling, etc. or acquisition of IP/UDP datagram from the link layer frame or acquiring. The link layer frame processor D25040 may output at least one IP/UDP datagram.

The IP/UDP datagram filter D25050 may filter a specific IP/UDP datagram from the received at least one IP/UDP datagram. That is, the IP/UDP datagram filter D25050 may selectively filter an IP/UDP datagram selected by the ATSC 3.0 DTV control engine D25060 from at least one IP/UDP datagram output from the link layer frame processor D25040. The IP/UDP datagram filter D25050 may output an application layer transmission protocol packet.

The ATSC 3.0 DTV control engine D25060 may function as an interface between modules included in each hybrid broadcast receiver. The ATSC 3.0 DTV control engine D25060 may transmit a parameter, etc. required for each module and control an operation of each module through the transmitted parameter, etc. According to the present invention, the ATSC 3.0 DTV control engine D25060 may transmit media presentation description (MPD) and/or MPD URL to the DASH client D25100. In addition, according to the present invention, the ATSC 3.0 DTV control engine D25060 may transmit information on a delivery mode(Delivery mode and/or transport session identifier (TSI) to the ALC/LCT+ client D25070. Here, the TSI may indicate an identifier of a session for transmission of a transmission packet including a signaling message such as MPD or MPD URL related signaling, e.g., an ALC/LCT session or a FLUTE session.

The ALC/LCT+ client D25070 may process the application layer transmission protocol packet and collect and process a plurality of application layer transmission protocol packets to generate one or more ISO base media file format (ISO BMFF) objects.

The timing control D25080 may process a packet including system time information and control a system clock according to the processed packet.

The signaling parser D25090 may acquire and parse DTV broadcast service related signaling and generate and manage a channel map, etc. based on the parsed signaling. According to the present invention, the signaling parser D25090 may parse MPD or MPD related information extended from signaling information.

The DASH client D25100 may perform calculation related to real-time streaming or adaptive streaming. The DASH client D25100 may receive DASH content from an HTTP server through the HTTP access client D25110. The DASH client D25100 may process the received DASH segment, etc. to output an ISO base media file format object. According to the present invention, the DASH client D25100 may transmit a fully qualified representation ID or a segment URL to the ATSC 3.0 DTV control engine D25060. Here, the fully qualified representation ID may refer to an ID formed by combining, for example, MPD URL, period@id, and representation@id. In addition, the DASH client D25100 may receive MPD or MPD URL from the ATSC 3.0 DTV control engine D25060. The DASH client D25100 may receive a desired media stream or DASH segment from the HTTP server using the received MPD or MPD URL. In the specification, the DASH client D25100 may be referred to as a processor.

The HTTP access client D25110 may request the HTTP server for specific information and receive and process a response to the request from the HTTP server. Here, the HTTP server may process the request received from the HTTP access client D25110 and provide a response to the request.

The ISO BMFF parser D25120 may extract audio/video data from the ISO base media file format object.

The media decoder D25130 may decode the received audio/video data and perform processing for presentation of the decoded audio/video data.

In order to provide a hybrid broadcast service via synchronization between a terrestrial broadcast network and a broadband network by a hybrid broadcast receiver according to the present invention, the MPD needs to be extended or corrected. The aforementioned terrestrial broadcast system may transmit the extended or corrected MPD and the hybrid broadcast receiver may receive content through broadcast or broadband using the extended or corrected MPD. That is, the hybrid broadcast receiver may receive the extended or corrected MPD through terrestrial broadcast and receive content through terrestrial broadcast or broadband based on the MPD. Hereinafter, elements and attributes to be additionally included in the extended or corrected MPD compared with typical MPD will be described. The extended or corrected MPD may be referred to as MPD below.

The MPD may be extended or corrected for representing an ATSC 3.0 service. The extended or corrected MPD may further include MPD@anchorPresentationTime, Common@presentable, Common.Targeting, Common.TargetDevice, and/or Common@associatedTo.

The MPD@anchorPresentationTime may represent an anchor of presentation time of segments included in the MPD, that is, time as reference time. Hereinafter, the MPD@anchorPresentationTime may be used as effective time of the MPD. The MPD@anchorPresentationTime may represent an earliest presentation time among segments included in the MPD.

The MPD may further include common attributes and elements. The Common@presentable may represent that media described by the MPD is a presentable component.

The Common.Targeting may represent targeting properties and/or personalization properties of media described by the MPD.

The Common.TargetDevice may represent a target device or target devices of media described by the MPD.

The Common@associatedTo may represent adaptationSet and/or representation related to media described by the MPD.

MPD@id, Period@id, and AdaptationSet@id included in the MPD may be required to specify media content described by the MPD. That is, the DASH client may specify content to be received based on the MPD as MPD@id, Period@id, and AdaptationSet@id and transmit the content to the ATSC 3.0 DTV control engine. The ATSC 3.0 DTV control engine may receive corresponding content and transmit the content to the DASH client.

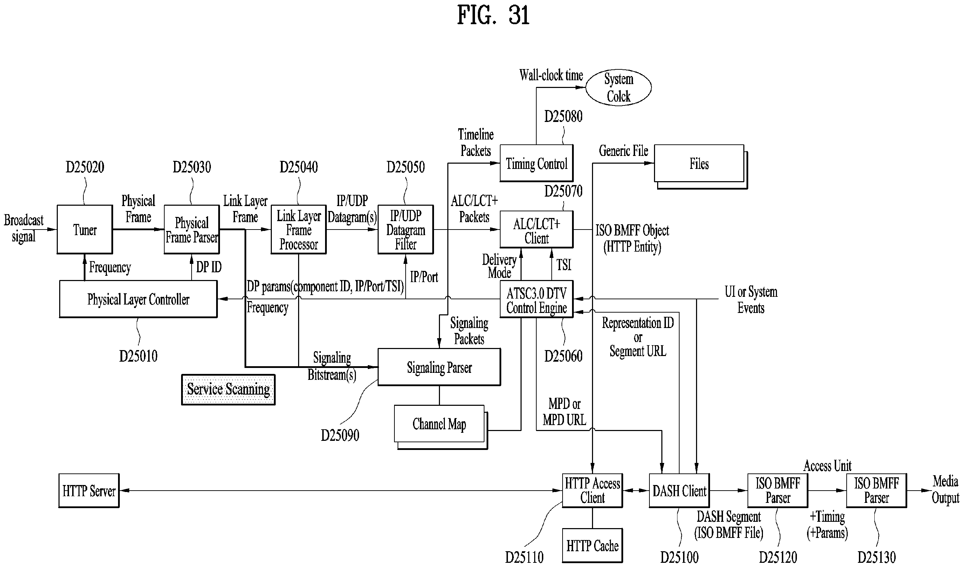

FIG. 31 is a diagram illustrating a service selection operation by a hybrid broadcast receiver according to another embodiment of the present invention.

In service scanning of the broadcast receiver according to another embodiment of the present invention, the physical layer controller D25010 may control the tuner D25020 to perform scanning on a channel of each frequency.

The tuner D25020 may receive a broadcast signal on each channel. The tuner D25020 may extract a physical frame from the broadcast signal. The tuner D25020 may transmit the broadcast signal or the physical frame to the physical frame parser D25030.

The physical frame parser D25030 may extract a signaling bitstream for transmitting signaling information. The physical frame parser D25030 may transmit the signaling bitstream to the signaling parser D25090.

The signaling parser D25090 may extract signaling information from the signaling bitstream. The signaling parser D25090 may transmit the signaling information to a channel map or a channel map processor.

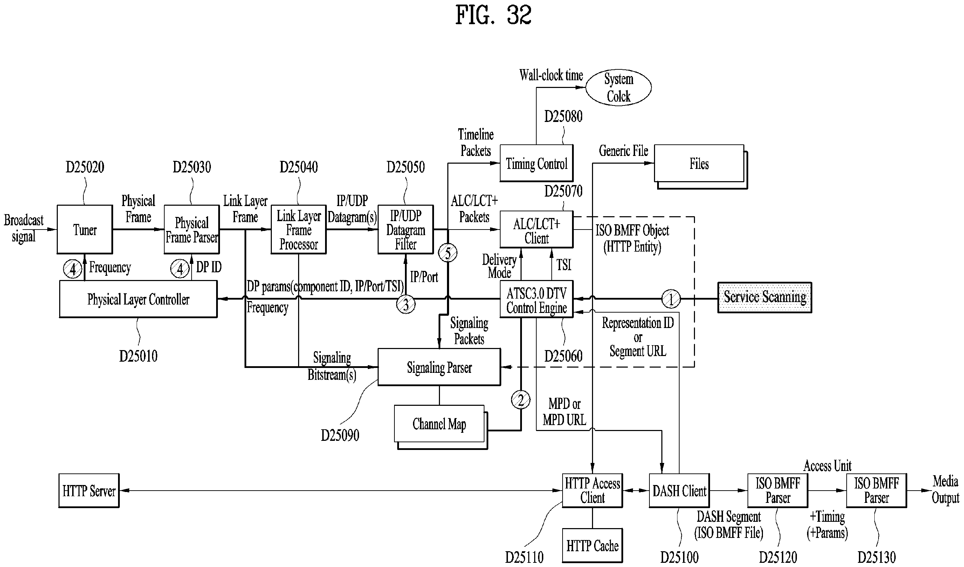

FIG. 32 is a diagram illustrating a service selection operation by a hybrid broadcast receiver according to another embodiment of the present invention.

The DTV control engine D25060 may receive a control signal for selection of a service according to a user or a broadcast event. The DTV control engine D25060 may extract information on a channel frequency, DP identification information, component identification information, and/or datagram identification information, for transmission of the selected service, from a channel map or signaling information stored in a channel map processor or the like and transmit the extracted information to the physical layer controller D25010 and/or the IP/UDP datagram filter D25050.

The physical layer controller D25010 may control the tuner D25020 to tune to a channel for transmission of the selected service using the frequency information and control the physical frame parser D25030 to extract DP for transmission of the selected service using the DP identification information.

The extracted DP may be processed by the link layer frame processor D25040 to extract IP/UDP datagrams.

The IP/UDP datagram filter D25050 may filter specific IP/UDP datagram or specific IP packet for transmission of a signaling packet using IP/Port information, extract the signaling packet from the corresponding datagram, and transmit the signaling packet to the signaling parser D25090.

The IP/UDP datagram filter D25050 may extract application layer transmission protocol packets for transmitting data on broadcast content or broadcast services. Some of application layer transmission protocol packets may include signaling information. The ALC/LCT+ client D25070 may parse a packet including signaling information and transmit the packet to the signaling parser D25090. The signaling parser D25090 may parse a packet including the corresponding signaling information to acquire signaling information and transmit the signaling information to a channel map processor or store the signaling information in a channel map.

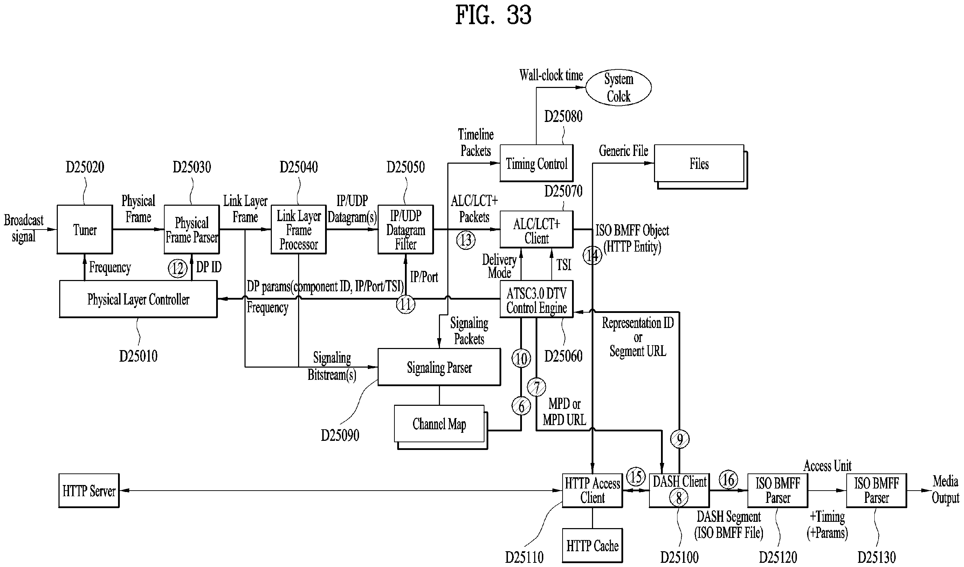

FIG. 33 is a diagram illustrating an operation of service selection operation by a hybrid broadcast receiver according to another embodiment of the present invention.

The drawing illustrates an operation of the broadcast receiver, which is subsequently performed to the aforementioned service selection of the broadcast receiver.

The DTV control engine D25060 may acquire MPD or URL information of a location at which the MPD is acquirable, from a channel map processor.

The DTV control engine D25060 may transmit MPD including information on media, such as a specific broadcast service or broadcast content or URL information of a location of for acquisition of the corresponding MPD to the DASH client D25100.

The DASH client D25100 may parse the MPD. The DASH client D25100 may transmit a request for the MPD at the corresponding location to an HTTP access client using the URL information of the location for acquisition of the MPD. The HTTP access client may access an HTTP server at a location indicated by the URL information of the location for acquisition of the MPD, request the HTTP server for the MPD, receive the MPD in response to the request, and transmit the MPD to the DASH client D25100. The DASH client D25100 may extract Representation ID as information for identification of representation included in the MPD and/or Segment URL information for identification of a location for acquisition of a specific segment. The DASH client D25100 may transmit information extracted from the MPD to the DTV control engine D25060.

The DTV control engine D25060 may acquire information (e.g., DP ID, component ID, IP/Port information, and/or TSI information) for identifying a DP for transmission of specific media (a specific broadcast service, content, and/or event), indicated by the information extracted from the MPD, and transmit the acquired information to the physical layer controller D25010 and/or the IP/UDP datagram filter D25050. The information for identifying the DP may be stored in a channel map processor or extracted from information that is stored in the broadcast receiver in the form of a channel map.

The physical layer controller D25010 may control the physical frame parser D25030 to extract a specific DP from a physical frame. The physical layer controller D25010 may transmit the DP ID to the physical frame parser D25030 so as to extract the DP identified by the corresponding DP ID by the physical frame parser D25030.

The physical frame parser D25030 may extract a link layer frame included in the DP.

The link layer frame processor D25040 may parse the link layer frame to extract one or more IP/UDP datagrams.

The IP/UDP datagram filter D25050 may extract IP/UDP datagram and/or an IP packet including data on media to be extracted by the broadcast receiver using IP/Port information. The IP/UDP datagram filter D25050 may parse the IP/UDP datagram and/or the IP packet to extract an application layer transmission protocol packet for transmitting data on specific media.

The ALC/LCT+ client D25070 may decode an application layer transmission protocol packet including data on a media to be consumed by the broadcast receiver to acquire ISO BMFF object data. The ISO BMFF object data may include an HTTP entity. The HTTP entity may include HTTP related information for receiving specific data.

The HTTP access client D25110 may decode the ISO BMFF object data or receive data for specific media using information included in the ISO BMFF object data from an external source.

The DASH client D25100 may parse a DASH segment from the received data. The DASH segment may take the form of an ISO BMFF file.

A detailed description of subsequent data processing is substituted with the above description of each device.

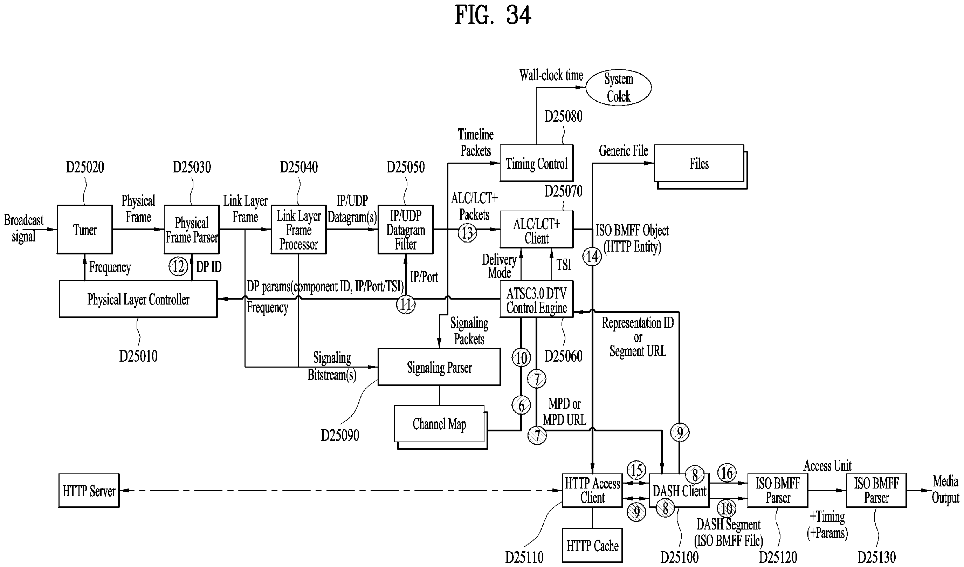

FIG. 34 is a diagram illustrating a service selection operation by a hybrid broadcast receiver according to another embodiment of the present invention.

The drawing illustrates an operation of the broadcast receiver, which is subsequently performed to the service selection of the broadcast receiver described with reference to FIG. 32.

The DTV control engine D25060 may acquire MPD including information on broadcast content or broadcast services selected by a user through a channel map or signaling information or acquire location information of a server or a storage for providing the corresponding MPD. The DTV control engine D25060 may transmit information on MPD or a location thereof to a DASH client.

Upon receiving the location information on the server or the storage for providing the MPD, the DASH client D25100 may transmit a request for the corresponding MPD to the HTTP access client D25110. The HTTP access client D25110 may access a server or storage corresponding to the location of the MPD, acquire the MPD, and transmit the MPD to the DASH client D25100.

The DASH client D25100 may acquire the MPD and extract information (e.g., segment URL) on a location for providing a segment as data included in media (broadcast service or broadcast content) selected by the user from the MPD. The DASH client D25100 may transmit a request for the segment to the HTTP access client D25110.

The HTTP access client D25110 may access a server for providing the corresponding segment using information on the location of the segment, acquire the corresponding segment, and transmit the segment to the DASH client D25100.

The DASH client D25100 may extract a file (e.g., ISO BMFF file) from the received segment and transmit the file to an ISO BMFF parser.

A detailed description of subsequent data processing is substituted with the above description of each device.

According to the embodiment illustrated in the drawing, media may be received using a communication network using HTTP, but not a broadcast network.

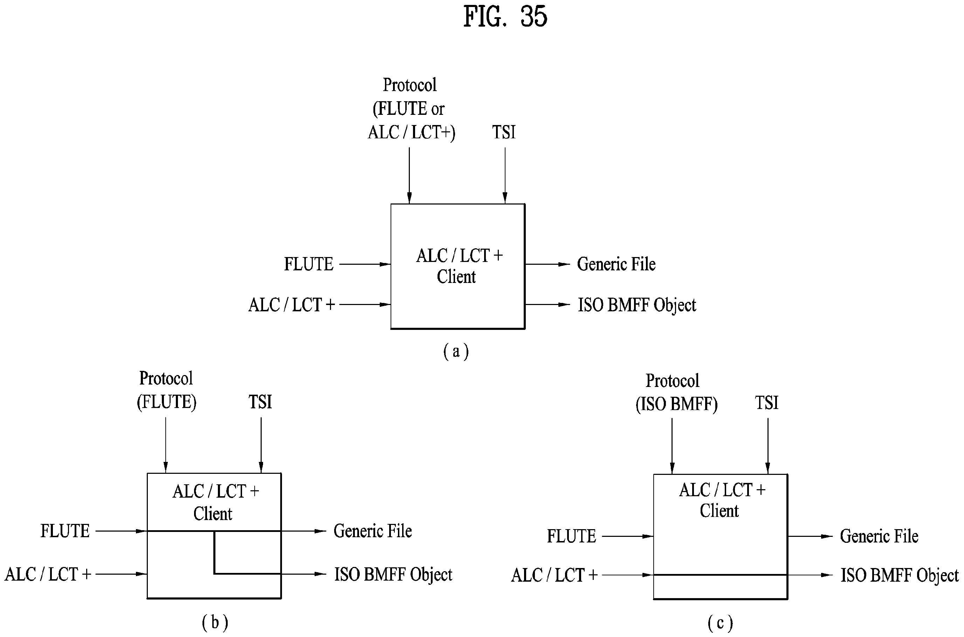

FIG. 35 illustrates a diagram illustrating an operation of an ALC/LCT+ client according to an embodiment of the present invention.

Referring to FIG. 35(a), the ALC/LCT+ client may process data according to one or more protocols. The ALC/LCT+ client may process data according to file delivery over unidirectional transport (FLUTE) and/or ALC/LCT+ protocol. The ALC/LCT+ client may receive TSI information and acquire data transmitted through a transport session corresponding to the TSI information. The ALC/LCT+ client may receive FLUTE data and/or ALC/LCT+ data. The ALC/LCT+ client may decode or parse a generic file and/or ISO BMFF object data from the received data.

FIG. 35(b) illustrates an operation of the ALC/LCT+ client when non-real-time transmission is supported according to an embodiment of the present invention. Non-real-time transmission is a transmission method of receiving data of corresponding media before media is actually consumed, through a broadcast network. A broadcast service to be included in the media may include one or more broadcast contents. The broadcast content may include one or more files. Each file may be discontinuously transmitted and stored in a receiver. Data transmitted in non-real-time may correspond to data of broadcast content and/or broadcast services. The data transmitted in non-real-time may be data that is added to broadcast data transmitted in real time or media data received through the Internet.

According to an embodiment of the present invention, when non-real-time transmission is transmitted, the data transmitted in non-real time may be transmitted using the FLUTE protocol. Files transmitted through the FLUTE may include a generic file or ISO BMFF Object data. The ALC/LCT+ client may extract a generic file and/or ISO BMFF Object data from the data transmitted through FLUTE.

The ALC/LCT+ client may collect an ALC/LCT packet including specific transmission object identifier (TOI) information and/or TSI information for a file delivery table (FDT) in order to acquire the data transmitted in non-real-time. The ALC/LCT+ client may parse the FDT from corresponding ALC/LCT packets. The ALC/LCT+ client may collect an ALC/LCT packet having specific TOI information and/or TSI information in order to collect files included in specific media or broadcast content. TOI information and/or TSI information on files corresponding to the specific media or broadcast content may be included in the aforementioned FDT. When real-time streaming is performed, an operation for acquiring FDT may not be performed and, in this case, the ALC/LCT+ client may be operated to disregard TOI information and TSI information related to the FDT.

FIG. 35(c) illustrates an operation of an ALC/LCT+ client in the case of real-time transmission according to an embodiment of the present invention.

In real-time transmission, data may be transmitted using an ALC/LCT+ protocol. The ALC/LCT+ protocol may also be referred to as real-time object delivery over unidirectional transport (ROUTE). The ALC/LCT+ client may extract ISO BMFF Object data from the application layer transmission protocol packet.

In order to acquire data included in specific media or broadcast content, the ALC/LCT+ client may collect an ALC/LCT+ packet including specific TSI information and/or TOI information.

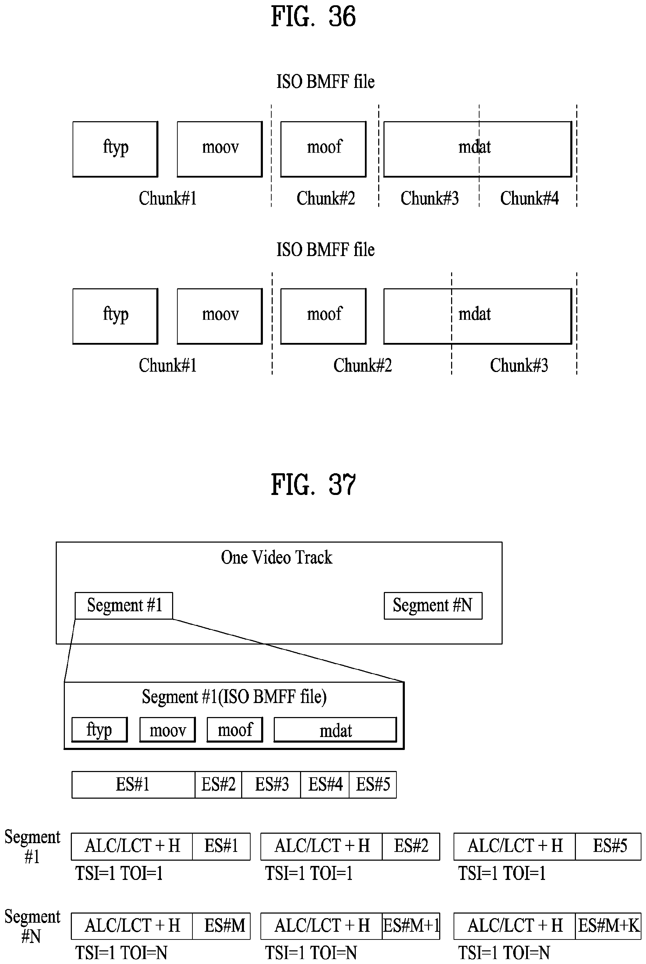

FIG. 36 is a diagram illustrating an ISO BMFF file according to an embodiment of the present invention.

One ISO BMFF file may have the same meaning as one DASH segment. The ISO BMFF Object data may correspond to some data of the ISO BMFF file. The ISO BMFF file may be divided into one or more chunks and each chunk may correspond to ISO BMFF Object data.

The ISO BMFF file may include one or more boxes. The ISO BMFF file may include an ftyp box, a moov box, a moof box, and/or an mdat box.

When the ISO BMFF file is divided into one or more chunks, two or more different types of boxes may be included in the chunk. The chunk may include only one type of box. The chunk may include a portion of one box. Alternatively, the chunk may include data included in one box and a portion of data included in different types of boxes.

The ftyp box may indicate a type of the ISO BMFF file. The ftyp box may identify technological standards for compatibility with the ISO BMFF file.

The moov box may be a container for metadata. The metadata may correspond to signaling information. The metadata may include information for describing data included in media.

The moof box may correspond to a movie fragment box and the movie fragment may extend presentation time.

The mdat box may include actual media data for presentation.

FIG. 37 is a diagram illustrating an application layer transmission protocol packet according to an embodiment of the present invention.

According to an embodiment of the present invention, a transport session identifier (TSI) may be mapped to one track. One track may correspond to video, audio, or DASH representation.

The DASH representation may indicate a set or encapsulation of one or more media streams. The DASH representation may be encoded to transmit an O element of media and may have different encoding characteristics for respective DASH representations. For example, the DASH representation may indicate units encoded using different bit rates, resolutions, and/or codecs with respect to content elements of the same media. The DASH representation may include one or more DASH segments. The DASH segment may correspond to a file that is continuously divided in a time unit. The DASH segment may include data in the form of MPEG2-TS or ISO BMFF.

According to an embodiment of the present invention, a transmission object identifier (TOI) may be mapped to one ISO BMFF object data. One ISO BMFF object datum may correspond to one ISO BMFF file or one chunk.

The drawing illustrates an application layer transmission protocol packet when a TSI is mapped to one track and a TOI is mapped to one ISO BMFF file.

For example, one video track may include one or more segments (DASH segment).

Each segment may correspond to an ISO BMFF file. The ISO BMFF file may be divided into one or more ESs (elementary streams or elementary segments). In the drawing, one ISO BMFF file is divided into five ESs.

The application layer transmission protocol packet may include an ALC/LCT+ header (ALC/LCT+ H) and an ES.

For example, data of Segment #1 may be transmitted through five application layer transmission protocol packets and each application layer transmission protocol packet may have a TOI value of '1' and, thus, the data of Segment #1 is transmitted. The video track may be identified as a TSI with '1' and other segments included in the corresponding video segment may be identified according to a value of the TOI. When the video track includes N segments, the TOI may have a value of 1 to N.

The receiver needs to identify start of a file. An ISO BMFF file transmitted by Segment #1 may information indicating that a corresponding file is a first file of a data unit identified by a corresponding TSI.

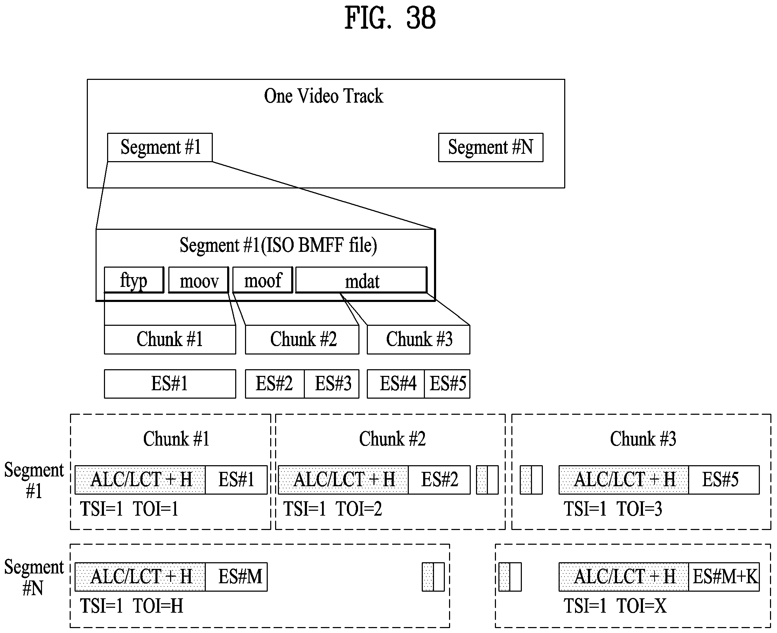

FIG. 38 is a diagram illustrating an application layer transmission protocol packet when a TSI is mapped to one track and a TOI is mapped to one chunk, according to an embodiment of the present invention.

According to an embodiment of the present invention, one track (e.g., video track) may include one or more segments. One segment may correspond to an ISO BMFF file. One segment may be divided into one or more chunks. One chunk may be divided into one or more ESs. Each application layer transmission protocol packet may include an ALC/LCT+ header and one ES. In this case, each chunk may be transmitted by one or more application layer transmission protocol packets.

Referring to the drawing, with respect to a video track, a TSI value of '1' may be set and a segment included in a corresponding video track may have a TSI value of '1'. With respect to each chuck included in Segment #1, each TOI value may be set.

In order to control an appropriate operation of an ISO BMFF parser, the receiver may need to identify offset to each chunk from start of the ISO BMFF file. For example, each chunk may include offset information indicating offset and chunk including data of a start portion of the ISO BMFF file may include offset information with a value of '0'.

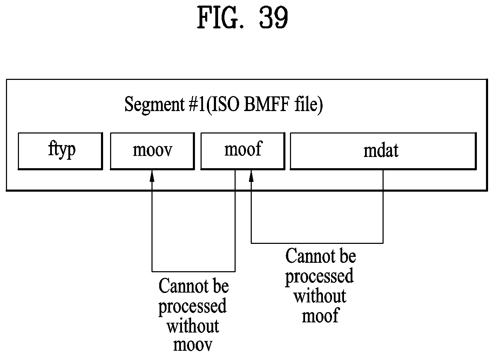

FIG. 39 is a diagram illustrating setting of characteristics of boxes in an ISO BMFF file in an application layer transmission protocol packet when a TSI is mapped to one track and a TOI is mapped to one chunk, according to an embodiment of the present invention.

When a TSI is mapped to one track and a TOI is mapped to one chunk, different degrees of importance may be set to the respective boxes included in the ISO BMFF file corresponding to a segment. The degrees of importance may be set by a transmitter. For example, degrees of importance indicating highest may be set to the moov box and degrees of importance indicating higher may be set to the moof box.

The mdat box including data corresponding to a random access point (RAP) may be set with a higher degree of importance than other mdat boxes that do not include RAP. The RAP may correspond to a data unit for transmission of data of I-frame in the case of a video track.

Information for determination of priority according to a degree of importance among the mdat boxes may be included in each mdat box. Alternatively, the information for determination of priority according to a degree of importance among the mdat boxes may be included in the moov box. In this case, in conjunction with information for identification of the mdat box, priority of a specific mdat box may be determined and, in this case, the corresponding information may be used.

Referring to the drawing, the mdat box may not be processed without the moof box and, thus, the moof box may be set to be more important than the mdat box. In addition, the moof box may not be processed without the moov box and, thus, the moov box may be set to be more important than the moof box.

When one or more boxes are transmitted by different application layer transmission protocol packets, information on priority may be included in each application layer transmission protocol packet in consideration of boxes included in each application layer transmission protocol packet. According to embodiments of the present invention, information setting or data setting may be performed by a transmitter or a receiver.

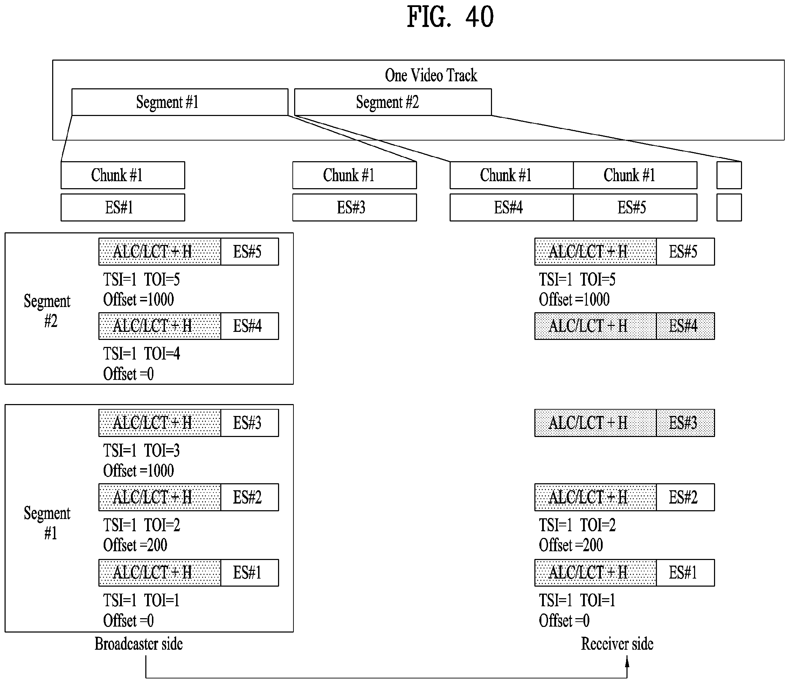

FIG. 40 is a diagram illustrating transmission and reception of an application layer transmission protocol packet according to an embodiment of the present invention.

The aforementioned application layer transmission protocol packet may be generated by a transmitter and transmitted to a receiver.

As described above, when one TSI is mapped to one track and one TOI is mapped to one chunk, an application layer transmission protocol packet for transmitting data of each segment is generated. In this case, when an ALC.LCT+ packet generated and transmitted by a transmitting side is received by a receiver, there is a problem in that the receiver does not know a segment to which the application layer transmission protocol packet belongs. TOIs may be set to respective chunks, each chunk may be divided into one or more ESs, and each ES is transmitted in an application layer transmission protocol packet and, thus, a receiver that receives the application layer transmission protocol packet may not know a segment to which a corresponding application layer transmission protocol packet or an ES included in the application layer transmission protocol packet belongs. Accordingly, there is a need for a method of recognizing a segment (or a file) to which each chunk belongs by a receiver.

Referring to the drawing, a video track may include Segment #1 and Segment #2. Segment #1 may include Chunk #1 to Chunk #3. Segment #2 may include Chunk #1 and Chunk #2. In this example, each chunk is assumed to be transmitted in each ES. In this case, three application layer transmission protocol packets generated with respect to Segment #1 may be present and an ES for transmitting a chunk including first data of Segment #1 may be set with TSI '1' and TOI '1' and may be transmitted through an application layer transmission protocol packet set with offset information '0'. ES #2 for transmitting Chunk #2 included in Segment #1 may be set with TSI '1' and TOI '2' and may be transmitted through an application layer transmission protocol packet set with offset information '200'. ES #3 for transmitting Chunk #3 included in Segment #1 may be set with TSI '1' and TOI '3' and may be transmitted through an application layer transmission protocol packet set with offset information '1000'. ES #4 for transmitting Chunk #1 include in Segment #2 may be set with TSI '1' and TOI '4' and may be transmitted through an application layer transmission protocol packet set with offset information '0'. ES #5 for transmitting Chunk #2 included in Segment #2 may be set with TSI '1' and TOI '5' and may be transmitted through an application layer transmission protocol packet set with offset information '1000'.

When application layer transmission protocol packets are sequentially transmitted to a receiver from a transmitter, the receiver may recognize application layer transmission protocol packets corresponding to a TSI with a value of '1' as packets for transmitting data with respect to the same track. Accordingly, during a procedure of collecting application layer transmission protocol packets with the same TSI, the receiver may collects application layer transmission protocol packets in an order of a value of the TOI. However, when application layer transmission protocol packets for transmitting ES #3 and/or ES #4 are lost, there is a problem in that the receiver may not determine whether an ES (or a chunk) for transmitting an application layer transmission protocol packet set with TSI '1', TOI '5', and offset information '1000' belongs to Segment #1 or Segment #2.

According to an embodiment of the present invention, in order to overcome the aforementioned problem, an ID value of a track may be used with respect to a TSI. Here, the track may be interpreted to correspond to representation of MPEG-DASH. In addition, with respect to a TOI, a combination value of an ID of an ISO BMFF file and an ID of a chunk may be used. When one ISO BMFF object datum is set in the same way as one ISO BMFF file, the ISO BMFF object datum may be assumed to include one chunk. According to an embodiment of the present invention, in order to set information on priority of each ISO BMFF object datum (or chunk), 2 reserved bits may be used.

According to an embodiment of the present invention, offset information up to an application layer transmission protocol packet from a start portion of each file may be set. The information may be included in signaling information and/or an application layer transmission protocol packet. When a value of offset information is '0', an application layer transmission protocol packet to which the corresponding value is applied may indicate an application layer transmission protocol packet for transmitting data of the start portion of the ISO BMFF file. The application layer transmission protocol packet may include information (e.g., start time and duration time of presentation, and/or information for synchronization with other content) indicating presentation timing of media and/or location information (e.g., URL information) on required data in relation to the corresponding file or the application layer transmission protocol packet.

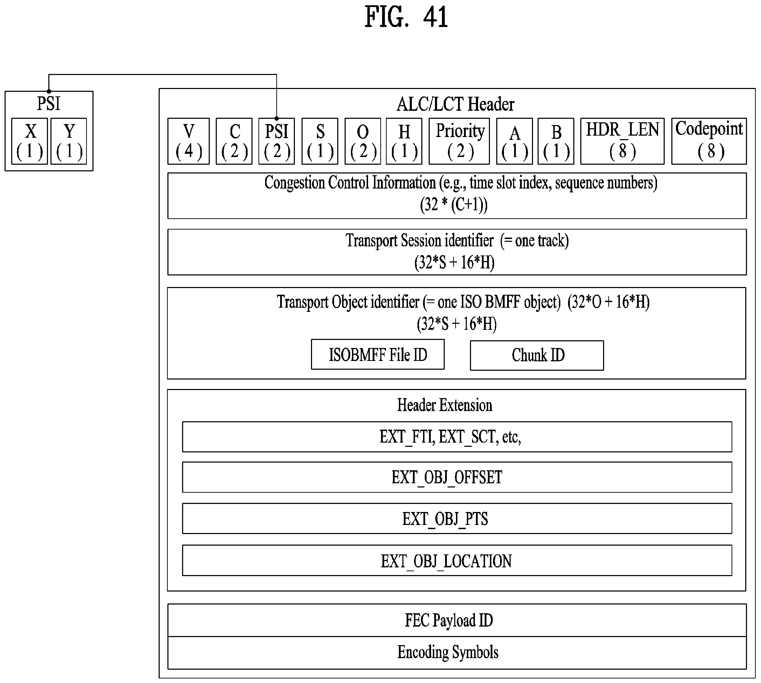

FIG. 41 is a diagram illustrating a structure of an application layer transmission protocol packet according to an embodiment of the present invention.

The application layer transmission protocol packet may include a v element, a c element, a PSI element, an S element, an O element, an H element, a Priority element, an A element, a B element, an HDR_LEN element, a Codepoint element, a Congestion Control Information element, a Transport Session Identifier (TSI) element, a Transport Object Identifier (TOI) element, an EXT_FTI element, an EXT_SCT element, an EXT_OBJ_OFFSET element, an EXT_OBJ_PTS element, an EXT_OBJ_LOCATION element, an FEC payload ID element, and/or an Encoding Symbol element.

The PSI element may include an X element and/or a Y element.

The v element may indicate a version number of a packet. The v element may indicate a version of ALC/LC. The v element may indicate that the current packet is a packet subsequent to the ALC/LCT+.

The c element may correspond to a Congestion control flag. The c element may indicate a length of the Congestion Control Information (CCI) element. For example, when a value of the c element is 0, the c element may indicate that the length of CCI is 32 bits, when a value of the c element is 1, the c element may indicate that the length of CCI is 64 bits, when a value of the c element is 2, the c element may indicate that the length of CCI is 96 bits, and when a value of the c element is 3, the c element may indicate that the length of CCI is 128 bits.

The PSI element may correspond to Protocol-Specific Indication (PSI). The PSI element may be used as an indicator with a specific purpose a higher protocol of ALC/LCT+. The PSI element may indicate whether a current packet corresponds to a source packet or an FEC repair packet.

The X element may correspond to information indicating a source packet. When different FEC payload ID formats are used for Source and repair data, if a value of the X element is '1', the X element may indicate an FEC payload ID format for source data, and if a value of the X element is '0', the X element may indicate an FEC payload ID format for repair data. In addition, when a value of the X element is set to '0' by a transmitter, a receiver may disregard the O element or the packet and may not process the O element or the packet.

The S element may correspond to a Transport Session Identifier flag. The S element may indicate a length of the Transport Session Identifier element.

The O element may correspond to a Transport Object Identifier flag. The O element may indicate a length of the Transport Object Identifier. An object may refer to one file and the TOI may be identification information of each object and a file with TOI of 0 may include signaling information associated with the file.

The H element may correspond to a Half-word flag. The H element may indicate whether a half-word (16 bits) is added to a length of TSI and TOI fields.

The Priority element may indicate priority of data included in the packet. With regard to the Priority element, a description of each object, chunk, or priority between boxes included in each is substituted with the above description.

The A element may correspond to a Close Session flag. The A element may indicate that a session is terminated or session termination is imminent.

The B element may correspond to a Close Object flag. The B element may indicate that a transmitted object is terminated or termination of the object is imminent.

The HDR_LEN element may indicate a length of a header of a packet.

The Codepoint element may indicate a type of a payload transmitted by the packet. According to a payload type, an additional payload header may be inserted into a prefix of payload data.

The Congestion Control Information (CCI) element may include Congestion Control information such as layer numbers, logical channel numbers, and sequence numbers. The Congestion Control Information (CCI) element may include required Congestion Control related information.

The Transport Session Identifier (TSI) element may be a unique identifier of a session. The TSI element may indicate any one of sessions from a specific sender. The TSI element may identify a transport session. A value of the TSI element may be used for one track.

The Transport Object Identifier (TOI) element may be a unique identifier of an object. The TOI element may indicate an object to which the packet belongs in a session. A value of the TOI element may be used for one ISO BMFF object dattum. The TOI element may include an ID of an ISO BMFF file and an ID of chunk. The TOI element may have a combination of the ID of the ISO BMFF file and the ID of the chunk as a value of the TOI element.

The EXT_FTI element may include information on FEC Transport Information.

The EXT_SCT element may correspond to extension information of Sender Current Time. The EXT_SCT element may include time information at a transmitter side.

The EXT_OBJ_OFFSET element may indicate offset of an object. The EXT_OBJ_OFFSET element may indicate offset at a location of a segment, in which an object (e.g., ISO BMFF object data or chunk) included in the packet is positioned, from a start portion of the segment (e.g., ISO BMFF file or file). A detailed description of the EXT_OBJ_OFFSET element is substituted with the above description of each device. Information indicating offset may be included in the payload of an application layer transmission protocol packet.

The EXT_OBJ_PTS element may indicate the presentation timestamp (PTS) of an object.

The EXT_OBJ_LOCATION element may identify a location of an object. The EXT_OBJ_LOCATION element may identify a location of an object, including a URL or the like of an object included in a payload of the packet. The location may be indicated by a URL or the like.

The FEC payload ID element may be an identifier of an FEC Payload identifier. The FEC payload ID element may include identification information of a Transmission Block or an encoding symbol. The FEC Payload ID may be an identifier when the file is FEC-encoded. For example, when the FLUTE protocol file is FEC encoded, the FEC Payload ID may be allocated in order for a broadcaster or a broadcast server to differentiate the FEC Payload ID.

The Encoding Symbols element may include data of a Transmission Block or an encoding symbol.

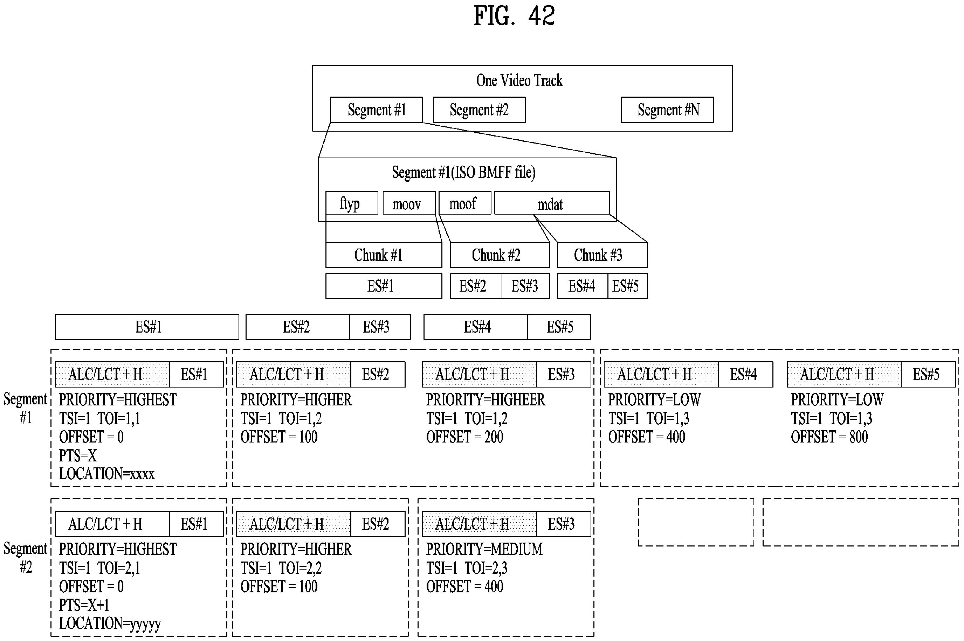

FIG. 42 is a diagram illustrating processing of an application layer transmission protocol packet according to an embodiment of the present invention.

According to an embodiment of the present invention, a value of one TSI may be allocated for one track and a value of one TOI may include a value for identification of an ID of an ISO BMFF file and an ID of a chunk.

Referring to the drawing, one video track may include N segments. Segment #1 may correspond to one ISO BMFF file. A segment may be divided into one or more chunks. Each chunk may be transmitted through one or more ESs. Each ES may be transmitted through a payload of an application layer transmission protocol packet.

An application layer transmission protocol packet for transmitting ES 1 included in Segment #1 may include data corresponding to a start portion of the ISO BMFF file and a moov box. Accordingly, the application layer transmission protocol packet may have a value of the Priority element of 'highest' (most important), the TSI element may have a value indicating a corresponding video track (e.g., 1), and the TOI element may have both a value '1' for identification of Segment #1 in a corresponding ding video track and a value '1' indicating data included in first chunk in the corresponding segment. In addition, since data of a start portion of the segment is transmitted, an offset element of the application layer transmission protocol packet may correspond to 0.

The application layer transmission protocol packet for transmitting ES #2 included in Segment #1 may include a portion of Chunk #2 including some of a moof box and an mdat box. Accordingly, the application layer transmission protocol packet may have a value of a Priority element of 'higher' (more important), the TSI element may have a value (e.g., 1) indicating a corresponding video track, and the TOI element may have both a value '1' for identifying Segment #1 in a corresponding video track and a value '2' indicating data included in second chunk in the corresponding segment. In addition, the offset element may indicate that data transmitted by the application layer transmission protocol packet is data positioned at a point with offset of 100 from a start point of the segment. An application layer transmission protocol packet for transmitting ES #3 included in Segment #1 transmits data included in Chunk #2 and, thus, the priority element, the TSI element, and the TOI element may have the same value as an application layer transmission protocol packet for transmitting ES #2. However, an application layer transmission protocol packet for transmitting ES #3 may have a different offset element value from an offset element value of the application layer transmission protocol packet for transmitting ES #2.

An application layer transmission protocol packet for transmitting ES #4 included in Segment #1 may include a portion of Chunk #3 including a portion of an mdat box. Accordingly, the application layer transmission protocol packet may have a value of a Priority element of 'low' (low), the TSI element may have a value (e.g., 1) indicating a corresponding video track, and the TOI element may have both of a value '1' for identification of Segment #1 in a corresponding video track and a value '3' indicating data included in a third chunk in the corresponding segment. The offset element may indicate that data transmitted by the application layer transmission protocol packet is data positioned at a point with an offset of 400 from a start portion of the segment. An application layer transmission protocol packet for transmitting ES #5 included in Segment #1 transmits data included in Chunk #3 and, thus, the priority element, the TSI element, and the TOI element may have the same value as an application layer transmission protocol packet for transmitting ES #4. However, the application layer transmission protocol packet for transmitting ES #5 may have a different offset element value from an offset element value of the application layer transmission protocol packet for transmitting ES #4.

The application layer transmission protocol packet for transmitting ES #1 included in Segment #2 may include data corresponding to a start portion of the ISO BMFF file and include a moov box. Accordingly, the application layer transmission protocol packet may have a value of a Priority element of 'highest' (most important), the TSI element may have a value (e.g., 1) indicating a corresponding video track, and the TOI element may have both a value '2' for identification of Segment #2 of the corresponding video track and a value '1' indicating data included in a first chunk in the corresponding segment. In addition, since data of a start portion of the segment is transmitted, an offset element of the application layer transmission protocol packet may correspond to 0.

The application layer transmission protocol packet for transmitting ES #2 included in Segment #2 may include a portion of Chunk #2 including some of a moof box and an mdat box. Accordingly, the application layer transmission protocol packet may have a value of a Priority element of 'higher' (more important), the TSI element may have a value (e.g., 1) indicating a corresponding video track, and the TOI element may have both a value '2' for identifying Segment #2 in a corresponding video track and a value '2' indicating data included in a second chunk in the corresponding segment. In addition, the offset element may indicate that data transmitted by the application layer transmission protocol packet is data positioned at a point with an offset of 100 from a start portion of the segment.

The application layer transmission protocol packet for transmitting ES #3 included in Segment #2 may include a portion of Chunk #3 including a portion of the mdat box. Data of the corresponding mdat box may include more important data than data of another mdat box. Accordingly, the application layer transmission protocol packet may have a value of a Priority element of 'medium' (regular), the TSI element may have a value (e.g., 1) indicating a corresponding video track, and the TOI element may have a value of '2' for identification of Segment #2 in a corresponding video track and a value of '3' indicating data included in a third chunk in the corresponding segment. In addition, the offset element may indicate that data transmitted by the application layer transmission protocol packet is the data positioned at a point with offset of 400 from a start point of a segment.

The application layer transmission protocol packets included in Segment #1 and Segment #2 may include PTS element values, respectively. In this regard, when the PTS element value of the application layer transmission protocol packet included in Segment #1 is x, the value PTS element value of the application layer transmission protocol packet included in Segment #2 may be x+1.

When an application layer transmission protocol packet is configured as described above, the receiver may know a segment (or an ISO BMFF file) to which a specific application layer transmission protocol packet belongs and, thus, even if a portion of the application layer transmission protocol packet is lost during a transmission procedure, the received application layer transmission protocol packet may be decoded at an accurate position.

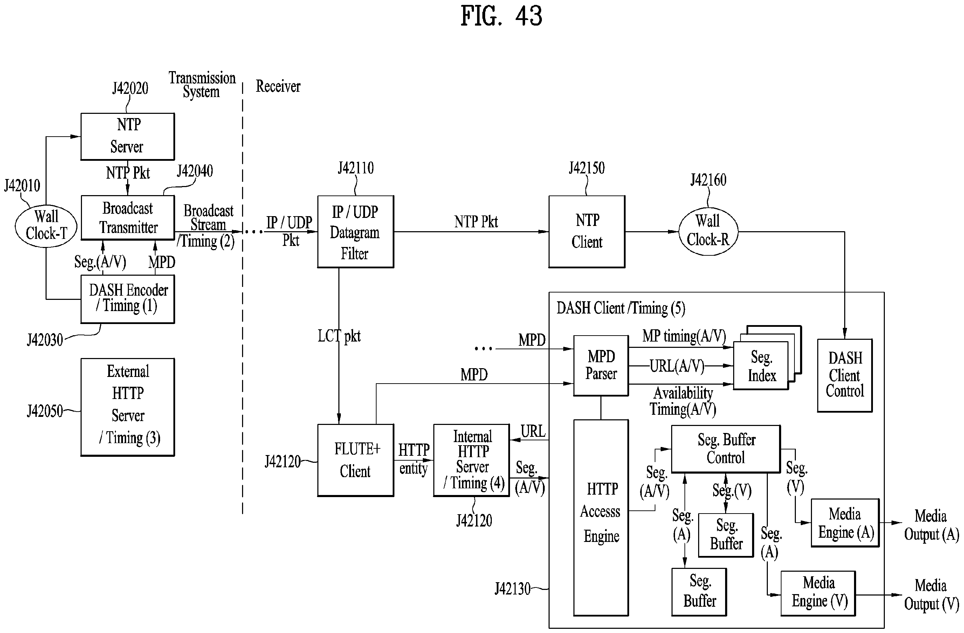

FIG. 43 is a diagram illustrating a broadcast system according to an embodiment of the present invention.

As described above, a broadcast receiver according to an embodiment of the present invention may provide broadcast streaming using MPD of MPEG-DASH. According to an embodiment of the present invention, the broadcast receiver may receive and process broadcast signals and/or broadcast data through a broadband and/or broadcast. Accordingly, the MPD may be used both in a broadband and broadcast. Alternatively, the MPD may be used only in a broadband.

The drawing illustrates an operation of a broadcast system when the MPD is used both in broadcast and a broadband, according to an embodiment of the present invention.

According to an embodiment of the present invention, the broadcast system may include a transmission system and a receiver.

The transmission system (transmitter) may include a wall clock-T J42010, an NTP server J42020, a DASH encoder J42030, a broadcast transmitter J42040, and/or an external HTTP server J42050.

The receiver may include an IP/UDP datagram filter J42110, a FLUTE+ client J42120, a DASH client J42130, an internal HTTP server J42140, an NTP client J42150, and/or a wall clock-R J42160.

The wall clock-T J42010 may process and provide information on reference time of the broadcast transmitter.

The NTP server J42020 may generate network time protocol (NTP) information and generate an NTP packet including the NTP information using the information on the reference time of the broadcast transmitter.

The DASH encoder J42030 may encode a segment including broadcast data according to the information on the reference time of the broadcast transmitter. The DASH encoder J42030 may encode MPD including data and/or description information of media (broadcast services, broadcast content, and/or broadcast events) according to the information on the reference time of the broadcast transmitter.

The broadcast transmitter J42040 may transmit a broadcast stream including the NTP packet, the segment, and/or the MPD.

The external HTTP server J42050 may process a response to a request for MPD or process a response to a request for data on media such as a segment. The external HTTP server J42050 may be positioned inside or outside the broadcast transmitter.

The IP/UDP datagram filter J42110 may filter an IP/UDP datagram or an IP packet separated from a broadcast signal. The IP/UDP datagram filter J42110 may filter an NTP packet and a packet (an application layer transmission protocol packet or an LCT packet) including media.

The FLUTE+ client J42120 may extract MPD from a received packet. The FLUTE+ client J42120 may extract an HTTP entity including information on media.

The DASH client J42130 may include an MPD parser, an HTTP access engine, a Seg. buffer control, a Seg. buffer, a Seg. Index, a DASH client control, and/or a media engine. The DASH client J42130 may process the MPD, may make a request for a segment according to the MPD or receive and process the segment. The MPD parser may parse the MPD. The HTTP access engine may communicate with a server through a HTTP and request or receive required data. The Seg. buffer control may control a segment buffer. The Seg. Buffer may buffer a segment. The Seg. Index may manage and process an index of a segment so as to sequentially process the segment. Information on an index of the segment may be included in the MPD. The Seg. Index may acquire information on timing of a segment and process the information so as to decode the segment according to timing. The DASH client control may control a DASH client. The DASH client control may control the DASH client to operate according to the reference time of the broadcast system. The media engine may decode a segment and generate media.

The internal HTTP server J42140 may receive a request for a specific segment of the DASH client and transmit the corresponding segment to the DASH client in response to the request. The DASH client may transmit URL information of the corresponding segment to the HTTP server. The internal HTTP server J42140 may be positioned inside or outside the receiver.

The NTP client J42150 may receive and parse the NTP packet.

The wall clock-R J42160 may maintain synchronization between reference time of the receiver and reference time of the network system using the NTP information.

According to an embodiment of the present invention, segments may be input as a broadcast stream immediately upon being encoded by a broadcast transmitter. Predetermined delay may occur during a transmission procedure to a receiver from a transmitter. Predetermined delay may occur between the receiver and one clock. The segment may be transmitted to the DASH client in the internal HTTP server.

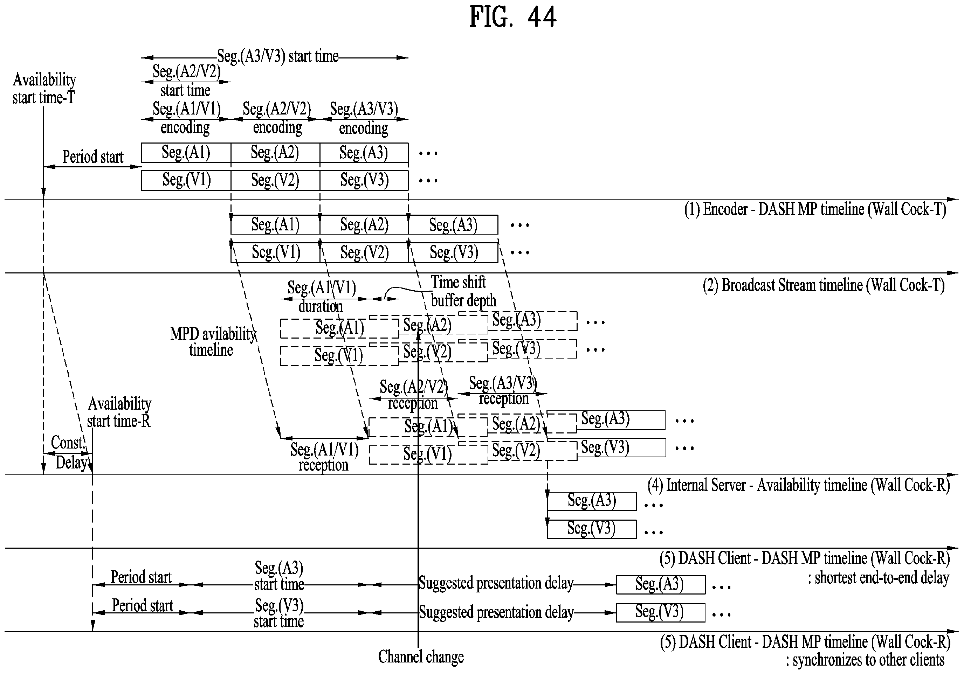

FIG. 44 is a diagram illustrating timing of processing of a segment in a broadcast system according to an embodiment of the present invention.

The drawing illustrates timelines in Timing (1), Timing (2), Timing (4), and Timing (5) displayed in each device in FIG. 43.

A segment A1 may transmit data of audio 1.

A segment V1 may transmit data of video 1.

A segment A2 may transmit data of audio 2.

A segment V2 may transmit data of video 2.

A segment A3 may transmit data of audio 3.

A segment V3 may transmit data of video 3.

A timeline 1 may be a timeline in an encoder of a transmitter.

A timeline 2 may be a timeline in a broadcast stream.

A timeline 4 may be a timeline in an internal server of the receiver.

A timeline 5 may be a timeline in a DASH client of the receiver.

In the timeline 1, the segment A1 and the segment V1 may be encoded during the same time period. When encoding of the segment A1 and the segment V1 is terminated, the segment A2 and the segment V2 may be encoded during the same time period. When encoding of the segment A2 and the segment V2 is terminated, the segment A3 and the segment V3 may be encoded during the same time period.

In the timeline 2, when encoding of each segment is terminated, the transmitter may transmit the corresponding segment.

The drawing illustrates an availability timeline indicating available time of a segment described by MPD in the timeline 4. Actual duration time of a segment and time of each segment according to a time shift buffer depth may be combined to be set to a length of the corresponding segment.

In the timeline 4, time in which each segment is actually received may have constant delay based on transmission time.

With reference to the timeline 5, at a time point at which channel change occurs, the segment A3 and the segment V3 may be available and suggested presentation delay for presentation of the segment A3 and the segment V3 may be set in consideration of synchronization time between the above segments and the processing result of another client. The receiver may add time periods indicated by period start information, start time information of each of the segment A3 and the segment V3, and suggested presentation delay information to determine time for presentation of the segment A3 and the segment V3 after a period is started.

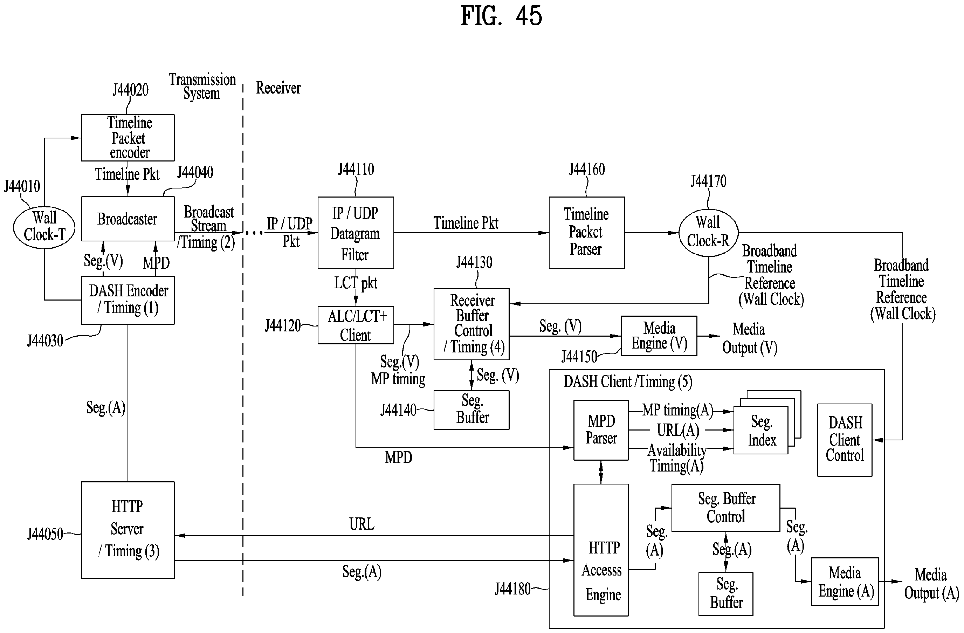

FIG. 45 is a diagram illustrating an operation of a broadcast system when MPD is used both in a broadband and broadcast according to an embodiment of the present invention.

According to an embodiment of the present invention, the broadcast system may include a transmission system and a receiver.

The transmission system (transmitter) may include a wall clock-T J44010, a timeline packet encoder J44020, a DASH encoder J44030, a broadcaster J44040, and/or an external HTTP server J44050.

The receiver may include an IP/UDP datagram filter J44110, an ALC/LCT+ client J44120, a receiver buffer control J44130, a Seg. buffer J44140, a media engine J44150, a timeline packet parser J44160, a wall clock-R J44170, and/or a DASH client J44180.

The wall clock-T J44010 may process and provide information on reference time of the broadcast transmitter.

The timeline packet encoder J44020 may generate a timeline packet including information on synchronization of media or synchronization of reference time between the broadcast system and the broadcast receiver.

The DASH encoder J44030 may encode a segment including broadcast data according to information on the reference time of the broadcast transmitter. The DASH encoder J44030 may encode MPD including data and/or description information on media (broadcast service, broadcast content, and/or broadcast events) according to the information on reference time of the broadcast transmitter.

The broadcaster J44040 may transmit a broadcast stream including a timeline packet, a segment, and/or MPD.

The external HTTP server J44050 may process a response to a request for MPD or process a response to a request for data on media such as a segment. The external HTTP server J44050 may be positioned inside or outside the broadcast transmitter. The external HTTP server J44050 may receive a request for a specific segment (e.g., Seg.(A)) from the DASH client. The request may include location information (e.g., URL information) of a specific segment. The external HTTP server J44050 may receive the corresponding segment from the DASH encoder and transmit the segment to the DASH client.

The IP/UDP datagram filter J44110 may filter an IP packet or IP/UDP datagram separated from a broadcast signal. The IP/UDP datagram filter J44110 may filter a timeline packet and a packet (an application layer transmission protocol packet or an LCT packet) including data on media.

The ALC/LCT+ client J44120 may extract MPD from the received packet. The ALC/LCT+ client J44120 may extract a segment (e.g., Seg.(V)) including the data on media.

The receiver buffer control J44130 may control an operation of a segment buffer in the receiver. The receiver buffer control J44130 may receive a segment transmitted to an application layer transmission protocol packet. When buffering is required, the receiver buffer control J44130 may transmit a corresponding segment to the segment buffer.

The receiver buffer control J44130 may receive broadband timeline reference (wall clock) and receiver timing information on a segment. The receiver buffer control J44130 may transmit a segment to a media engine and so on according to wall clock and timing of the segment and perform control to consume the corresponding segment.

The Seg. buffer J44140 may buffer the segment.

The media engine J44150 may decode the segment and present media corresponding to the segment.

The timeline packet parser J44160 may parse the timeline packet.

The wall clock-R J44170 may perform processing to maintain synchronization between reference time of the receiver and reference time of the system using information in the timeline packet.

The DASH client J44180 may include an MPD parser, an HTTP access engine, a Seg. buffer control, a Seg. buffer, a Seg. Index, a DASH client control, and/or a media engine. The DASH client J44180 may process the MPD and a segment according to the MPD or receive and process the segment. The MPD parser may parse the MPD. The MPD parser may extract timing information (e.g., PTS) in an existing broadcast system about a segment (A), URL information of the segment, and/or available timing information of the segment from the MPD. The HTTP access engine may communicate a server through HTTP and request or receive required data. The Seg. buffer control may control the Seg. buffer. The Seg. Buffer may buffer the segment. The Seg. Index may manage and process an index of the segment so as to sequentially process segments. Information on the index of the segment may be included in the MPD. The Seg. Index may acquire information on timing of the segment and perform processing to decode the segment according to timing. The DASH client control may control the DASH client. The DASH client control may control the DASH client to operate according to the reference time of the broadcast system. The media engine may decode the segment to generate media.

According to the present invention, a segment Seg.(V) for transmitting video data and a segment Seg.(A) for transmitting audio data may be transmitted using different transmission methods and processed via different processing procedures to configure a portion of one media.

According to an embodiment of the present invention, segments may be input in a broadcast stream immediately upon being encoded by the broadcast transmitter. The segments may be used by an external server immediately upon being encoded by the broadcast transmitter. During a transmission procedure to the receiver from the transmitter, constant delay may occur. Constant delay between wall clock (reference time) between the transmitter and the receiver may occur. The segment may be immediately transmitted to the DASH client from the internal server.

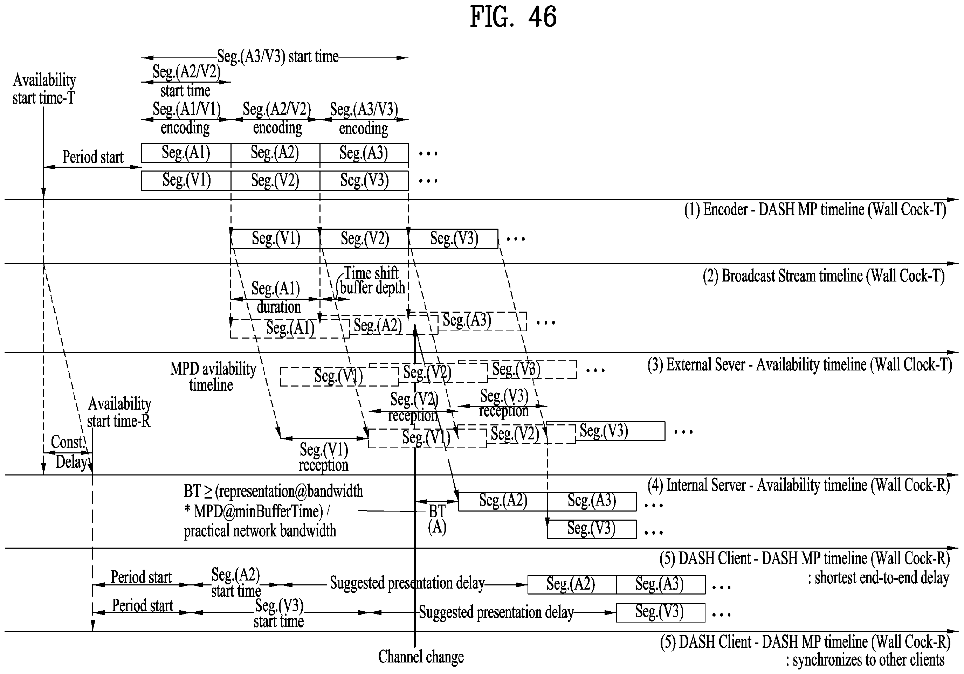

FIG. 46 is a timing diagram of processing of a segment in a broadcast system according to another embodiment of the present invention.

The drawing illustrates respective timelines at Timing (1), Timing (2), Timing (3), Timing (4), and Timing (5) indicated by each device of FIG. 45 and timing of a segment in a corresponding timeline.

A segment A1 may transmit data of audio 1.

A segment V1 may transmit data of video 1.

A segment A2 may transmit data of audio 2.

A segment V2 may transmit data of video 2.

A segment A3 may transmit data of audio 3.

A segment V3 may transmit data of video 3.

A timeline 1 may be a timeline in an encoder of a transmitter.

A timeline 2 may be a timeline in a broadcast stream.

A timeline 3 may be a timeline in an external server.

A timeline 4 may be a timeline in an internal server of the receiver.

A timeline 5 may be a timeline in a DASH client of the receiver.

In the timeline 1, the segment A1 and the segment V1 may be encoded during the same time period. When encoding of the segment A1 and the segment V1 is terminated, the segment A2 and the segment V2 may be encoded during the same time period. When encoding of the segment A2 and the segment V2 is terminated, the segment A3 and the segment V3 may be encoded during the same time period.

In the timeline 2, when encoding of each segment is terminated, the transmitter may transmit the corresponding segment. Here, segments including video data may be transmitted through a broadcast network. That is, the segment V1, the segment V2, and the segment V3 may be transmitted through the broadcast network.

In the timeline 3, the segment A1, the segment A2, and the segment A3 for transmitting audio data corresponding to segments for transmitting video data may present available time in an external server.

The drawing illustrates an availability timeline indicating available time of a segment described by MPD in the timeline 4. Actual duration time of a segment and time of each segment according to a time shift buffer depth may be combined to be set to a length of the corresponding segment.

In the timeline 4, time in which each segment is actually received may have constant delay based on transmission time.

With reference to the timeline 5, at a time point in which channel change occurs, the segment A2, the segment A3, and the segment V3 may be available and suggested presentation delay for presentation of the segment A2, the segment A3, and the segment V3 may be set in consideration of synchronization time between the above segments and the processing result of another client. The receiver may add time periods indicated by period start information, start time information of each of the segment A2, the segment A3, and the segment V3, and suggested presentation delay information to determine time for presentation of the segment A2, the segment A3, and the segment V3 after a period is started. Time for presentation of content may be varied according to receivers but a time difference for presentation of content between receivers may be deleted using the suggested presentation delay.

When the MPD is used both in a broadband and broadcast, the receiver may first receive a segment transmitted over a broadband network before a segment transmitted on a broadcast channel.

An existing DASH availability timeline (for an external server) may not be used for segments transmitted in a broadcast stream (in an internal server). The segment availability time in an internal server may be affected by channel change time. In addition, segment reception time needs to be considered and the receiver may measure the segment availability time in consideration of the segment reception time. In the aforementioned embodiment, when constant delay varies according to receiver, it may be difficult to accurately synchronize the DASH presentation time using the suggested presentation delay information.

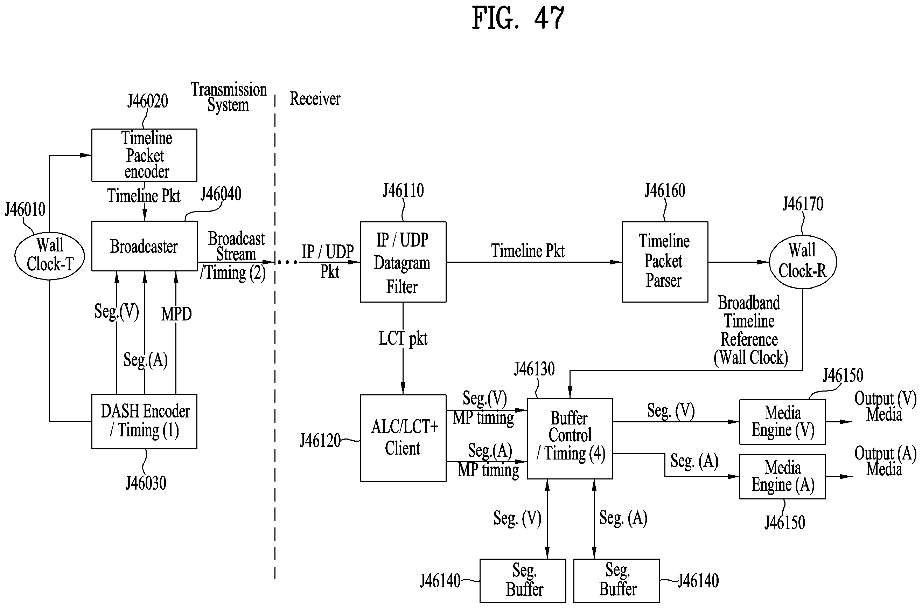

FIG. 47 is a diagram illustrating a broadcast system when MPD is used only in a broadband according to another embodiment of the present invention.

According to an embodiment of the present invention, the broadcast system may include a transmission system and a receiver.

The transmission system (transmitter) may include a wall clock-T J46010, a timeline packet encoder J46020, a DASH encoder J46030, and/or a broadcaster J46040.

The receiver may include an IP/UDP datagram filter J46110, an ALC/LCT+ client J46120, a receiver buffer control J46130, a Seg. buffer J46140, a media engine J46150, a timeline packet parser J46160, and/or a wall clock-R J46170.

The wall clock-T J46010 may process and provide information on reference time of a broadcast transmitter.

The timeline packet encoder J46020 may generate a timeline packet including information on synchronization of media or synchronization of reference time between the broadcast system and the broadcast receiver.

The DASH encoder J46030 may encode a segment including broadcast data according to information on the reference time of the broadcast transmitter. The DASH encoder J46030 may encode MPD including description information and/or data on media (broadcast services, broadcast content, and/or broadcast events) according to information on the reference time of the broadcast transmitter.

The broadcaster J46040 may transmit a broadcast stream including a timeline packet, a segment, and/or MPD.

The IP/UDP datagram filter J46110 may filter an IP packet or IP/UDP datagram separated from the broadcast signal. The IP/UDP datagram filter J46110 may filter a timeline packet and a packet (application layer transmission protocol packet or LCT packet) including data on media.

The ALC/LCT+ client J46120 may extract a segment (e.g., Seg.(V) and Seg.(A)) including data on media. The ALC/LCT+ client J46120 may extract information (e.g., timing information used in MPEG2 TS) for existing timing instead of the MPD. The information for timing may be included in each segment.

The receiver buffer control J46130 may control an operation of a Seg. Buffer in the receiver. The receiver buffer control J46130 may receive a segment transmitted in the application layer transmission protocol packet. When buffering is required, the receiver buffer control J46130 may transmit the corresponding segment to the Seg. Buffer. The receiver buffer control J46130 may receive broadband timeline reference (wall clock) and receive timing information on the segment. The receiver buffer control J46130 may transmit the segment to the media engine and so on according to timing of the segment and wall clock and perform control so as to consume the corresponding segment.

The Seg. buffer J46140 may buffer a segment.

The media engine J46150 may decode the segment and present media corresponding to the segment.

The timeline packet parser J46160 may parse a timeline packet.

The wall clock-R J46170 may perform processing so as to maintain synchronization of reference time between the receiver and the system using information in the timeline packet.

According to an embodiment of the present invention, segments may be input in a broadcast stream immediately upon being encoded by the broadcast transmitter. The wall clock may be transmitted to the receiver from the transmitter in the form of broadcast timeline reference. During a transmission procedure to the receiver from the transmitter, constant delay may occur. Constant delay of wall clock (reference time) between the transmitter and the receiver may occur.

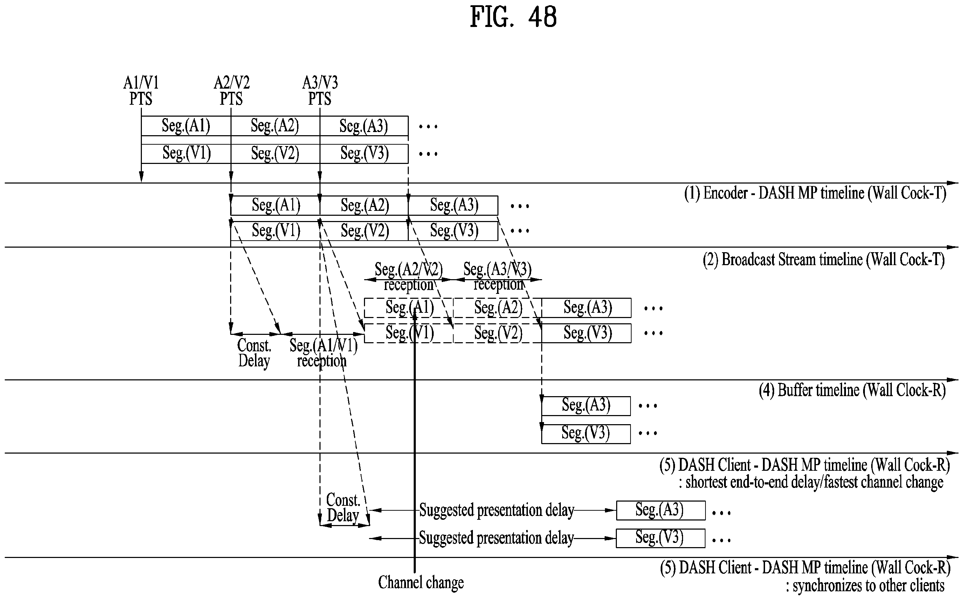

FIG. 48 is a diagram illustrating timing of processing of a segment in a broadcast system according to another embodiment of the present invention.

The drawing illustrates respective timelines at Timing (1), Timing (2), Timing (4), and Timing (5) indicated by each device of FIG. 47 and timing of a segment in a corresponding timeline.

A segment A1 may transmit data of audio 1.

A segment V1 may transmit data of video 1.

A segment A2 may transmit data of audio 2.

A segment V2 may transmit data of video 2.

A segment A3 may transmit data of audio 3.

A segment V3 may transmit data of video 3.

A timeline 1 may be a timeline in an encoder of a transmitter.

A timeline 2 may be a timeline in a broadcast stream.

A timeline 4 may be a timeline applied to a buffer of the receiver.

A timeline 5 may be a timeline in a DASH client of the receiver.

In the timeline 1, the segment A1 and the segment V1 may be encoded during the same time period. When encoding of the segment A1 and the segment V1 is terminated, the segment A2 and the segment V2 may be encoded during the same time period. When encoding of the segment A2 and the segment V2 is terminated, the segment A3 and the segment V3 may be encoded during the same time period. Each segment may include PTS.

In the timeline 2, when encoding of each segment is terminated, the transmitter may transmit the corresponding segment.

With reference to the timeline 4, constant delay and time required for receiving each segment elapse and, then, each segment may be available.

With reference to the timeline 5, at a time point at which channel change occurs, some data of the segment A2 and the segment V2 may not be received. After a time point at which channel change occurs, both the segment A3 and the segment V3 may be received. In consideration of time for synchronization of synchronization time between the above segments and the processing result of another client, suggested presentation delay for presentation of the segment A3 and the segment V3 may be set.

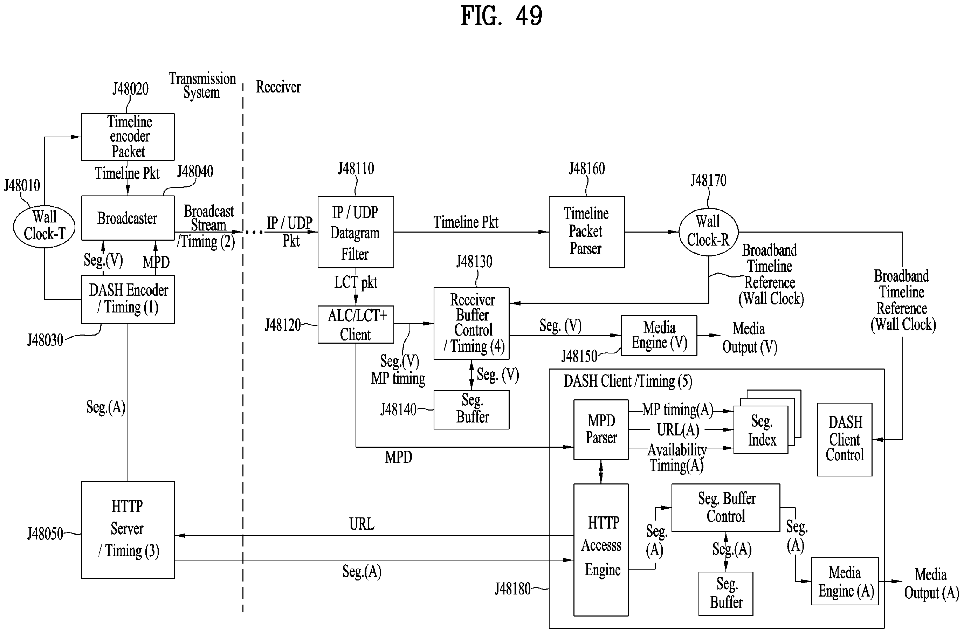

FIG. 49 is a diagram illustrating a broadcast system when MPD is used only in a broadband according to another embodiment of the present invention.

According to an embodiment of the present invention, the broadcast system may include a transmission system and a receiver.

The transmission system (transmitter) may include a wall clock-T J48010, a timeline packet encoder J48020, a DASH encoder J48030, a broadcaster J48040, and/or an HTTP server J48050.

The receiver may include an IP/UDP datagram filter J48110, an ALC/LCT+ client J48120, a receiver buffer control J48130, a Seg. buffer J48140, a media engine J48150, a timeline packet parser J48160, a wall clock-R J48170, and/or a DASH client J48180.

The wall clock-R J48170 may process and provide information on reference time of a broadcast transmitter.

The timeline packet encoder J48020 may generate a timeline packet including information for synchronization of media or synchronization of reference time between the broadcast system and the broadcast receiver.

The DASH encoder J48030 may encode a segment including data according to information on reference time of the broadcast transmitter. The DASH encoder J44030 may encode MPD including data and/or description information on media (broadcast services, broadcast content, and/or broadcast events) according to information on the reference time of the broadcast transmitter.

The broadcaster J48040 may transmit a broadcast stream including a timeline packet, a segment, and/or MPD.

The HTTP server J48050 may process a response to a request for MPD or process a response to a request for data on media such as a segment. The HTTP server J48050 may be positioned inside or outside the broadcast transmitter. The HTTP server J48050 may receive a request for a specific segment (e.g., Seg.(A)) from the DASH client. The request may include location information (e.g., URL information) of a specific segment. The HTTP server J48050 may receive a corresponding segment from the DASH encoder and transmit the segment to the DASH client.

The IP/UDP datagram filter J48110 may filter an IP packet or IP/UDP datagram separated from a broadcast signal. The IP/UDP datagram filter J48110 may filter a timeline packet and a packet (an application layer transmission protocol packet or an LCT packet) including data on media.

The ALC/LCT+ client J48120 may extract MPD from the received packet. The ALC/LCT+ client J48120 may extract a segment (e.g., Seg.(V)) including data on media. The ALC/LCT+ client J48120 may extract information (e.g., timing related information used in transmission of MPEG2-TS) related to timing used in an existing broadcast system. In addition, information related to timing used in an existing broadcast system may be included in the Segment V.

The receiver buffer control J48130 may control an operation of the segment buffer in the receiver. The receiver buffer control J48130 may receive a segment transmitted in the application layer transmission protocol packet. When buffering is required, the receiver buffer control J48130 may transmit a corresponding segment to the segment buffer. The receiver buffer control J48130 may receive broadband timeline reference (wall clock) and receive timing information on the segment. The receiver buffer control J48130 may transmit a segment to a media engine and so on according to timing of the segment and wall clock and perform control so as to consume the corresponding segment.

The Seg. buffer J48140 may buffer the segment.

The media engine J48150 may decode the segment and present media corresponding to the segment.

The timeline packet parser J48160 may parse a timeline packet.

The wall clock-R J48170 may perform processing synchronization of reference time between the receiver and the system using information in the timeline packet.

The DASH client J48180 may include an MPD parser, an HTTP access engine, a Seg. buffer control, a Seg. buffer, a Seg. Index, a DASH client control, and/or a media engine. The DASH client J44180 may process MPD and make a request for a segment according to the MPD or receive and process the segment. The MPD parser may parse the MPD. The MPD parser may extract timing information (e.g., PTS) in an existing broadcast system about the segment A, URL information of the segment, and/or available timing information of the segment from the MPD. The HTTP access engine may communicate with the server and request or receive data through HTTP. The Seg. buffer control may control a segment buffer. The Seg. Buffer may buffer a segment. The Seg. Index may manage and process an index of the segment so as to sequentially process the segment. Information on an index of the segment may be included in the MPD. The Seg. Index may acquire information on timing of the segment and perform processing so as to decode the segment according to timing. The DASH client control may control the DASH client. The DASH client control may control the DASH client to operate according to the reference time of the broadcast system. The media engine may decode the segment to generate media.

According to the present invention, a segment Seg.(V) for transmitting video data and a segment Seg.(A) for transmitting audio data may be transmitted using different transmission methods and processed via different processing procedures to configure a portion of one media.

According to an embodiment of the present invention, segments may be input in a broadcast stream immediately upon being encoded by the broadcast transmitter. The transmitter may transmit the wall clock to the receiver in the form of a broadcast timeline reference. During a transmission procedure from the transmitter to the receiver, constant delay may occur. Constant delay between wall clock (reference time) between the transmitter and the receiver may occur.

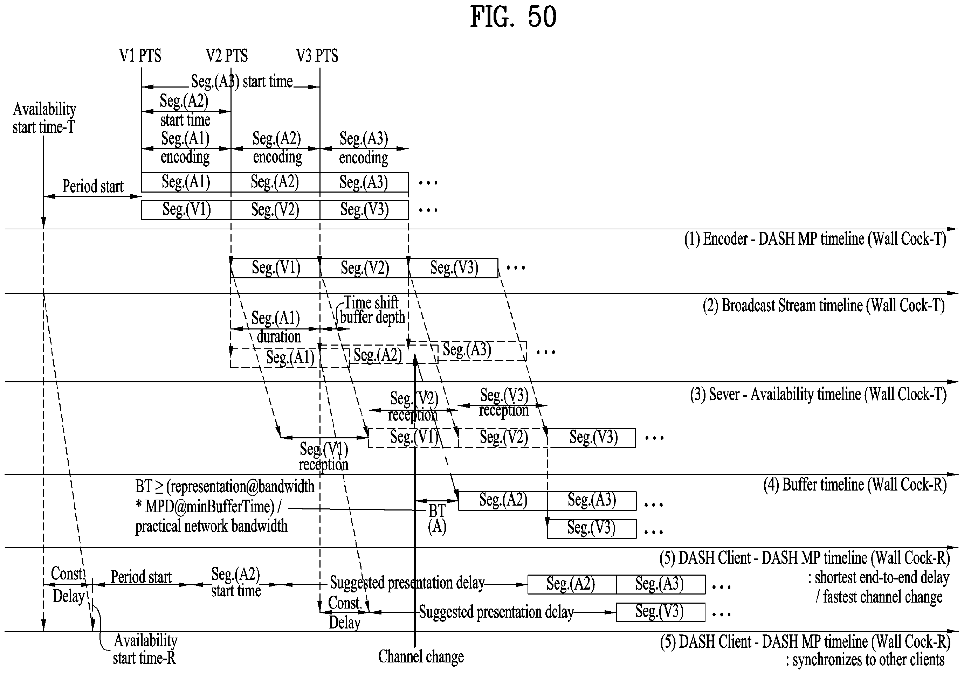

FIG. 50 is a diagram illustrating timing of processing of a segment in a broadcast system according to another embodiment of the present invention.

The drawing illustrates respective timelines at Timing (1), Timing (2), Timing (3), Timing (4), and Timing (5) indicated by each device of FIG. 49 and timing of a segment in a corresponding timeline.

A segment A1 may transmit data of audio 1.

A segment V1 may transmit data of video 1.

A segment A2 may transmit data of audio 2.

A segment V2 may transmit data of video 2.

A segment A3 may transmit data of audio 3.

A segment V3 may transmit data of video 3.

A timeline 1 may be a timeline in an encoder of a transmitter.

A timeline 2 may be a timeline in a broadcast stream.

A timeline 3 may be a timeline in a server.

A timeline 4 may be a timeline in an internal buffer of the receiver.

A timeline 5 may be a timeline in a DASH client of the receiver.

In the timeline 1, the segment A1 and the segment V1 may be encoded during the same time period. When encoding of the segment A1 and the segment V1 is terminated, the segment A2 and the segment V2 may be encoded during the same time period. When encoding of the segment A2 and the segment V2 is terminated, the segment A3 and the segment V3 may be encoded during the same time period. A segment including each video datum may include presentation timestamp (PTS) information.

In the timeline 2, when encoding of each segment is terminated, the transmitter may transmit the corresponding segment. Here, segments including video data may be transmitted through a broadcast network. That is, the segment V1, the segment V2, and the segment V3 may be transmitted through the broadcast network.

In the timeline 3, the segment A1, the segment A2, and the segment A3 for transmitting audio data corresponding to segments for transmitting video data may present available time by an external server. A time shift buffer depth may be added to duration time of segments included in audio data to recognize a period in which the corresponding segment is available.

With reference to the timeline 4, constant delay and time required for receiving each segment elapse and, then, each segment may be available.

With reference to the timeline 5, at a time point at which channel change occurs, the receiver may not receive the segment V1 and may not receive some data included in the segment V2. The receiver may completely receive the segment V3 after the time point at which channel change occurs. The receiver may receive the segment A2 using MPD. Each segment may be available and suggested presentation delay for presentation of the segment A2, the segment A3, and the segment V3 may be set in consideration of synchronization time between the above segments and the processing result of another client. The receiver may add time periods indicated by period start information, start time information of each of the segment A2 and the segment A3, and/or suggested presentation delay information to determine time for presentation of the segment A2 and the segment A3 after a period is started. Time for presentation of content may be varied according to receivers but a time difference for presentation of content between receivers may be deleted using the suggested presentation delay.

When the MPD is used only in a broadband, a wall clock may be required in order to process an availability timeline of content transmitted in a broadband. In this case, 'broadband timeline reference' may be synchronized with a value of the wall clock.

The MPD may include media presentation time clock information in order to signal presentation time of media. In order to use the media presentation time clock information as 'broadcast timeline reference', an additional module or device for conversion between the wall clock and the media presentation time clock information may be required. According to an embodiment of the present invention, 'MPD@suggestedPresentationDelay' information may be transmitted along with PTS or PTS may be set to have a value obtained by considering 'suggested presentation delay'.

For synchronization between media (broadcast services, content, and/or events) transmitted in each of a broadcast network and a broadband network, the DASH media presentation timeline may be used for broadcast and broadband. For example, a broadcast stream and a broadband stream may be aligned with each other using 'MPD@suggestedPresentationDelay'. A client may be permitted to access a segment prior to signaled availability start time using 'SegmentBase@availabilityTimeOffset'. Anchor information of presentation time may be added to MPD. The anchor information may be represented by 'MPD@anchorPresentationTime'. The receiver may measure presentation time of start of a segment from a value of the anchor. For example, the receiver may measure start of a segment according to 'MPD@anchorPresentationTime' + 'Period@start' + 'Segment@presentationTimeOffset/Segment@timescale'.

Delay with different lengths may occur in a broadband network and a broadcast network. In this case, the receiver may request data (segment or content) transmitted in a broadband prior to time at which the corresponding data is actually consumed. Accordingly, when broadcast data transmitted is received, the broadcast data and broadband data may be consumed together. To this end, 'SegmentBase@availabilityTimeOffset' as information for setting constant offset with respect to a segment transmitted in a broadband may be added to MPD.

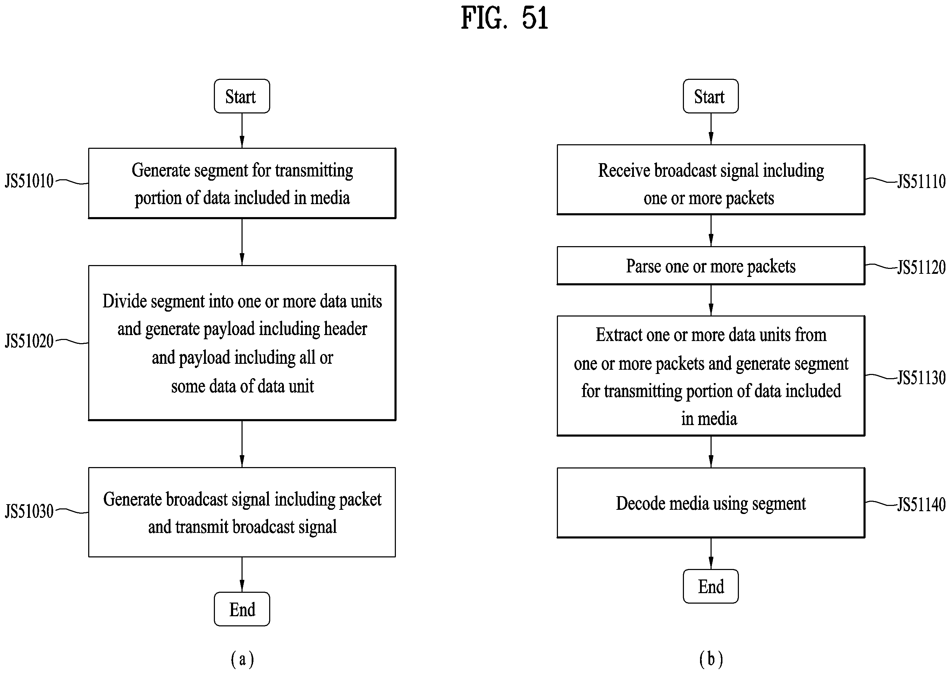

FIG. 51 is a flowchart illustrating a sequence for transmitting and processing a broadcast signal and a sequence for receiving and processing a broadcast signal according to an embodiment of the present invention.

Referring to FIG. 51(a), a transmitter may generate a segment for transmitting a portion of data included in media (JS51010).

The transmitter may divide the segment into one or more data units and generate a packet including a header and a payload including all or some data of the data unit (JS51020).

The transmitter may generate a broadcast signal including the packet and transmit the broadcast signal (JS51030).

During the above procedure, the transmitter may perform processing in such a way that the header includes a transport object identifier (TOI) element and the TOI element includes a segment identification element for identification of the segment included in data for transmission of the payload and a data unit identification element for identification of the data unit.

Referring to FIG. 51(b), the receiver may receive a broadcast signal including one or more packets (JS51110).

The receiver may parse the one or more packets (JS51120). Here, the packet may include a header and a payload including all or some data of the data unit.

The receiver may extract one or more data units from the one or more packets to generate a segment for transmission of some of data included in media (JS51130).

The receiver may decode media using the segment (JS51140).

Here, the header may include a transport object identifier (TOI) and the TOI element may include a segment identification element for identification of the segment including data transmitted in the payload and a data unit identification element for identification of the data unit.

The one or more data processing operations aforementioned in the specification may be added to the aforementioned transmission and/or reception processing procedure of a broadcast signal according to an embodiment of the present invention. Alternatively, some processing procedures may be omitted from the procedures described with reference to the drawings.

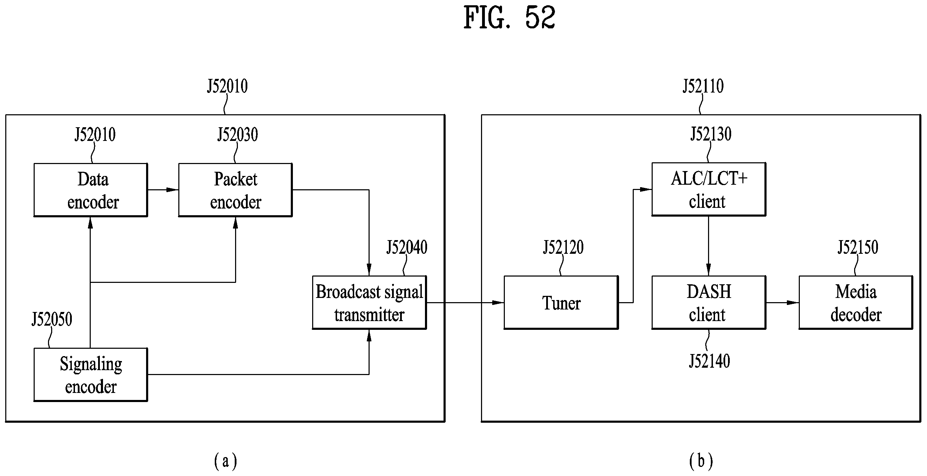

FIG. 52 is a diagram illustrating a transmitter and a receiver according to an embodiment of the present invention.

Referring to FIG. 52(a), a transmitter J52010 may include a data encoder J52020, a packet encoder J52030, a broadcast signal transmitter J52040, and/or a signaling encoder J52050.

The data encoder J52020 may generate a segment for transmitting some of data included in media.

The packet encoder J52030 may divide the segment into one or more data units and generate a packet including a header and a payload including all or some data of the data unit.

The broadcast signal transmitter J52040 may generate a broadcast signal including the packet and transmit the broadcast signal.

Here, the header may include a transport object identifier (TOI) element and the TOI element may include a segment identification element for identification of the segment including data transmitted in the payload and a data unit identification element for identification of the data unit.

The signaling encoder J52050 may generate signaling information. The signaling encoder J52050 may transmit the generated signaling information to one or more devices included in the transmitter.

Any one or more devices among the aforementioned devices described in the specification may be added to the transmitter illustrated in the drawing.

Referring to FIG. 52(b), a receiver J52110 may include a tuner J52120, an ALC/LCT+ client J52130, a DASH client J52140, and/or a media decoder J52150.

The tuner J52120 may receive a broadcast signal including one or more packets.

The ALC/LCT+ client J52130 may parse the one or more packets. Here, the packet may include a header and a payload including all or some data of the data unit.

The DASH client J52140 may extract one or more data units from the one or more packets and generate a segment for transmitting some of the data included in media.

The media decoder J52150 may decode media using the segment.

Here, the header may include a transport object identifier (TOI) element and the TOI element may include a segment identification element for identification of the segment including data transmitted in the payload and a data unit identification element for identification of the data unit.

Any one or more devices among the aforementioned devices described in the specification may be added to the receiver illustrated in the drawing.

A module, a processor, a device, or a unit may be processors for execution of consecutive procedures stored in a memory (or storage unit). Each operation described in the aforementioned embodiments may be performed by hardware/processors. Each module/block/units described in the aforementioned embodiments may be executed as code. The code may be written in a storage medium readable by a processor and, accordingly, readable by a processor provided by an apparatus.

A method invention according to the present invention may be embodied in the form of a program command to be executed through various computer elements and recorded in a computer readable medium.

The computer readable medium may include a program command, a data file, a data configuration, and so on alone or in combination thereof. The program command stored in the medium may be particularly designed and configured for the present invention or may be well known or used by one of the ordinary skill in the art of computer software. Examples of the computer readable medium may include magnetic media such as a hard disk, a floppy disk, and a magnetic tape, optical media such as CD-ROM and DVD, magneto-optical media such as floptical disks, and a hardware device that is particularly configured to store and execute a program command such as a read only memory (ROM), a random access memory (RAM), and a flash memory. Examples of the program command may include a high-level language code to be executed by a computer using an interpreter or the like as well as a machine code generated by a compiler. The hardware device may be configured to operate as one or more software modules in order to perform the operation according to the present invention and vice versa.

It will be apparent to those skilled in the art that various modifications and variations can be made in the present invention without departing from the spirit or scope of the inventions. Thus, it is intended that the present invention cover the modifications and variations of this invention provided they come within the scope of the appended claims and their equivalents.

Accordingly, it will be apparent to those skilled in the art that various modifications and variations can be made in the present invention within the scope of the appended claims and their equivalents.

In addition, throughout this specification, both device and method inventions have been described. As necessary, the description of the device and method inventions may be applied supplementarily.

[Mode for Invention]

Various embodiments have been described in the best mode for carrying out the invention.

[Industrial Applicability]

The present invention may be used in all fields related to broadcasting.

**Claims**

**1.** A transmitting apparatus comprising:

a data encoder configured to generate a segment for transmitting a portion of data included in media;
a packet encoder configured to divide the segment into one or more data units and to generate a packet comprising a header and a payload including all or some data of the data unit; and
a broadcast signal transmitter configured to generate a broadcast signal comprising the packet and to transmit the broadcast signal,
wherein the header comprises a transport object identifier (TOI) element and the TOI element comprises a segment identification element for identifying the segment including data transmitted in the payload and a data unit identification element for identifying the data unit.

2.  The transmitting apparatus according to claim 1, wherein:

the data encoder corresponds to a dynamic adaptive streaming over hypertext transfer protocol (HTTP) (DASH) encoder and generates media presentation description (MPD); and
the transmitting apparatus further comprises one or more of:

a network time protocol (NTP) server configured to generate NTP information using information on reference time of a broadcast transmitter and to generate an NTP packet comprising the NTP information;
a timeline packet configured to generate a timeline packet comprising information on synchronization of media or synchronization of reference time between a broadcast system and a broadcast receiver;
an HTTP server configured to process a response to a request for MPD or process a response to data about media such as a segment;
a wall clock processor configured to process and provide the information on the reference time of the broadcast transmitter; and
a signaling encoder configured to generate signaling information.

3.  The transmitting apparatus according to claim 1, wherein:

the data unit corresponds to a chunk;
the segment corresponds to an ISO base media file format (ISO BMFF) file; and
the packet corresponds to an ALC/LCT+ packet.

4.  The transmitting apparatus according to claim 1, wherein the header further comprises a priority element indicating priority of data included in the packet.

5.  The transmitting apparatus according to claim 1, wherein the header of the payload further comprises an EXT_OBJ_OFFSET element indicating offset of a time point in which the data unit is transmitted in the segment from a start portion of the segment.

6.  The transmitting apparatus according to claim 1, wherein the header further comprises a transport session identifier (TSI) element and the TSI element identifies a track to which the segment belongs.

7.  The transmitting apparatus according to claim 1, wherein the header further comprises an EXT_OBJ_PTS element indicating presentation timestamp (PTS) of the data unit and an EXT_OBJ_LOCATION element for identifying a location of the data unit.

8.  A receiving apparatus comprising:

a tuner configured to receive a broadcast signal comprising one or more packets;
an ALC/LCT+ client configured to parse the one or more packet, the packet comprising a header and a payload including all or some data of the data unit;
a dynamic adaptive streaming over hypertext transfer protocol (HTTP) (DASH) client configured to extract one or more data units from the one or more packets and to transmit a portion of data included in media; and
a media encoder configured to decode media using the segment,
wherein the header comprises a transport object identifier (TOI) element and the TOI element comprises a segment identification element for identifying the segment including data transmitted in the payload and a data unit identification element for identifying the data unit.

9.  The receiving apparatus according to claim 8, further comprising an HTTP access client configured to process a request of the DASH client, to transmit the request to an HTTP server, to receive a response to the request from the HTTP server, and to transmit the response to the DASH client,
wherein the DASH client synchronizes a segment included in the response with the generated segment.

10. The receiving apparatus according to claim 8, wherein:

the data unit corresponds to a chunk;
the segment corresponds to an ISO base media file format (ISO BMFF) file; and
the packet corresponds to an ALC/LCT+ packet.

11. The receiving apparatus according to claim 8, wherein the header further comprises a priority element indicating priority of data included in the packet.

12. The receiving apparatus according to claim 8, wherein the header of the payload further comprises an EXT_OBJ_OFFSET element indicating offset of a time point in which the data unit is transmitted in the segment from a start portion of the segment.

13. The receiving apparatus according to claim 8, wherein the header further comprises a transport session identifier (TSI) element and the TSI element identifies a track to which the segment belongs.

14. The receiving apparatus according to claim 8, wherein the header further comprises an EXT_OBJ_PTS element indicating presentation timestamp (PTS) of the data unit and an EXT_OBJ_LOCATION element for identifying a location of the data unit.

FIG. 1

EP 3 131 253 A1

# FIG. 2

EP 3 131 253 A1

## FIG. 3

# FIG. 4

# FIG. 5

Input Formatting → Scrambled PLS1/2 EAS FIC Section → PLS FEC Encoder (LDPC/BCH) [6000] → Bit Interleaver [6010] → Constellation Mapper [6020] → Frame Building

Scrambler → BCH encoding Zero Insertion → LDPC encoding → LDPC parity Puncturing → Bit Interleaving → Constellation mapping

# FIG. 6

BICM

DP 0

DP n

PLS1

PLS1

7000
Delay
Compensation

7010
Cell Mapper

Assembly of
PLS cells

Assembly of
EAS cells

Assembly of
Base DP
cells

Assembly of
FIC cells

Assembly of
Normal
DP cells

EAS, FIC, Section

7020
Frequency
Interleaver

OFDM
Generation

----- MIMO path

EP 3 131 253 A1

## FIG. 7

Frame Structure

| 8000 | 8010 | 8020 | 8030 | 8040 | 8050 | 8060 | 8070 |
|------|------|------|------|------|------|------|------|
| Pilot and Reserved Tone Insertion | 2D-eSFN Encoding | IFFT | PAPR Reduction | Guard Interval Insertion | Preamble Insertion | Other system insertion | DAC |

→ Tx ant. 1

| Pilot and Reserved Tone Insertion | 2D-eSFN Encoding | IFFT | PAPR Reduction | Guard Interval Insertion | Preamble Insertion | Other system insertion | DAC |

→ Tx ant. 2 (Advanced profile)

# FIG. 8

Rx ant. 1
Signal

Rx 1
path

Data
Pipe 0

9000

9010

9020

9030

Rx Signal
input

Synchronization
& Demodulation

Frame
Parsing

Demapping
& Decoding
(Bit-
deinterleaving)

Output
Processor

Ts, IP or
GS output
streams

Rx ant. m
Signal

9040

Rx m
path

Data
Pipe n

Signaling
Decoding

Physical Layer Signaling (PLS)

# FIG. 9

EP 3 131 253 A1

(a)

$T_{SF}$

| Super-frame |
|---|

1 Super-frame = 8 FRUs

(b)

| FRU #0 | FRU #1 | FRU #2 | FRU #3 | FRU #4 | FRU #5 | FRU #6 | FRU #7 |
|---|---|---|---|---|---|---|---|

1 FRU = 1 ~ 4 Frames

(c)

| Base profile | Handheld profile | FEF |
|---|---|---|

(d)

| Preamble | FSS #0 | FSS #1 | FSS #2 | FSS #3 | Normal data symbol #0 |

• • •

| Normal data symbol #$N_{Normal}$ -1 | FSS |

1 ~ 4 FSSs

$N_{Normal}$: number of normal data symbols

# FIG. 10

| frame (n-1) | frame (n) | frame (n+1) |
|---|---|---|

11010    11020

| Preamble | PLS1 | PLS2 | DP(n) |
|---|---|---|---|

11000

| signaling PLS1 | PLS2 static signaling | PLS2 dynamic signaling |
|---|---|---|

# FIG. 11

| Content | Bits |
|---|---|
| PHY_PROFILE | 3 |
| FFT_SIZE | 2 |
| GI_FRACTION | 3 |
| EAC_FLAG | 1 |
| PILOT_MODE | 1 |
| PAPR_FLAG | 1 |
| FRU_CONFIGURE | 3 |
| RESERVED | 7 |

# FIG. 12

| Content | Bits |
|---|---|
| PREAMBLE_DATA | 20 |
| NUM_FRAME_FRU | 2 |
| PAYLOAD_TYPE | 3 |
| NUM_FSS | 2 |
| SYSTEM_VERSION | 8 |
| CELL_ID | 16 |
| NETWORK_ID | 16 |
| SYSTEM_ID | 16 |
| for i = 0:3 | |
|     FRU_PHY_PROFILE | 3 |
|     FRU_FRAME_LENGTH | 2 |
|     FRU_GI_FRACTION | 3 |
|     RESERVED | 4 |
| end | |
| PLS2_FEC_TYPE | 2 |
| PLS2_MOD | 3 |
| PLS2_SIZE_CELL | 15 |
| PLS2_STAT_SIZE_BIT | 14 |
| PLS2_SYN_SIZE_BIT | 14 |
| PLS2_REP_FLAG | 1 |
| PLS2_REP_SIZE_CELL | 15 |
| PLS2_NEXT_FEC_TYPE | 2 |
| PLS2_NEXT_MODE | 3 |
| PLS2_NEXT_REP_FLAG | 1 |
| PLS2_NEXT_REP_SIZE_CELL | 15 |
| PLS2_NEXT_REP_STAT_SIZE_BIT | 14 |
| PLS2_NEXT_REP_DYN_SIZE_BIT | 14 |
| PLS2_AP_MODE | 2 |
| PLS2_AP_SIZE_CELL | 15 |
| PLS2_NEXT_AP_MODE | 2 |
| PLS2_NEXT_AP_SIZE_CELL | 15 |
| RESERVED | 32 |
| CRC 32 | 32 |

# FIG. 13

| Content | Bits |
|---|---|
| FIC_FLAG | 1 |
| AUX_FLAG | 1 |
| NUM_DP | 6 |
| for i = 1: NUM_DP | |
|     DP_ID | 6 |
|     DP_TYPE | 3 |
|     DP_GROUP_ID | 8 |
|     BASE_DP_ID | 6 |
|     DP_FEC_TYPE | 2 |
|     DP_COD | 4 |
|     DP_MOD | 4 |
|     DP_SSD_FLAG | 1 |
|     if PHY_PROFILE = '010' | |
|         DP_MIMO | 3 |
|     end | |
|     DP_TI_TYPE | 1 |
|     DP_TI_LENGTH | 2 |
|     DP_TI_BYPASS | 1 |
|     DP_FRAME_INTERVAL | 2 |
|     DP_FIRST_FRAME_IDX | 5 |
|     DP_NUM_BLOCK_MAX | 10 |
|     DP_PAYLOAD_TYPE | 2 |
|     DP_INBAND_MODE | 2 |
|     DP_PROTOCOL_TYPE | 2 |
|     DP_CRC_MODE | 2 |
| | |
|     if DP_PAYLOAD_TYPE == TS('00') | |
|         DNP_MODE | 2 |
|         ISSY_MODE | 2 |
|         HC_MODE_TS | 2 |
|         if HC_MODE_TS == '01' or '10' | |
|             PID | 13 |
|         end | |
|     if DP_PAYLOAD_TYPE == IP('01') | |
|         HC_MODE_IP | 2 |
|     end | |
|     RESERVED | 8 |
| end | |
| if FIC_FLAG == 1 | |
|     FIC_VERSION | 8 |
|     FIC_LENGTH_BYTE | 13 |
|     RESERVED | 8 |
| end | |
| if AUX_FLAG == 1 | |
|     NUM_AUX | 4 |
|     AUX_CONFIG_RFU | 8 |
|     for - 1 : NUM_AUX | |
|         AUX_STREAM_TYPE | 4 |
|         AUX_PRIVATE_CONF | 28 |
|     end | |
| end | |

# FIG. 14

| Content | | Bit |
|---|---|---|
| FRAME_INDEX | | 5 |
| PLS_CHANGE_COUNTER | | 4 |
| FIC_CHANGE_COUNTER | | 4 |
| RESERVED | | 16 |
| for i = 1: NUM_DP | | |
| | DP_ID | 6 |
| | DP_START | 15 (or13) |
| | DP_NUM_BLOCK | 10 |
| end | RESERVED | 8 |
| EAC_FLAG | | 1 |
| EAS_WAKE_UP_VERSION_NUM | | 8 |
| if EAC_FLAG = 1 | | |
| | EAC_LENGTH_BYTE | 12 |
| else | | |
| | EAC_COUNTER | 12 |
| end | | |
| for i=1:NUM_AUX | | |
| | AUX_PRIVATE_DYN | 48 |
| end | | |
| CRC 32 | | 32 |

# FIG. 15

| Preamble | PLS1 | PLS2 | EAC | FIC | DPs | Auxiliary streams | Dummy |
|---|---|---|---|---|---|---|---|

# FIG. 16

time →

Cell Index p ↓

PLS1

PLS2

PLS2

EAC

FIC

DPs

$N_{FSS}$

# FIG. 17

time →

Cell Index p ↓

PLS2

EAC

EAC

PLS2

FIC

DPs

FSS

Normal data symbols

# FIG. 18

(a)

(b)

# FIG. 19

$$N_{ldpc} \text{ bits}$$

$$N_{bch} \text{bits } (= K_{ldpc} \text{bits })$$

$$K_{bch} \text{bits}$$

| BBFRAME | BCH Parity | LDPC Parity |
|---|---|---|

# FIG. 20

## FIG. 21

(a)

(b)

EP 3 131 253 A1

# FIG. 22

Virtual XFECBLOCKs

$N_{xBLOCK\_TI}(0,0) = 3$

$N_{xBLOCK\_TI}(1,0) = 6$

$N_{xBLOCK\_TI}(2,0) = 5$

FIG. 23

# FIG. 24

|  | 0 | 1 | 2 |
|---|---|---|---|
| 0 | 0 | 0 | 22 |
| 1 | 3 | 11 | 25 |
| 2 | 5 | 14 | 27 |
| 3 | 7 | 16 | 29 |
| 4 | 10 | 18 | 1 |
| 5 | 12 | 21 | 3 |
| 6 | 14 | 23 | 6 |
| 7 | 17 | 25 | 8 |
| 8 | 19 | 28 | 10 |
| 9 | 21 | 2 | 13 |
| 10 | 24 | 4 | 15 |
| 11 | 26 | 6 | 17 |
| 12 | 28 | 9 | 20 |
| 13 | 0 | 11 | 22 |
| 14 | 2 | 13 | 24 |
| 15 | 5 | 16 | 27 |
| 16 | 7 | 18 | 29 |
| 17 | 9 | 20 | 1 |
| 18 | 12 | 23 | 3 |
| 19 | 14 | 25 | 5 |
| 20 | 16 | 27 | 8 |
| 21 | 19 | 1 | 10 |
| 22 | 21 | 4 | 12 |
| 23 | 23 | 6 | 15 |
| 24 | 26 | 8 | 17 |
| 25 | 28 | 11 | 19 |
| 26 | 0 | 13 | 22 |
| 27 | 2 | 15 | 24 |
| 28 | 4 | 18 | 26 |
| 29 | 7 | 20 | 29 |

$N_{xBLOCK\_TI}(0,0) = 3$

|  | 0 | 1 | 2 | 3 | 4 | 5 |
|---|---|---|---|---|---|---|
| 0 | 0 | 5 | 9 | 14 | 20 | 24 |
| 1 | 1 | 6 | 10 | 16 | 21 | 25 |
| 2 | 3 | 7 | 11 | 17 | 22 | 27 |
| 3 | 4 | 8 | 12 | 18 | 23 | 28 |
| 4 | 5 | 9 | 14 | 19 | 25 | 29 |
| 5 | 6 | 10 | 15 | 20 | 26 | 1 |
| 6 | 7 | 12 | 16 | 21 | 27 | 2 |
| 7 | 8 | 13 | 17 | 23 | 28 | 3 |
| 8 | 10 | 14 | 18 | 24 | 29 | 4 |
| 9 | 11 | 15 | 19 | 25 | 0 | 5 |
| 10 | 12 | 16 | 21 | 26 | 1 | 6 |
| 11 | 13 | 17 | 22 | 27 | 2 | 8 |
| 12 | 14 | 19 | 23 | 28 | 3 | 9 |
| 13 | 15 | 20 | 24 | 0 | 4 | 10 |
| 14 | 17 | 21 | 25 | 1 | 6 | 11 |
| 15 | 18 | 22 | 26 | 2 | 7 | 12 |
| 16 | 19 | 23 | 28 | 4 | 8 | 13 |
| 17 | 20 | 24 | 29 | 5 | 9 | 15 |
| 18 | 21 | 26 | 0 | 6 | 10 | 16 |
| 19 | 22 | 27 | 2 | 7 | 11 | 17 |
| 20 | 24 | 28 | 3 | 8 | 13 | 18 |
| 21 | 25 | 29 | 4 | 9 | 14 | 19 |
| 22 | 26 | 0 | 5 | 11 | 15 | 20 |
| 23 | 27 | 1 | 6 | 12 | 16 | 22 |
| 24 | 28 | 2 | 7 | 13 | 17 | 23 |
| 25 | 29 | 3 | 9 | 14 | 18 | 24 |
| 26 | 0 | 4 | 10 | 15 | 20 | 25 |
| 27 | 1 | 5 | 11 | 16 | 21 | 26 |
| 28 | 2 | 7 | 12 | 18 | 22 | 27 |
| 29 | 3 | 8 | 13 | 19 | 23 | 29 |

$N_{xBLOCK\_TI}(1,0) = 6$

|  | 0 | 1 | 2 | 3 | 4 |
|---|---|---|---|---|---|
| 0 | 0 | 10 | 23 | 6 | 17 |
| 1 | 1 | 12 | 24 | 7 | 18 |
| 2 | 3 | 14 | 25 | 8 | 20 |
| 3 | 5 | 15 | 26 | 9 | 22 |
| 4 | 6 | 16 | 28 | 11 | 23 |
| 5 | 7 | 17 | 0 | 13 | 24 |
| 6 | 8 | 19 | 2 | 14 | 25 |
| 7 | 10 | 21 | 4 | 15 | 27 |
| 8 | 12 | 22 | 5 | 16 | 29 |
| 9 | 13 | 23 | 6 | 18 | 1 |
| 10 | 14 | 24 | 7 | 20 | 3 |
| 11 | 15 | 26 | 9 | 21 | 4 |
| 12 | 17 | 28 | 11 | 22 | 5 |
| 13 | 19 | 29 | 12 | 23 | 6 |
| 14 | 20 | 0 | 13 | 25 | 8 |
| 15 | 21 | 2 | 14 | 27 | 10 |
| 16 | 22 | 3 | 16 | 28 | 11 |
| 17 | 24 | 4 | 18 | 29 | 12 |
| 18 | 26 | 5 | 19 | 1 | 13 |
| 19 | 27 | 7 | 20 | 2 | 15 |
| 20 | 28 | 9 | 21 | 3 | 17 |
| 21 | 29 | 10 | 23 | 4 | 18 |
| 22 | 0 | 11 | 25 | 6 | 19 |
| 23 | 1 | 12 | 26 | 8 | 20 |
| 24 | 2 | 14 | 27 | 9 | 22 |
| 25 | 3 | 16 | 28 | 10 | 24 |
| 26 | 5 | 17 | 0 | 11 | 25 |
| 27 | 7 | 18 | 1 | 13 | 26 |
| 28 | 8 | 19 | 2 | 15 | 27 |
| 29 | 9 | 21 | 4 | 16 | 29 |

$N_{xBLOCK\_TI}(2,0) = 5$

# FIG. 25

FIG. 26

# FIG. 27

EP 3 131 253 A1

# FIG. 28

EP 3 131 253 A1

# FIG. 29

EP 3 131 253 A1

# FIG. 30

# FIG. 31

FIG. 32

# FIG. 33

EP 3 131 253 A1

FIG. 34

# FIG. 35

(a)

Protocol
(FLUTE or
ALC / LCT+)          TSI

FLUTE ——————→ | ALC / LCT + | ——————→ Generic File
                    | Client      |
ALC / LCT + ————→ |             | ——————→ ISO BMFF Object

( a )

(b)

Protocol
(FLUTE)        TSI

FLUTE ——————→ | ALC / LCT + | ——————→ Generic File
                  | Client      |
ALC / LCT + ——→ |             | ——————→ ISO BMFF Object

( b )

(c)

Protocol
(ISO BMFF)      TSI

FLUTE ——————→ | ALC / LCT + | ——————→ Generic File
                  | Client      |
ALC / LCT + ——→ |             | ——————→ ISO BMFF Object

( c )

# FIG. 36

ISO BMFF file

| ftyp | moov | moof | mdat |
|------|------|------|------|

Chunk#1     Chunk#2   Chunk#3   Chunk#4

ISO BMFF file

| ftyp | moov | moof | mdat |
|------|------|------|------|

Chunk#1     Chunk#2     Chunk#3

# FIG. 37

One Video Track

Segment #1        Segment #N

Segment #1(ISO BMFF file)

| ftyp | moov | moof | mdat |
|------|------|------|------|

| ES#1 | ES#2 | ES#3 | ES#4 | ES#5 |
|------|------|------|------|------|

Segment #1

| ALC/LCT + H | ES#1 | ALC/LCT + H | ES#2 | ALC/LCT + H | ES#5 |
|-------------|------|-------------|------|-------------|------|

TSI=1 TOI=1      TSI=1 TOI=1      TSI=1 TOI=1

Segment #N

| ALC/LCT + H | ES#M | ALC/LCT + H | ES#M+1 | ALC/LCT + H | ES#M+K |
|-------------|------|-------------|--------|-------------|--------|

TSI=1 TOI=N      TSI=1 TOI=N      TSI=1 TOI=N

# FIG. 38

# FIG. 39

| Segment #1(ISO BMFF file) | | | |
|---|---|---|---|
| ftyp | moov | moof | mdat |

Cannot be processed without moov

Cannot be processed without moof

# FIG. 40

One Video Track

| Segment #1 | Segment #2 |
|---|---|

| Chunk #1 | | Chunk #1 | | Chunk #1 | Chunk #1 | |
|---|---|---|---|---|---|---|
| ES#1 | | ES#3 | | ES#4 | ES#5 | |

Segment #2

ALC/LCT + H    ES#5
TSI=1  TOI=5
Offset =1000

ALC/LCT + H    ES#4
TSI=1  TOI=4
Offset =0

ALC/LCT + H    ES#5
TSI=1  TOI=5
Offset =1000

ALC/LCT + H    ES#4

Segment #1

ALC/LCT + H    ES#3
TSI=1  TOI=3
Offset =1000

ALC/LCT + H    ES#2
TSI=1  TOI=2
Offset =200

ALC/LCT + H    ES#1
TSI=1  TOI=1
Offset =0

ALC/LCT + H    ES#3

ALC/LCT + H    ES#2
TSI=1  TOI=2
Offset =200

ALC/LCT + H    ES#1
TSI=1  TOI=1
Offset =0

Broadcaster side                    Receiver side

EP 3 131 253 A1

# FIG. 41

EP 3 131 253 A1

# FIG. 42

One Video Track

| Segment #1 | Segment #2 | | Segment #N |

Segment #1(ISO BMFF file)

| ftyp | moov | moof | mdat |

| Chunk #1 | Chunk #2 | Chunk #3 |

| ES#1 | ES#2 | ES#3 | ES#4 | ES#5 |

| ES#1 | | ES#2 | ES#3 | | ES#4 | ES#5 |

**Segment #1**

| ALC/LCT + H    ES#1 | ALC/LCT + H    ES#2 | ALC/LCT + H    ES#3 | ALC/LCT + H    ES#4 | ALC/LCT + H    ES#5 |
|---|---|---|---|---|
| PRIORITY=HIGHEST<br>TSI=1  TOI=1,1<br>OFFSET = 0<br>PTS=X<br>LOCATION=xxxx | PRIORITY=HIGHER<br>TSI=1  TOI=1,2<br>OFFSET = 100 | PRIORITY=HIGHEER<br>TSI=1  TOI=1,2<br>OFFSET = 200 | PRIORITY=LOW<br>TSI=1  TOI=1,3<br>OFFSET = 400 | PRIORITY=LOW<br>TSI=1  TOI=1,3<br>OFFSET = 800 |

**Segment #2**

| ALC/LCT + H    ES#1 | ALC/LCT + H    ES#2 | ALC/LCT + H    ES#3 | | |
|---|---|---|---|---|
| PRIORITY=HIGHEST<br>TSI=1  TOI=2,1<br>OFFSET = 0<br>PTS=X+1<br>LOCATION=yyyyy | PRIORITY=HIGHER<br>TSI=1  TOI=2,2<br>OFFSET = 100 | PRIORITY=MEDIUM<br>TSI=1  TOI=2,3<br>OFFSET = 400 | | |

# FIG. 43

# FIG. 44

EP 3 131 253 A1

## FIG. 45

FIG. 46

EP 3 131 253 A1

Seg.(A3/V3) start time

Seg.(A2/V2) start time

Availability start time-T

Seg.(A1/V1) encoding | Seg.(A2/V2) encoding | Seg.(A3/V3) encoding

Period start

Seg.(A1) | Seg.(A2) | Seg.(A3) . . .

Seg.(V1) | Seg.(V2) | Seg.(V3) . . .

(1) Encoder - DASH MP timeline (Wall Cock-T)

Seg.(V1) | Seg.(V2) | Seg.(V3) . . .

(2) Broadcast Stream timeline (Wall Cock-T)

Time shift buffer depth

Seg.(A1) duration

Seg.(A1) | Seg.(A2) | Seg.(A3) . . .

MPD avilability timeline

Seg.(V1) | Seg.(V2) | Seg.(V3) . . .

(3) External Sever - Availability timeline (Wall Clock-T)

Availability start time-R

Seg.(V2) reception | Seg.(V3) reception

Seg.(V1) | Seg.(V2) | Seg.(V3) . . .

Const. Delay

Seg.(V1) reception

(4) Internal Server - Availability timeline (Wall Cock-R)

$BT \geq$ (representation@bandwidth * MPD@minBufferTime) / practical network bandwidth

BT (A)

Seg.(A2) | Seg.(A3) . . .

Seg.(V3) . . .

(5) DASH Client - DASH MP timeline (Wall Cock-R) : shortest end-to-end delay

Period start | Seg.(A2) start time | Suggested presentation delay | Seg.(A2) | Seg.(A3) . . .

Period start | Seg.(V3) start time | Suggested presentation delay | Seg.(V3) . . .

(5) DASH Client - DASH MP timeline (Wall Cock-R) : synchronizes to other clients

Channel change

# FIG. 47

# FIG. 48

A1/V1 PTS  A2/V2 PTS  A3/V3 PTS

| Seg.(A1) | Seg.(A2) | Seg.(A3) | ... |
| Seg.(V1) | Seg.(V2) | Seg.(V3) | ... |

(1) Encoder - DASH MP timeline (Wall Cock-T)

| Seg.(A1) | Seg.(A2) | Seg.(A3) | ... |
| Seg.(V1) | Seg.(V2) | Seg.(V3) | ... |

(2) Broadcast Stream timeline (Wall Cock-T)

Seg.(A2/V2) reception   Seg.(A3/V3) reception

| Seg.(A1) | Seg.(A2) | Seg.(A3) | ... |
| Seg.(V1) | Seg.(V2) | Seg.(V3) | ... |

Const. Delay   Seg.(A1/V1) reception

(4) Buffer timeline (Wall Clock-R)

| Seg.(A3) | ... |
| Seg.(V3) | ... |

(5) DASH Client - DASH MP timeline (Wall Cock-R)
: shortest end-to-end delay/fastest channel change

Const. Delay

Suggested presentation delay → | Seg.(A3) | ...

Suggested presentation delay → | Seg.(V3) | ...

(5) DASH Client - DASH MP timeline (Wall Cock-R)
: synchronizes to other clients

Channel change

EP 3 131 253 A1

# FIG. 49

EP 3 131 253 A1

# FIG. 50

EP 3 131 253 A1

# FIG. 51

**(a)**

Start

JS51010 — Generate segment for transmitting portion of data included in media

JS51020 — Divide segment into one or more data units and generate payload including header and payload including all or some data of data unit

JS51030 — Generate broadcast signal including packet and transmit broadcast signal

End

**(b)**

Start

Receive broadcast signal including one or more packets — JS51110

Parse one or more packets — JS51120

Extract one or more data units from one or more packets and generate segment for transmitting portion of data included in media — JS51130

Decode media using segment — JS51140

End

# FIG. 52

(a)                                        (b)

## INTERNATIONAL SEARCH REPORT

| | International application No. |
|---|---|
| | **PCT/KR2015/003537** |

**A.    CLASSIFICATION OF SUBJECT MATTER**

*H04L 29/06(2006.01)i, H04L 7/00(2006.01)i*

According to International Patent Classification (IPC) or to both national classification and IPC

**B.    FIELDS SEARCHED**

Minimum documentation searched (classification system followed by classification symbols)
H04L 29/06; H04N 5/91; H04N 21/23; H04N 21/43; H04N 21/654; H04N 21/236; H04L 7/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: hybrid broadcasting, MPEG-DASH, segment, FLUTE, synchronization

**C.    DOCUMENTS CONSIDERED TO BE RELEVANT**

| Category* | Citation of document, with indication, where appropriate, of the relevant passages | Relevant to claim No. |
|---|---|---|
| A | WO 2012-011724 A2 (LG ELECTRONICS INC.) 26 January 2012<br>See paragraphs [0049]-[0053], [0096]-[0118]; and figures 2, 8, 15. | 1-14 |
| A | WO 2013-107502 A1 (TELEFONAKTIEBOLAGET L M ERICSSON (PUBL))<br>25 July 2013<br>See page 1, line 30 - page 2, line 28; page 4, line 18 - page 5, line 5; and figure 2. | 1-14 |
| A | US 2013-0291050 A1 (KIM, Sanghyun et al.) 31 October 2013<br>See paragraphs [0416], [0441]-[0444], [0489]-[0499], [0534]; and figures 3, 23-24, 27 | 1-14 |
| A | WO 2013-055164 A1 (SAMSUNG ELECTRONICS CO., LTD. et al.) 18 April 2013<br>See paragraphs [0123]-[0152]; and figures 10, 15, 21. | 1-14 |
| A | WO 2013-025035 A2 (SAMSUNG ELECTRONICS CO., LTD. et al.) 21 February 2013<br>See paragraphs [0078]-[0081], [0209]-[0210]; and figures 3, 35. | 1-14 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 JUNE 2015 (27.06.2015) | **29 JUNE 2015 (29.06.2015)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea | |
| Facsimile No.  82-42-472-7140 | Telephone No. |

Form PCT/ISA/210 (second sheet) (July 2009)

International application No.

**PCT/KR2015/003537**

| Patent document cited in search report | Publication date | Patent family member | Publication date |
|---|---|---|---|
| WO 2012-011724 A2 | 26/01/2012 | CN 103109540 A | 15/05/2013 |
| | | EP 2597870 A2 | 29/05/2013 |
| | | EP 2597870 A4 | 22/01/2014 |
| | | KR 10-1476934 B1 | 30/12/2014 |
| | | KR 10-2013-0050953 A | 16/05/2013 |
| | | KR 10-2014-0008478 A | 21/01/2014 |
| | | KR 10-2014-0093763 A | 28/07/2014 |
| | | US 2013-0125187 A1 | 16/05/2013 |
| | | WO 2012-011724 A3 | 03/05/2012 |
| WO 2013-107502 A1 | 25/07/2013 | CN 104040993 A | 10/09/2014 |
| | | EP 2805463 A1 | 26/11/2014 |
| US 2013-0291050 A1 | 31/10/2013 | CN 103283219 A | 04/09/2013 |
| | | EP 2658247 A1 | 30/10/2013 |
| | | EP 2658247 A4 | 31/12/2014 |
| | | KR 10-1455557 B1 | 04/11/2014 |
| | | KR 10-2013-0087584 A | 06/08/2013 |
| | | KR 10-2014-0094628 A | 30/07/2014 |
| | | US 2014-0304760 A1 | 09/10/2014 |
| | | US 8726328 B2 | 13/05/2014 |
| | | WO 2012-091370 A1 | 05/07/2012 |
| WO 2013-055164 A1 | 18/04/2013 | CN 103875252 A | 18/06/2014 |
| | | EP 2768231 A1 | 20/08/2014 |
| | | JP 2014-534695 A | 18/12/2014 |
| | | KR 10-2013-0040156 A | 23/04/2013 |
| | | US 2014-0237536 A1 | 21/08/2014 |
| WO 2013-025035 A2 | 21/02/2013 | EP 2744214 A2 | 18/06/2014 |
| | | EP 2744214 A4 | 11/03/2015 |
| | | KR 10-2013-0018208 A | 20/02/2013 |
| | | US 2014-0204962 A1 | 24/07/2014 |
| | | WO 2013-025035 A3 | 11/04/2013 |
| | | WO 2013-025035 A9 | 21/02/2013 |